# EUROPEAN PATENT APPLICATION

(11) **EP 4 723 562 A1**
(43) Date of publication of application: **08.04.2026**
(21) Application number: 24848362.0
(22) Date of filing: 01.08.2024
(51) Int. Cl.: H04L 12/28

(54) **MULTI-DEVICE COORDINATION METHOD AND RELATED APPARATUS**

(30) Priority: 03.08.2023 CN 202310979898; 04.08.2023 CN 202310990844
(71) Applicant: Huawei Technologies Co., Ltd., Shenzhen, Guangdong 518129 (CN)
(72) Inventor: DONG, Jiyang, Shenzhen, Guangdong 518129 (CN)
(74) Representative: Pfenning, Meinig & Partner mbB
(86) International application number: PCT/CN2024/109289
(87) International publication number: WO 2025/026408

(57) **Abstract**

This application discloses a multi-device collaboration method and a related apparatus. The method includes: A first terminal detects a first operation, where the first operation is used to share a first electronic device with a second account. The first terminal sends device sharing information to a server in response to the first operation, where the device sharing information includes information about the second account and information about the first electronic device. The server sends the information about the second account to the first electronic device. The server sends the information about the first electronic device to a second terminal. The second terminal establishes a short-range communication connection to the first electronic device based on the information about the second account and the information about the first electronic device. The second terminal detects a second operation, where the second operation is used to trigger a first distributed service of the second terminal. The second terminal displays an icon of one or more trusted devices in response to the second operation, where the one or more trusted devices include the first electronic device. In this way, distributed services can be implemented by collaborating devices of different accounts.

## Description

This application claims priorities to Chinese Patent Application No. 202310979898.0, filed with the China National Intellectual Property Administration on August 3, 2023 and entitled "MULTI-DEVICE COLLABORATION METHOD AND RELATED APPARATUS", and to Chinese Patent Application No. 202310990844.4, filed with the China National Intellectual Property Administration on August 4, 2023 and entitled "MULTI-DEVICE COLLABORATION METHOD AND RELATED APPARATUS", both of which are incorporated herein by reference in their entireties.

### TECHNICAL FIELD

This application relates to the field of electronic technologies, and in particular, to a multi-device collaboration method and a related apparatus.

### BACKGROUND

With continuous development of terminal technologies, users now possess an increasing variety of electronic devices with diverse functionalities. Due to inherent limitations in hardware structures and system performance, different types of devices usually exhibit distinct capability strengths. A plurality of devices of the user achieve device interconnection and collaborative control of distributed services based on performance strengths of the devices, thereby delivering an enhanced use experience. For example, a mobile terminal such as a mobile phone may transfer multimedia content (for example, a picture, audio, and a video) to a smart screen for continued playing. The mobile phone may cast its desktop onto an in-vehicle device, and the user may control the mobile phone through an in-vehicle display. The mobile phone may control a smart home device (for example, a light, a camera, an air conditioner, or a smart screen), and the like.

Devices of a same account usually have a trusted relationship and can perform collaborative control of distributed services. However, for devices of different accounts, the user usually needs to perform manual connection and authentication (for example, enter a PIN code) to establish a communication connection and perform device collaboration of distributed services, which is cumbersome for the user to operate.

Currently, how to quickly implement cross-device distributed services for devices of different accounts needs further research.

### SUMMARY

Embodiments of this application provide a multi-device collaboration method, so that cross-device distributed services can be quickly implemented for devices of different accounts.

According to a first aspect, this application discloses a multi-device collaboration method and a related apparatus, applied to a multi-device collaboration system. The system includes a first terminal, a second terminal, and a server, a first account has logged into the first terminal, a second account has logged into the second terminal, the first account and the second account are different accounts, the system further includes at least one electronic device bound to the first account, and the at least one electronic device includes a first electronic device. The method includes: The first terminal detects a first operation, where the first operation is used to share the first electronic device with the second account. The first terminal sends device sharing information to the server in response to the first operation, where the device sharing information includes information about the second account and information about the first electronic device. The server sends the information about the second account to the first electronic device. The server sends the information about the first electronic device to the second terminal. The second terminal establishes a short-range communication connection to the first electronic device based on the information about the second account and the information about the first electronic device. The second terminal detects a second operation, where the second operation is used to trigger a first distributed service of the second terminal. The second terminal displays an icon of one or more trusted devices in response to the second operation, where the one or more trusted devices include the first electronic device.

**In** this embodiment of this application, the first electronic device bound to the first account is shared with the second account, and the first electronic device and the second terminal are indicated to obtain information about each other, so that the first electronic device and the second terminal have a trusted relationship. To be specific, upon proximity, the two devices can automatically establish a short-range connection and perform authentication to complete automatic networking. In this way, the first electronic device and the second terminal that are not of a same account can also quickly collaborate in implementing distributed services. In this way, a single sharing operation can implement long-term and efficient distributed service experience between devices of different accounts, thereby effectively enhancing user experience.

In an implementation, the method further includes: displaying a first identifier along with an icon of the first electronic device, where the first identifier indicates that the first electronic device is a device shared by another account with the second account. In this embodiment of this application, the first identifier indicates which devices are shared, so that a user has an intuitive understanding of the shared devices.

In an implementation, the method further includes: The first terminal detects the second operation, where the second operation is used to trigger the first distributed service. The first terminal displays the icon of the one or more trusted devices in response to the second operation, where the one or more trusted devices include a second electronic device, and the second electronic device is a device shared by another account with the first account. In this embodiment of this application, when a distributed service is executed, an icon of a shared device of a different account may be displayed. In this way, the shared device of the different account may also collaborate in implementing the distributed service. In addition, the first account may share the first electronic device with the second account, and the second account may also share the second electronic device with the first account.

In an implementation, the method further includes: The second terminal sets a second filter based on the information about the first electronic device, where the second filter is used to filter a message from the first electronic device. That the second terminal establishes the short-range communication connection to the first electronic device includes: The second terminal establishes the short-range communication connection to the first electronic device based on a filtered message of the first electronic device. In this embodiment of this application, the second filter is set based on the information about the first electronic device, so that the message from the first electronic device can be obtained through filtering, which helps establish the short-range communication connection to the first electronic device.

In an implementation, the method further includes: binding the second account to at least one electronic device, where the at least one electronic device includes a second electronic device. The method further includes: The second terminal sends device sharing information to the server in response to the first operation after the second terminal receives the information about the first electronic device. The device sharing information is used by the first terminal to establish a short-range communication connection to the second electronic device.

In an implementation, a second identifier is further displayed along with the icon of the first electronic device, and the second identifier indicates the first account that shares the first electronic device. In this embodiment of this application, a user name of an account to which the shared device belongs may be displayed on/around an icon of the shared device, so that the user intuitively knows which user shares the device with the user.

In an implementation, the method further includes: The second terminal detects a third operation performed on the icon of the first electronic device. The second terminal collaborates, in response to the third operation, with the first electronic device in executing the first distributed service. In this embodiment of this application, a device of a different account may be selected to execute a distributed service.

In an implementation, the first account creates a first group, a family member in the first group includes the second account, and the first operation is used to add the first electronic device as an electronic device in the first group. In this embodiment of this application, a user may be invited to join a group, and a device in the group may be shared with the user.

In an implementation, the first account creates a first group, an electronic device in the first group includes the first electronic device, and the first operation is used to add the second account as a family member in the first group. In this embodiment of this application, a device may be added to a group, and the newly added device may be shared with the user.

In an implementation, the first operation is further used to add a device bound to the second account as a family member in a first group.

In an implementation, that the second terminal collaborates with the first electronic device in executing the first distributed service includes: The second terminal transmits service data of the first distributed service with the first electronic device through the short-range communication connection. In an implementation, that the second terminal collaborates with the first electronic device in executing the first distributed service includes: The second terminal sends screen-casting data to the first electronic device through the short-range communication connection. The first electronic device displays a cast screen based on the screen-casting data. Alternatively, the second terminal sends application data to the first electronic device through the short-range communication connection. The first electronic device displays a desktop application of the second terminal based on the application data. Alternatively, the second terminal sends audio data to the first electronic device through the short-range communication connection. The first electronic device plays audio based on the audio data. In this embodiment of this application, a device of a different account can quickly implement a distributed service, for example, a distributed service such as Super Terminal, Super Desktop, screen casting, and audio casting.

In an implementation, that the second terminal collaborates with the first electronic device in executing the first distributed service includes: The first electronic device displays a first input box. The first electronic device sends a first request to the second terminal through the short-range communication connection, where the first request is used to request the second terminal to assist in inputting information. The second terminal displays a second input box. The second terminal obtains first information entered by a user in the second input box. The second terminal sends the first information to the first electronic device through the short-range communication connection. The first electronic device displays the first information in the first input box. In this embodiment of this application, a device of a different account can quickly implement a distributed service, for example, auxiliary information input.

According to a second aspect, an embodiment of this application provides a multi-device collaboration method. A first account has logged into a first terminal, a second account has logged into a second terminal, the first account and the second account are different accounts, the first account is bound to at least one electronic device, and the at least one electronic device includes a first electronic device. The method includes: The first terminal device detects a first operation, where the first operation is used to share the first electronic device with the second account. The first terminal device sends device sharing information to a server in response to the first operation, where the device sharing information includes information about the second account and information about the first electronic device. The first terminal sends the information about the second account to the first electronic device by using the server. The first terminal sends the information about the first electronic device to the second terminal by using the server. The information about the second account and the information about the first electronic device are used by the second terminal to establish a short-range communication connection to the first electronic device.

In this embodiment of this application, the first electronic device bound to the first account is shared with the second account, and the first electronic device and the second terminal are indicated to obtain information about each other, so that the first electronic device and the second terminal have a trusted relationship. To be specific, upon proximity, the two devices can automatically establish a short-range connection and perform authentication to complete automatic networking. In this way, the first electronic device and the second terminal that are not of a same account can also quickly collaborate in implementing distributed services. In this way, a single sharing operation can implement long-term and efficient distributed service experience between devices of different accounts, thereby effectively enhancing user experience.

In an implementation, the method further includes: The first terminal detects a second operation, where the second operation is used to trigger a first distributed service.

The first terminal displays an icon of one or more trusted devices in response to the second operation, where the one or more trusted devices include a second electronic device, and the second electronic device is a device shared by another account with the first account.

In an implementation, the method further includes: displaying a first identifier along with an icon of the second electronic device, where the first identifier indicates that the second electronic device is a device shared by another account with the first account.

In an implementation, a second identifier is further displayed along with the icon of the second electronic device, and the second identifier indicates an account that shares the second electronic device.

In an implementation, the method further includes: The first terminal detects a fourth operation performed on the icon of the second electronic device. The first terminal collaborates, in response to the fourth operation, with the second electronic device in executing the first distributed service.

In an implementation, the first account creates a first group, a family member in the first group includes the second account, and the first operation is used to add the first electronic device as an electronic device in the first group.

In an implementation, the first account creates a first group, an electronic device in the first group includes the first electronic device, and the first operation is used to add the second account as a family member in the first group.

In an implementation, that the first terminal collaborates with the second electronic device in executing the first distributed service includes: The first terminal transmits service data of the first distributed service with the first electronic device through a short-range communication connection.

In an implementation, that the first terminal collaborates with the second electronic device in executing the first distributed service includes: The first terminal sends screen-casting data to the second electronic device through a short-range communication connection, where the screen-casting data is used by the second electronic device to display a cast screen. Alternatively, the first terminal sends application data to the second electronic device through a short-range communication connection, where the application data is used by the second electronic device to display a desktop application of the first terminal. Alternatively, the first terminal sends audio data to the second electronic device through a short-range communication connection, where the audio data is used by the second electronic device to play audio.

According to a third aspect, an embodiment of this application provides a multi-device collaboration method. A first account has logged into a first terminal, a second account has logged into a second terminal, the first account and the second account are different accounts, a system further includes at least one electronic device bound to the first account, and the at least one electronic device includes a first electronic device. The method includes: The second terminal receives information about the first electronic device that is sent by a server. The second terminal establishes a short-range communication connection to the first electronic device based on the information about the first electronic device. The second terminal detects a second operation, where the second operation is used to trigger a first distributed service of the second terminal. The second terminal displays an icon of one or more trusted devices in response to the second operation, where the one or more trusted devices include the first electronic device.

In this embodiment of this application, the first electronic device bound to the first account is shared with the second account, and the first electronic device and the second terminal are indicated to obtain information about each other, so that the first electronic device and the second terminal have a trusted relationship. To be specific, upon proximity, the two devices can automatically establish a short-range connection and perform authentication to complete automatic networking. In this way, the first electronic device and the second terminal that are not of a same account can also quickly collaborate in implementing distributed services. In this way, a single sharing operation can implement long-term and efficient distributed service experience between devices of different accounts, thereby effectively enhancing user experience.

In an implementation, the method further includes: displaying a first identifier along with an icon of the first electronic device, where the first identifier indicates that the first electronic device is a device shared by another account with the second account.

In an implementation, a second identifier is further displayed along with the icon of the first electronic device, and the second identifier indicates the first account that shares the first electronic device.

In an implementation, the method further includes: The second terminal sets a second filter based on the information about the first electronic device, where the second filter is used to filter a message from the first electronic device. That the second terminal establishes the short-range communication connection to the first electronic device includes: The second terminal establishes the short-range communication connection to the first electronic device based on a filtered message of the first electronic device.

In an implementation, the method further includes: The second terminal detects a third operation performed on the icon of the first electronic device. The second terminal collaborates, in response to the third operation, with the first electronic device in executing the first distributed service.

In an implementation, the first account creates a first group, a family member in the first group includes the second account, and the first operation is used to add the first electronic device as an electronic device in the first group.

In an implementation, the first account creates a first group, an electronic device in the first group includes the first electronic device, and the first operation is used to add the second account as a family member in the first group.

In an implementation, that the second terminal collaborates with the first electronic device in executing the first distributed service includes: The second terminal transmits service data of the first distributed service with the first electronic device through the short-range communication connection.

In an implementation, that the second terminal collaborates with the first electronic device in executing the first distributed service includes: The second terminal sends screen-casting data to the first electronic device through the short-range communication connection, where the screen-casting data is used by the first electronic device to display a cast screen. Alternatively, the second terminal sends application data to the first electronic device through the short-range communication connection, where the application data is used by the first electronic device to display a desktop application of the second terminal. Alternatively, the second terminal sends audio data to the first electronic device through the short-range communication connection, where the audio data is used by the first electronic device to play audio.

In an implementation, that the second terminal collaborates with the first electronic device in executing the first distributed service includes: The second terminal receives, through the short-range communication connection, a first request sent by the first electronic device, where the first request is used to request the second terminal to assist in inputting information. The second terminal displays a second input box. The second terminal obtains first information entered by a user in the second input box. The second terminal sends the first information to the first electronic device through the short-range communication connection, where the first information is used by the first electronic device to be displayed in the first input box.

According to a fourth aspect, an embodiment of this application provides an electronic device. The electronic device includes a processor and a memory. The memory is coupled to the processor. The memory is configured to store computer program code. The computer program code includes computer instructions. When the processor reads the computer instructions from the memory, the electronic device is enabled to perform the multi-device collaboration method according to the second aspect.

According to a fifth aspect, an embodiment of this application provides an electronic device. A server includes a processor and a memory. The memory is coupled to the processor. The memory is configured to store computer program code. The computer program code includes computer instructions. When the processor reads the computer instructions from the memory, the electronic device is enabled to perform the multi-device collaboration method according to the third aspect.

According to a sixth aspect, an embodiment of this application provides a computer storage medium, including computer instructions. When the computer instructions are run on an electronic device, the electronic device is enabled to perform the multi-device collaboration method according to any possible implementation of any one of the foregoing aspects.

According to a seventh aspect, an embodiment of this application provides a computer program product. When the computer program product is run on a computer, the computer is enabled to perform the multi-device collaboration method according to any possible implementation of any one of the foregoing aspects.

### BRIEF DESCRIPTION OF DRAWINGS

FIG. 1 and FIG. 2 are diagrams of system architectures of a communication system according to an embodiment of this application;
FIG. 3A to FIG. 3L are diagrams of user interfaces of a shared device according to an embodiment of this application;
FIG. 4A to FIG. 4G are diagrams of user interfaces of a shared device according to an embodiment of this application;
FIG. 5A to FIG. 5H are diagrams of user interfaces of a shared device according to an embodiment of this application;
FIG. 6A to FIG. 6G are diagrams of user interfaces of a shared device according to an embodiment of this application;
FIG. 7A to FIG. 7C are diagrams of user interfaces of a shared device according to an embodiment of this application;
FIG. 8A to FIG. 8D are diagrams of user interfaces of a shared device according to an embodiment of this application;
FIG. 9A to FIG. 9C are diagrams of user interfaces of a shared device according to an embodiment of this application;
FIG. 10A to FIG. 10F are diagrams of user interfaces of a shared device according to an embodiment of this application;
FIG. 11 is a diagram of a system architecture of a software system according to an embodiment of this application;
FIG. 12 is a diagram of a system architecture of a multi-device collaboration system according to an embodiment of this application;
FIG. 13A and FIG. 13B are a schematic flowchart of a method according to an embodiment of this application;
FIG. 14A to FIG. 14F are diagrams of user interfaces for Super Terminal according to an embodiment of this application;
FIG. 15A to FIG. 15C are diagrams of user interfaces for Super Desktop according to an embodiment of this application;
FIG. 16 is a diagram of a user interface for audio casting according to an embodiment of this application;
FIG. 17A to FIG. 17C are diagrams of user interfaces for screen casting according to an embodiment of this application;
FIG. 18A to FIG. 18B are diagrams of user interfaces for Wave Gesture Transfer according to an embodiment of this application;
FIG. 19A to FIG. 19C are diagrams of user interfaces for auxiliary input according to an embodiment of this application;
FIG. 20 is a diagram of a device structure of a terminal device according to an embodiment of this application; and
FIG. 21 is a diagram of a device structure of a server according to an embodiment of this application.

### DESCRIPTION OF EMBODIMENTS

The technical solutions according to embodiments of this application are clearly and completely described in the following with reference to the accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

In the following, the terms "first" and "second" are merely intended for the purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application program or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a widget that is displayed on a display of the electronic device.

The following describes a communication system 10 in a multi-device collaboration method provided in an embodiment of this application.

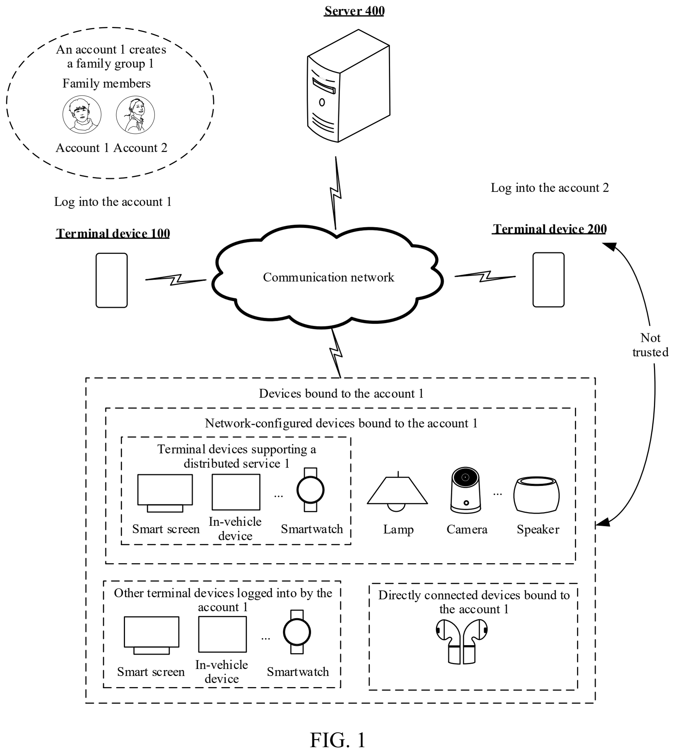

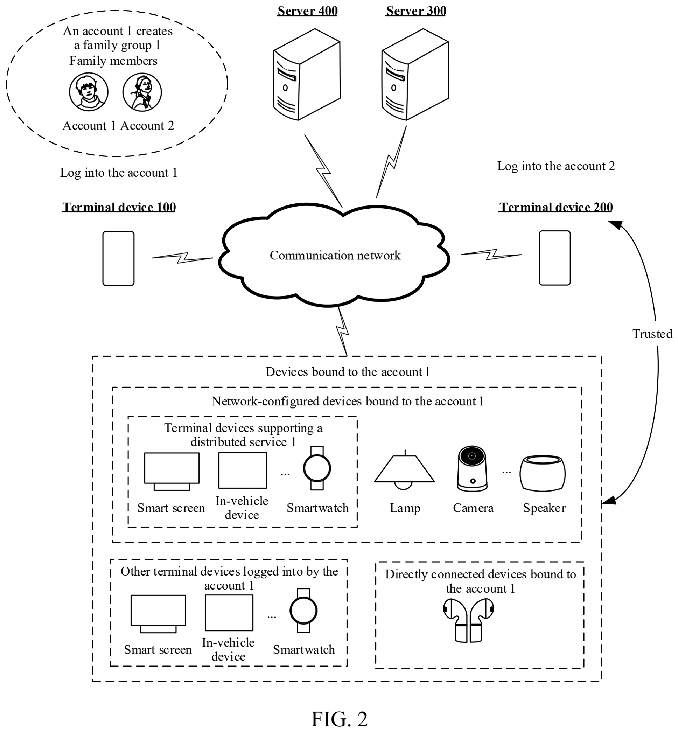

FIG. 1 and FIG. 2 are examples of diagrams of system architectures of the communication system 10 according to an embodiment of this application. As shown in FIG. 1 and FIG. 2, the communication system 10 includes a terminal device 100 that an account 1 has logged into, a terminal device 200 that an account 2 has logged into, a device bound to the account 1, and a server 400 of an application 1.

The terminal device 100 and the terminal device 200 may communicate with the server 400 through a communication network, through which an account of the application 1 is registered and logs into the terminal devices. Through the application 1 on the terminal device 100, the user may view, manage, and control the device bound to the account 1, and the like. Through the application 1 on the terminal device 200, the user may view, manage, and control the device bound to the account 2.

In some embodiments, the device bound to the account 1 may include a network-configured device bound to the account 1. The network-configured device may be connected to the Internet and has a social network attribute. Such a device may be understood as an Internet of things (IoT) device. The terminal device 100 may control the network-configured IoT device by using the server 400. The terminal device 100 may control, by using the server 400, the IoT device bound to the account 1 of the application 1. For example, the IoT device includes a smart screen, an in-vehicle device, a router, an air conditioner, a television, a projection device, a smart speaker, a smart door lock, a smart light, a smart window, a smart curtain, a smart body fat scale, a treadmill, a smart rice cooker, a smart electric kettle, and the like.

In some embodiments, the device bound to the account 1 includes a terminal device that the account 1 has logged into, for example, a mobile phone, a tablet, or a smart screen. The terminal device 100 may obtain, by using the server 400, another terminal device that the same account has logged into.

In some embodiments, the device bound to the account 1 includes a wireless device that can be directly connected to the terminal device 100 by using a short-range communication technology, for example, a Bluetooth headset or a wearable device. The wireless device cannot be connected to the Internet.

In the communication system shown in FIG. 1, the terminal device 100 has a trusted relationship with a terminal device that the same account has logged into. Upon proximity, the two devices may establish a connection and perform authentication, to complete ad hoc networking, so that a short-range distributed service (for example, a service such as Super Terminal, Super Desktop, or screen casting) may be implemented in collaboration, and service data is transmitted through the short-range communication connection. The short-range communication technology in this application may be a short-range communication technology such as wireless fidelity (wireless fidelity, Wi-Fi), ultra-wideband (ultra-wideband, UWB), Bluetooth (Bluetooth), near-field communication (near-field communication, NFC), or ZigBee. The short-range communication technology 1 is not specifically limited in embodiments of this application.

In embodiments of this application, the terminal device 100 may share, with the account 2, the device (for example, a shared device 1) bound to the account 1. In an implementation, after the terminal device 100 adds the account 2 to a family group created by the account 1, the device bound to the account 1 added to the family group is automatically shared with the terminal device 200. In addition to sharing through a family group, the terminal device 100 may also share, with the account 2, a specific device bound to account 1 in a peer-to-peer manner.

In some embodiments, after the terminal device 100 shares, with the account 2, the shared device 1 (for example, an IoT device) bound to the account 1, the terminal device 200 that the account 2 has logged into can control the shared device 1 by using the server 400. However, even if the shared device 1 is shared with the terminal device 200, the shared device 1 and the terminal device 200 cannot automatically perform a short-range distributed service because the terminal device 200 and the shared device 1 bound to the account 1 do not have a trusted relationship.

The communication system shown in FIG. 2 further includes a server 300. In some embodiments, when the terminal device 100 shares, with the account 2, the device (for example, the shared device 1) bound to the account 1, the terminal device 100 may trigger, by using the server 300, the shared device 1 and the terminal device 200 that the account 2 has logged into to perform a trust-related operation, so that the shared device 1 and the terminal device 200 establish trust, that is, have a trusted relationship. After trust is established, the shared device 1 and the terminal device 200 can perform ad hoc networking upon proximity, thereby collaboratively implementing a short-range distributed service. In some embodiments, the server 300 and the server 400 are a same server, that is, an application server of the application 1. In some embodiments, the server 300 and the server 400 are not the same server, and are not the application server of the application 1.

In this embodiment of this application, the application 1 may be a third-party application (for example, an AI Life application), or may be a system application (for example, system settings). The application 1 is not specifically limited in this application. The account of the application 1 may be an account (for example, a Huawei account) specific to an account system of the application 1, a mobile phone number (for example, a phone number), an email account, a social application account, or an account of another specified application. In some embodiments, the account of the application 1 may be bound to an account in another account system. For example, the account of the application 1 is a Huawei account, and may be further bound to an account such as a phone number, an email account, or a social application account. In some embodiments, sharing the device (for example, the shared device 1) bound to the account 1 with a bound account (for example, a mobile number) of the account 2 is equivalent to sharing the device bound to the account 1 with the account 2.

The communication network may include a local area network (local area network, LAN) and/or a wide area network (wide area network, WAN). The communication network may be implemented by using any known network communication protocol. The network communication protocol may be various wired or wireless communication protocols, such as Ethernet, a universal serial bus (universal serial bus, USB), a firewire (FIREWIRE), a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth, wireless fidelity (wireless fidelity, Wi-Fi), NFC, voice over Internet protocol (voice over Internet protocol, VoIP), a communication protocol supporting a network slice architecture, or any other suitable communication protocol.

The terminal device 100 and the terminal device 200 each may be a mobile phone, a tablet computer, a desktop computer, a laptop computer, a handheld computer, a notebook computer, an ultra-mobile personal computer (ultra-mobile personal computer, UMPC), or a netbook, or may be a cellular phone, a personal digital assistant (personal digital assistant, PDA), an augmented reality (augmented reality, AR) device, a virtual reality (virtual reality, VR) device, an artificial intelligence (artificial intelligence, Al) device, a wearable device (for example, a smart band), an in-vehicle device, a smart home device (for example, a smart television, a smart screen, or a large-screen device), and/or a smart city device. A specific form of the terminal device is not specially limited in embodiments of this application.

The server 300 and the server 400 each may be a server, a server cluster including a plurality of servers, or a cloud computing center. The server 300 in this embodiment of this application may also be referred to as a cloud server, a cloud, or a cloud side.

It should be understood that FIG. 1 and FIG. 2 are merely diagrams of system structures of the communication system provided in embodiments of this application, and does not constitute a specific limitation on the communication system 10. The communication system 10 may include more or fewer devices than those shown in the figure, for example, may further include a wireless relay device and a wireless backhaul device (not shown in FIG. 1). This is not limited herein.

In the following, an example in which the application 1 is an AI Life application is used, to describe interface implementation in which the account 1 shares a family device with the account 2.

In some embodiments, after a user 1 (for example, Mark) registers and logs into the account 1 of the AI Life application on the terminal device 100, the user 1 generates a family group 1 (for example, "Mark's home") on the AI Life application. Then, the user 1 may add a family device and a family member to the family group 1 through the terminal device 100. The account 1 is a creator of the family group 1 and owner of the family device in the family group 1. The family creator can manage (for example, delete, categorize, or control) the family device added to the family group and manage (for example, delete or set permissions) the family member added to the family group. In embodiments of this application, the AI Life application may also be referred to as another name, for example, a smart home application or an intelligent home application. This is not specifically limited herein.

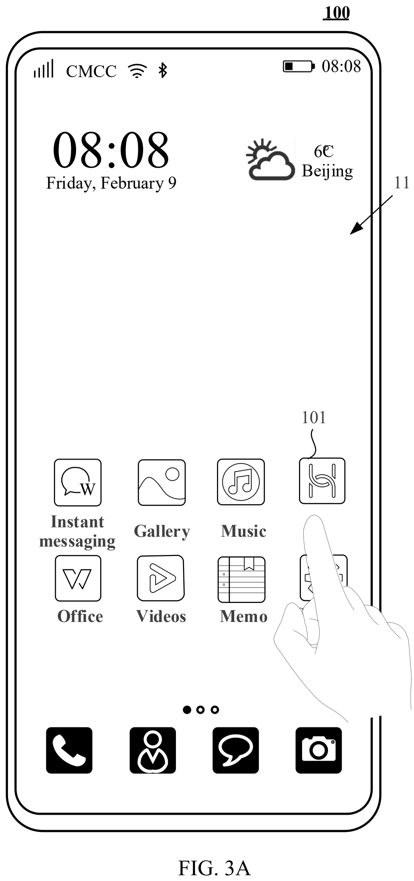

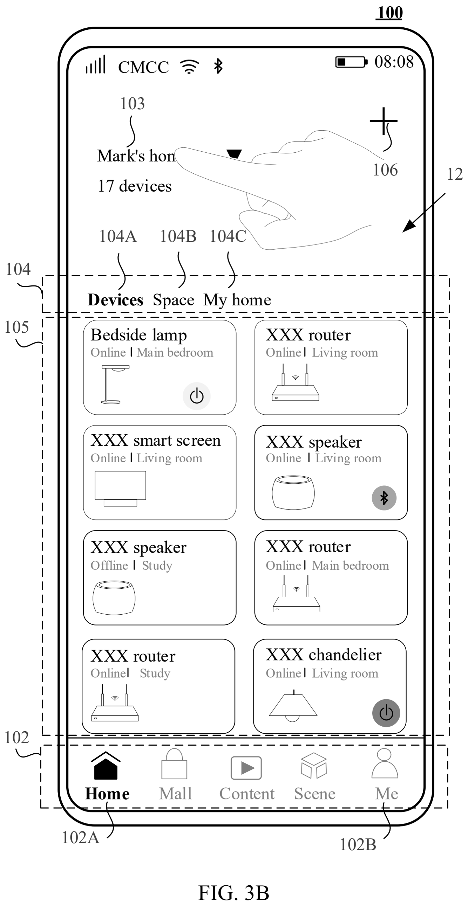

For example, FIG. 3A and FIG. 3B show related user interfaces for starting the AI Life application.

FIG. 3A shows a main interface 11 that is on the terminal device 100 and that is used to display applications installed on the terminal device 100. The main interface 11 may include a status bar, a calendar indicator, a weather indicator, a tray with frequently used application icons, and another application icon, for example, an application icon 101 of the AI Life application.

As shown in FIG. 3A and FIG. 3B, in response to an operation of tapping the application icon 101 by the user, the terminal device 100 starts the AI Life application and displays a home page 12 of the AI Life application. As shown in FIG. 3A, the home page 12 includes a page navigation bar 102, a family group option 103, a display navigation bar 104, a device display area 105, and an add control 106.

The page navigation bar 102 includes the following page options: Home 102A, Mall, Smart, and Me 102B. The terminal device 100 currently displays a home page indicated by Home 102A, and may switch, by tapping another page option (for example, My 102B) in the page navigation bar 102, the home page to a page indicated by the another page option, for example, a user center interface of the AI Life application indicated by Me 102B.

The family group option 103 displays a name of a family group, for example, a name of the family group 1 is "Mark's home".

The display navigation bar 104 includes the following display options: Device 104A, Space 104B, and My home 104C. A currently selected display option (for example, Device 104A) in the display navigation bar 104 indicates a display manner of family devices in the device display area 105. Device 104A indicates to display the family devices in the family group indicated by the family group option 103; Space 104B indicates to categorize and display the family devices in the family group indicated by the family group option 103 based on spaces to which the devices belong; and My home 104C indicates all family devices added by the currently logged-in account 1.

As shown in FIG. 3B, device information of the family device displayed in the device display area 105 may include a device icon, a device name, a network connection status (for example, "online" or "offline"), classification information of a space/room to which the family device belongs (for example, "living room" or "main bedroom"), and a connection manner (for example, Bluetooth).

A family group may be understood as a virtual device space. The user may add a family device bound to the account 1 or add a family member who shares the family device to the device space. The family member is an account within a same account system. A device type of the family device is not specifically limited in this application. The family group, the family device, and the family member are merely example concept names, and may also be referred to as other names, and shall not constitute a limitation on this application. For example, the family group, the family device, and the family member may be respectively referred to as a sharing group, a shared device, and a sharing member. The family device may be a device in various application places such as a residence, an office, and a school. An application scenario of the family device is not specifically limited in embodiments of this application.

Interface embodiment 1 to interface embodiment 5 in the following provide several interface embodiments for device sharing of the AI Life application.

Interface embodiment 1: After a user 2 (namely, the account 2) is added to the family group 1, the devices in the family group 1 are automatically shared with the user 2.

For example, FIG. 3B to FIG. 3I show related user interfaces for adding the user 2 to the family group 1 by the terminal device 100.

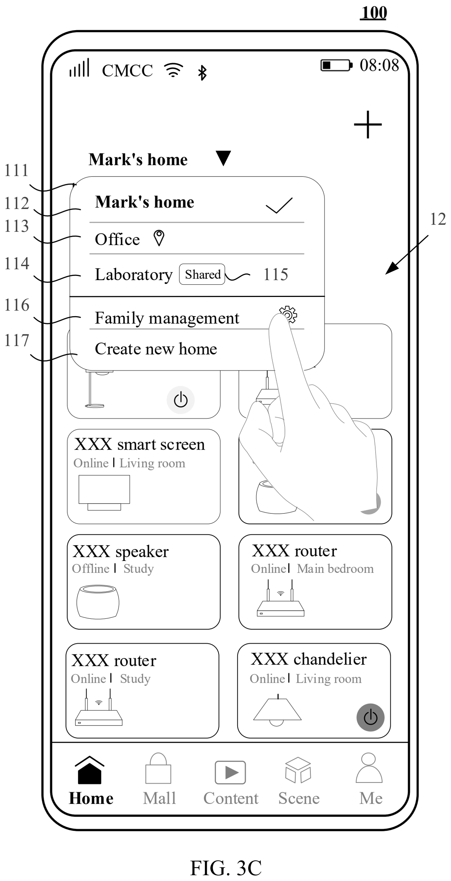

For example, as shown in FIG. 3B and FIG. 3C, in response to an operation of tapping the family group option 103 by the user, the terminal device 100 displays a menu box 111. The menu box 111 displays options of family groups that the account 1 joins, including the family group 1 created by the account 1, for example, an option 112 of "Mark's home" and an option 113 of "Office", and may further include a family group created by another account that the account 1 joins, for example, an option 114 of "Laboratory". The option 114 may further display a shared identifier 115 to indicate that the family group is a family group created by another account, and the device may share family devices in the family group. The option 112 of "Mark's home" is currently in a selected state, and an option of another family group is currently in an unselected state. The selected family group may be switched by tapping the option of the another family group. The foregoing family group option 103 is a currently selected family group.

The menu box 111 further displays a family management widget 116 and a new family creation widget 117. The family management widget 116 is configured to manage a currently selected family group, and the new family creation widget 117 is configured to trigger creation of a new family group.

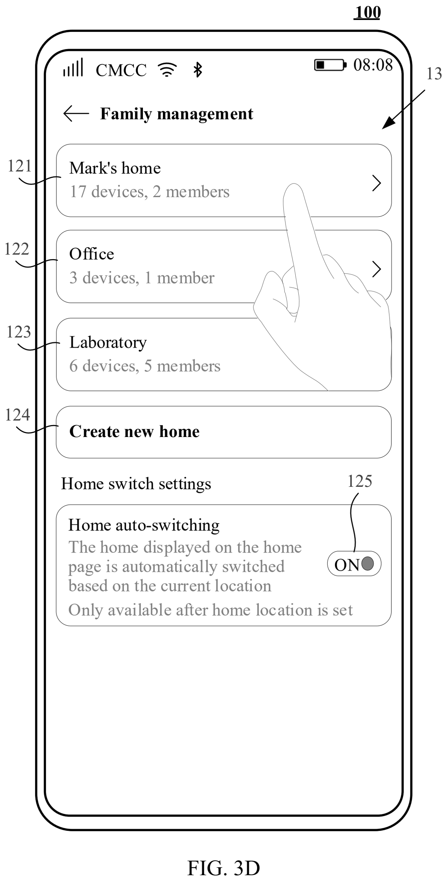

As shown in FIG. 3C and FIG. 3D, in response to an operation of tapping the family management widget 116 by the user, the terminal device 100 displays a family management interface 13. The family management interface 13 includes entries of family groups that the account 1 joins, where the entry displays a quantity of family devices in the family group and data of family members, for example, an entry 121 of "Mark's home", an entry 122 of "Office", and an entry 123 of "Laboratory", and a control 124 for creating a new family, and a switch control 125 for automatic family switching.

The control 124 for creating a new family is used to trigger creation of a new family group. An on/off control 125 for automatic family switching includes an on state (ON) and an off state (OFF). A geographical location may be set for each family group. When the on/off control 125 includes the on state, the terminal device 100 may switch, based on a current geographical location, a family group (namely, a family group indicated by the family group option 103) displayed on the home page, for example, switch to a family group closest to the current geographical location.

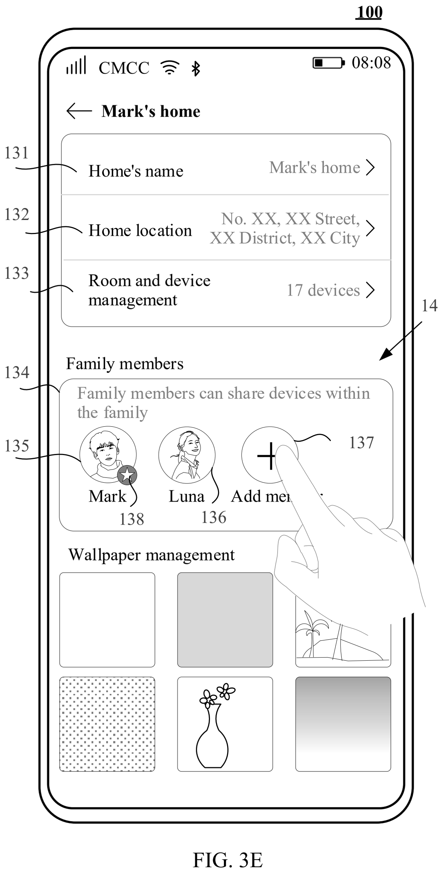

As shown in FIG. 3D and FIG. 3E, the entry 121 of "Mark's home" is used as an example. In response to an operation of tapping the entry 121 by the user, the terminal device 100 displays a family detail interface 14 of "Mark's home". The family detail interface 14 includes a home name 131, a home address 132, room and device management 133, and a family member box 134. On the family detail interface 14, a name and an address of the family group, and a room to which each device in the family group belongs may be edited. The family member box 134 may include identification information (for example, a profile picture and a user name, and the profile picture is used as an example for description subsequently) of each family member, including a profile picture of a creator of the family group, namely, a profile picture 135 of the account 1, and profile pictures of other accounts invited to join the family group, for example, a profile picture of an account Luna.

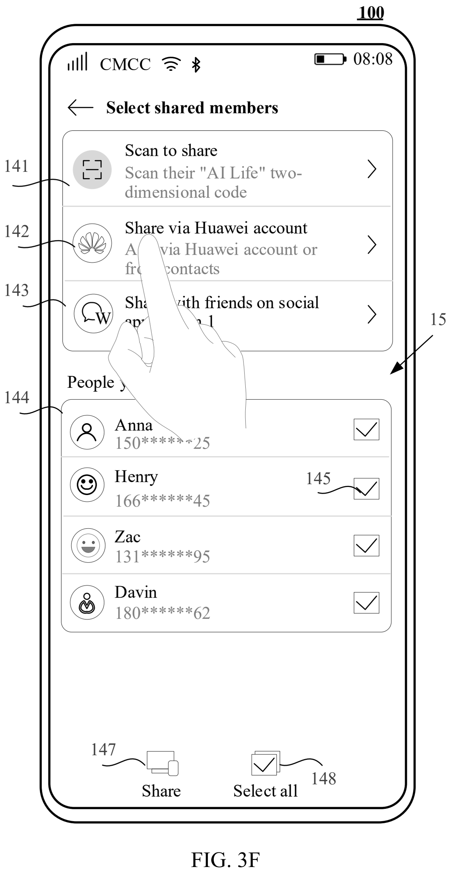

As shown in FIG. 3E and FIG. 3F, the family member box 134 further includes an add member control 137. In response to an operation of tapping the add member control 137 by the user, the terminal device 100 may display a selection interface 15 of sharing members. The selection interface 15 provides options of a plurality of selection manners, for example, an option 141 for scan-to-share, an option 142 of selecting a family member by using a Huawei account, an option 143 of selecting a family member by using a social application 1, and an account list 144.

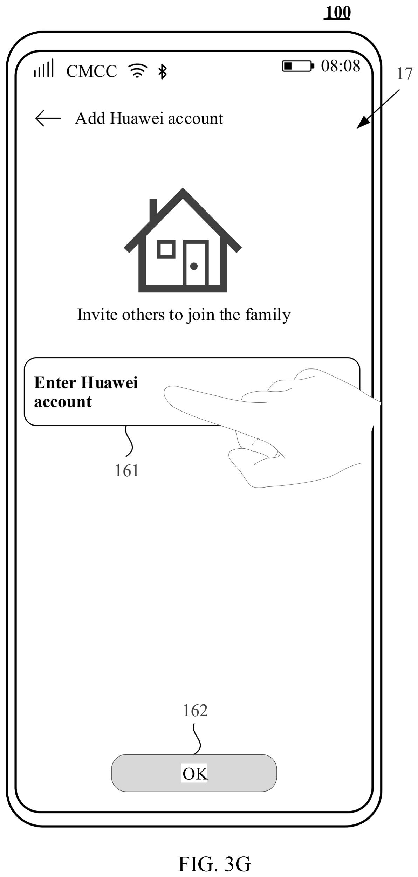

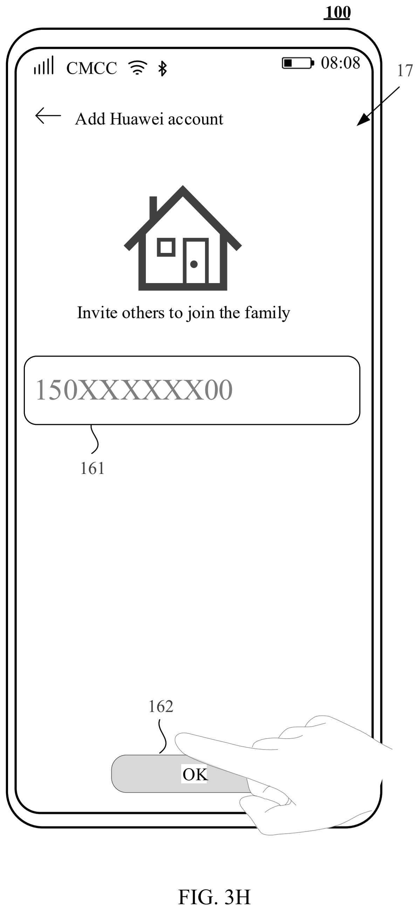

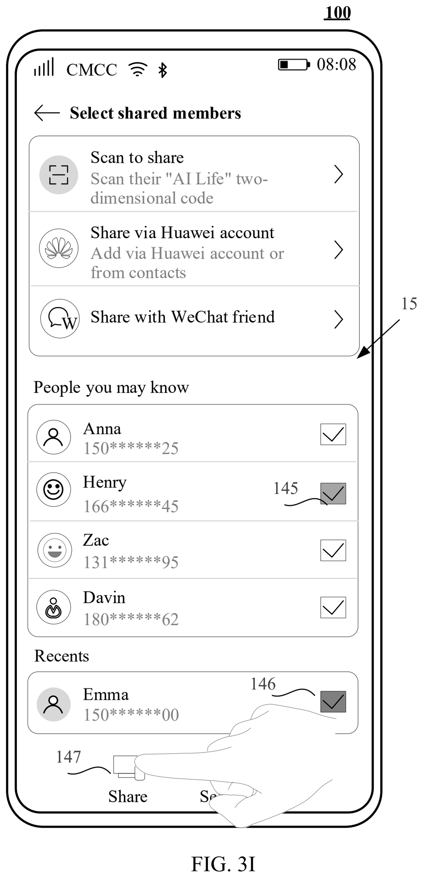

As shown in FIG. 3F and FIG. 3G, in response to an operation of tapping the option 142 by the user, the terminal device 100 may display a user interface 17 for adding a Huawei account, and the user interface 17 includes a search box 161 and an OK control 162. As shown in FIG. 3H and FIG. 3I, after the user enters a Huawei account of a target user (for example, Emma) in the search box 161, in response to an operation of tapping the OK control 162 by the user, the terminal device 100 displays a Huawei account select control 146 of Emma on a family management interface 13.

The option 141 for scan-to-share may trigger the terminal device 100 to display a code scanning interface. After scanning a two-dimensional code of another account (for example, the account 2) of the AI Life application through the code scanning interface, the terminal device 100 may display the account as an optional family member on the selection interface 15. The option 143 may trigger the terminal device 100 to display a contact selection interface of the social application 1, where a contact in the social application 1 is bound to an account of the AI Life application. One or more contacts of the social application 1 may be selected through the interface, and are displayed in the selection interface 15. A Huawei account of the AI Life application bound to the contact is used as an optional account.

The device list 144 may include one or more select controls for optional accounts, for example, a select control 146 for Henry's account. By tapping a select control (for example, the select control 145 and the select control 146), the user may switch the select control from an unselected state to a selected state, that is, select an account corresponding to the select control.

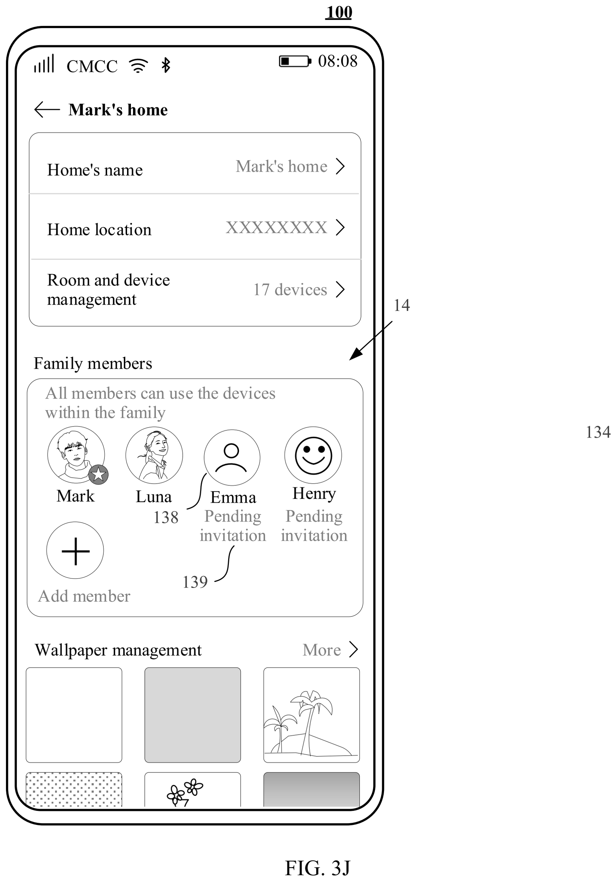

As shown in FIG. 3F, the selection interface 15 of the family member further includes a select-all control 147 and a share control 148. The select-all control 147 is used to select all optional accounts in the selection interface 15. The user may select one or more accounts in the selection interface 15, and invite the user to join the family group 1 (for example, "Mark's home"). As shown in FIG. 3I and FIG. 3J, after the user selects Emma's account and Henry's account, in response to an operation of tapping the share control 148 by the user, the terminal device 100 sends an invitation request to Emma's device and Henry's device, to invite Emma's device and Henry's device to join "Mark's home"; displays a profile picture 138 of Emma and a profile picture of Henry in the family member box 134 in a selection interface 14; and displays prompt information (for example, prompt information 139 around the profile picture 138) to indicate that the invitation is pending acceptance by the user.

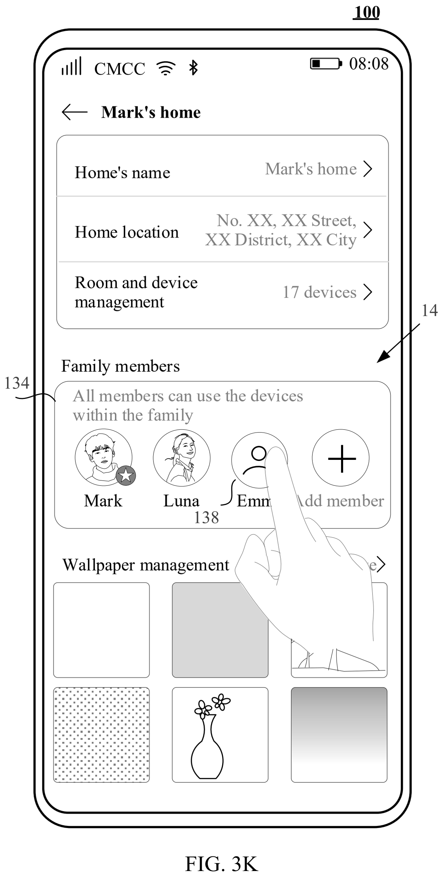

As shown in FIG. 3K, after Emma accepts the invitation, the terminal device 100 determines that Emma's account has been added as a family member of "Mark's home", and stops displaying the prompt information 149. After Henry rejects the invitation, the terminal device 100 stops displaying the profile picture of Henry in the family member box 134.

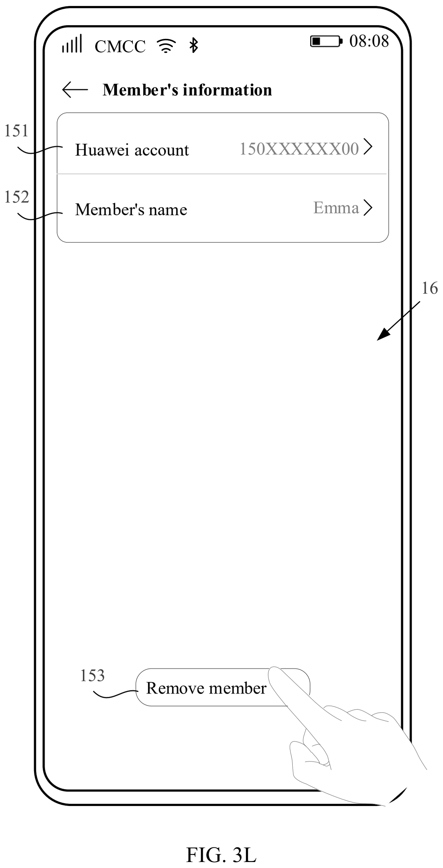

The terminal device 100 may delete a family member that has been added to "Mark's home". For example, as shown in FIG. 3K and FIG. 3L, in response to an operation of tapping the profile picture 138 of Emma by the user, the terminal device 100 displays a member detail interface 16 of Emma. The member detail interface 16 includes Emma's user name 152 of and Huawei account 151, and further includes a member removal control 153. In response to an operation of tapping the member removal control 153 by the user, the terminal device 100 removes Emma's account from "Mark's home".

In some embodiments, when the user 2 is added to the family group 1 (for example, Emma is added to "Mark's home"), permissions for the user 2 may also be set. For example, the user 2 is set to share some or all family devices in the family group 1, or an operation that the user 2 can perform on a sharable family device in the family group 1 is set. For example, user permissions are classified into a plurality of levels. A higher permission level indicates a greater quantity of executable operations. For example, a level-1 user permission may include adding/deleting a family member, adding/deleting a family device, setting permission for a family member, editing basic information (such as a name, a location, and a room classification of each device) of a family group, controlling use of a family device, and the like. A level-2 user permission includes some operations in the level-1 user permission. For example, the level-2 user permission can only control use of the family device. A level-3 user permission includes controlling use of a family device only when a family member is close to a location of the family group.

In this embodiment of this application, when the user 1 (namely, the account 1) invites the user 2 (namely, the account 2) to join the family group 1, a family device 1 in the family group 1 is shared with the user 2. That is, the terminal device 100 performs trust authorization for the terminal device 200 that the account 2 has logged into and the family device 1. After trust authorization is completed, when the terminal device 200 is close to the family device 1, the terminal device 200 and the family device 1 may establish a short-range communication connection and perform automatic networking, so that the two devices may collaborate in implementing a short-range distributed service 1 (for example, Super Terminal and screen casting). The family device 1 may be referred to as a shared device shared by the account 1 with the account 2. Optionally, the family device 1 is any device in the family group 1. Optionally, the family device 1 is a family device that supports the short-range distributed service 1 in the family group 1.

In some embodiments of this application, when the account 1 invites the account 2 to join the family group 1 created by the account 1, a family device in the family group 1 is shared with the account 1. In addition, when the account 2 joins the family group 1, a device bound to the account 2 (for example, a device in the family group 2 created by the account 2) also automatically joins the family group 1. That is, the device is shared with the account 1 or all family members in the family group 1.

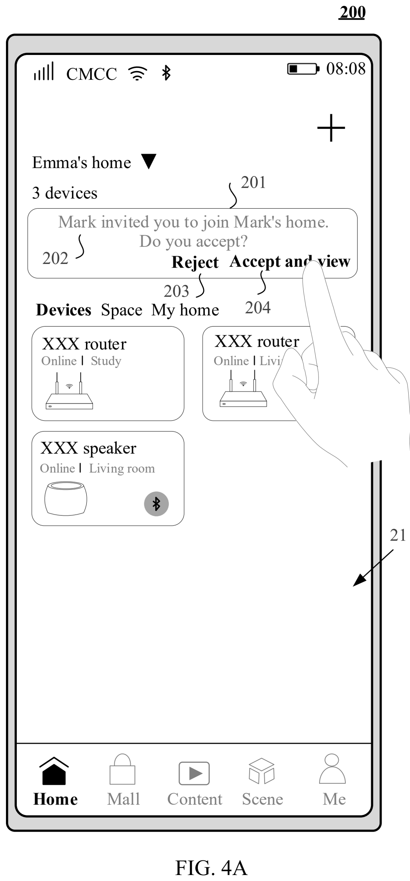

For example, FIG. 4A to FIG. 4F show related user interfaces of the terminal device 200 accepting an invitation.

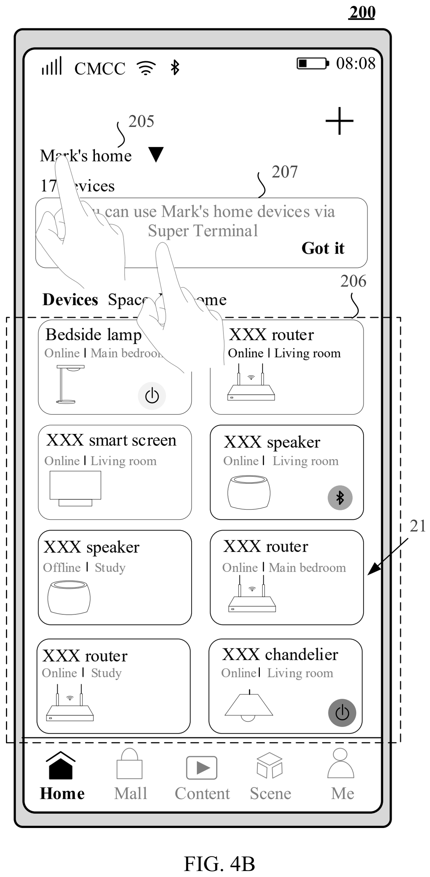

As shown in FIG. 4A, the AI Life application of the terminal device 200 logs into an account of the user 1 (for example, Emma). After receiving an invitation request sent by the terminal device 100, the AI Life application of the terminal device 200 displays a prompt box 201 on a home page 21. The prompt box 201 includes prompt information 202, a reject control 203, and an accept and view control 204. The prompt information 202 is used to prompt Mark to invite Emma to join "Mark's home", and the reject control 203 is used to reject the invitation request. As shown in FIG. 4A and FIG. 4B, in response to an operation of tapping the accept and view control 204 by the user, the terminal device 200 feeds back confirmation information to the AI Life application of the terminal device 100 to indicate acceptance of the invitation request, obtains a family device in "Mark's home" from a cloud server 400, and displays a family group name of "Mark's home" in a family group option 205 of the home page 21. In a device display area 206, the family device in "Mark's home" is displayed.

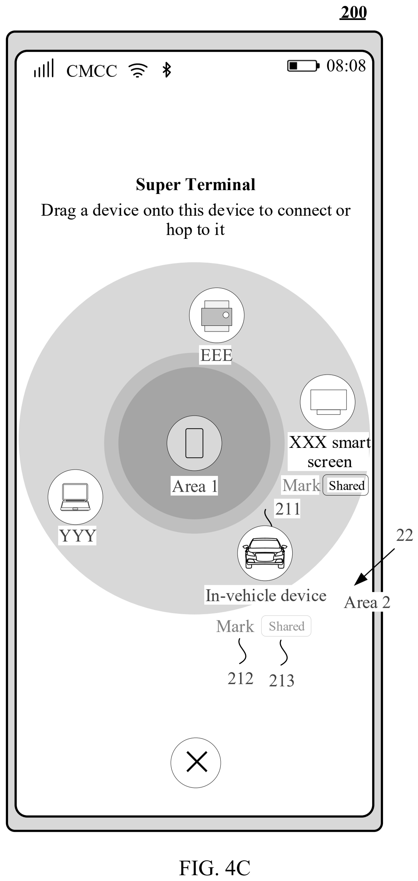

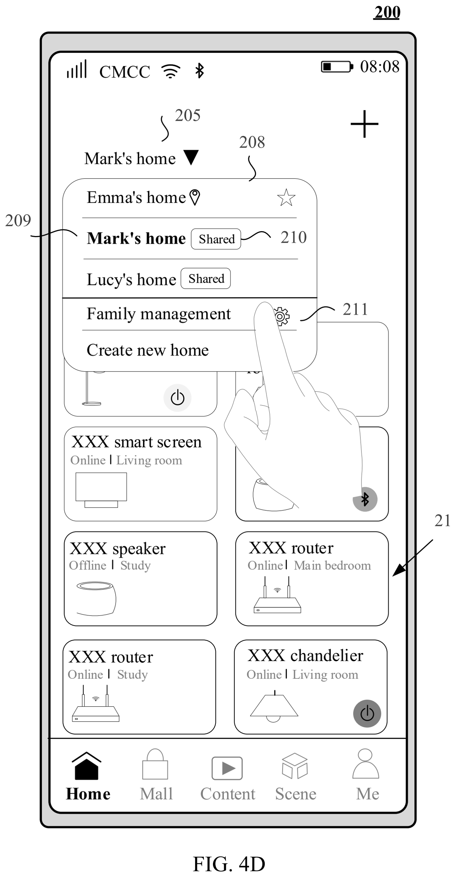

In some embodiments, after Emma confirms to join "Mark's home", the terminal device 200 further displays prompt information on the home page 21, to prompt the user that the terminal device 200 may collaborate with a family device in "Mark's home" in executing a distributed service, for example, a distributed service such as Super Terminal, Super Desktop, screen casting, audio casting, and auxiliary input. For example, a service of Super Terminal is used as an example. As shown in FIG. 4C, the terminal device 200 displays prompt information 207, where the prompt information 207 is used to prompt that the device may use a device in "Mark's home" in the service of Super Terminal. As shown in FIG. 4C and FIG. 4D, in response to an operation of tapping the prompt information 207 by the user, the terminal device 200 may display a super terminal interface 22. The terminal device 200 may detect a family device, for example, an in-vehicle device, near "Mark's home", and display, on the super terminal interface 22, an icon 211 of the in-vehicle device, a user name 212 of an account 1 to which the in-vehicle device belongs, and a shared identifier 213. The user name 212 indicates a user name of the account to which the in-vehicle device belongs, and the shared identifier 213 indicates that the in-vehicle device is a shared device shared by another user. Specifically, the distributed service of Super Terminal is described in more detail in subsequent embodiments, and is not described herein.

As shown in FIG. 4B and FIG. 4D, in response to an operation of tapping the family group option 205 by the user, the terminal device 100 may display a menu box 208. The menu box 208 displays an option of a family group joined by the account 2 logging into the terminal device 200, including a family group created by the account 2, for example, an option of "Emma's home", and may further include a family group that is created by another account and that the account 1 joins, for example, an option 209 of "Mark's home", where a shared identifier 210 displayed on the option indicates that "Mark's home" is a family group created and shared by another account.

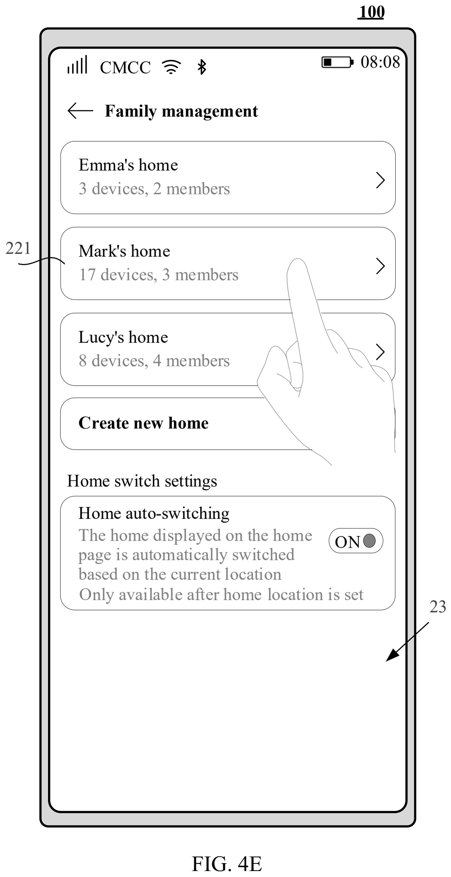

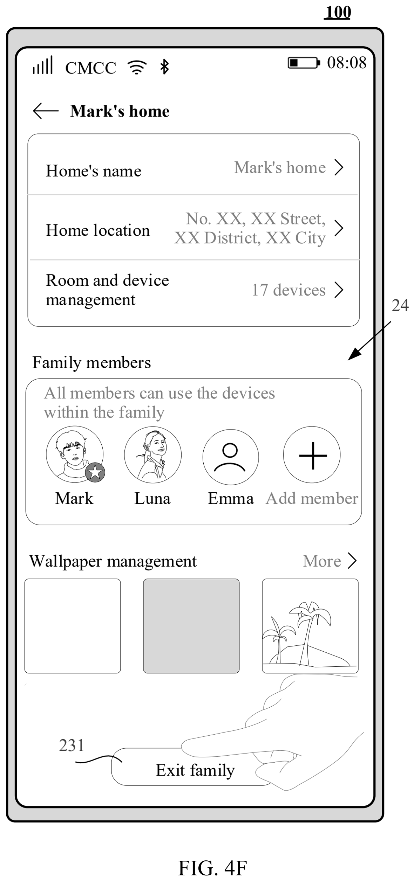

The menu box 208 further displays a family management widget 211. As shown in FIG. 4D and FIG. 4E, in response to an operation of tapping the family management widget 211 by the user, the terminal device 200 displays a family management interface 23 of "Mark's home". For the family management interface 23, refer to related descriptions of the family management interface 13 on the terminal device 100. As shown in FIG. 4E and FIG. 4F, the family management interface 23 includes an entry 221 of "Mark's home". In response to an operation of tapping the entry 221 by the user, the terminal device 200 displays a family detail interface 24 of "Mark's home". For the family detail interface 24, refer to related descriptions of the family detail interface 14 on the terminal device 100.

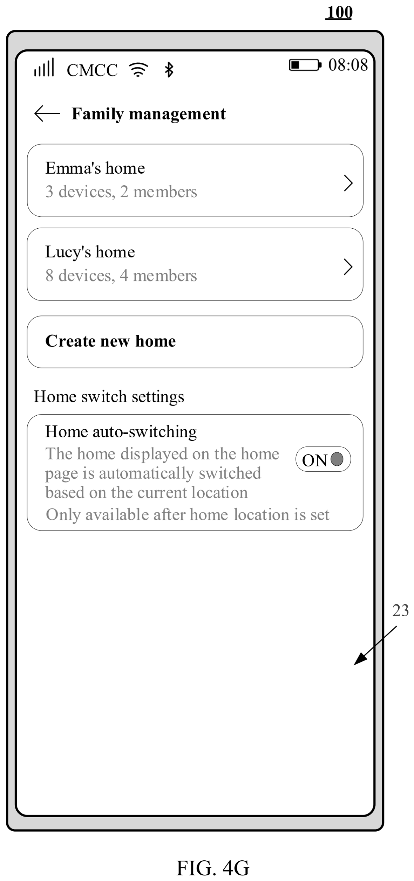

After joining Mark's home, the account 2 can choose to exit "Mark's home". As shown in FIG. 4F and FIG. 4G, the family detail interface 24 includes an exit family control 231. In response to an operation of tapping the exit family control 231 by the user, the terminal device 100 removes the account 2 from "Mark's home", and returns to the family management interface 23, and the family management interface 23 stops displaying the entry 221 of "Mark's home".

It can be learned from FIG. 4A to FIG. 4F that, after the account 2 joins "Mark's home" created by the account 1, the user 2 (namely, the account 2) may also view, on a home page of the AI Life application on the terminal device 200, a family device in "Mark's home", and view a family detail interface of "Mark's home".

In some embodiments, the user may add, by using the terminal device 200, a device bound to the account 2 to the family group 1 (for example, "Mark's home") created by the account 1, that is, share the device bound to the account 2 with a family member in the family group 1.

Interface embodiment 2: After a device is added to the family group 1, the device is automatically shared with the family member in the family group 1, for example, the user 2.

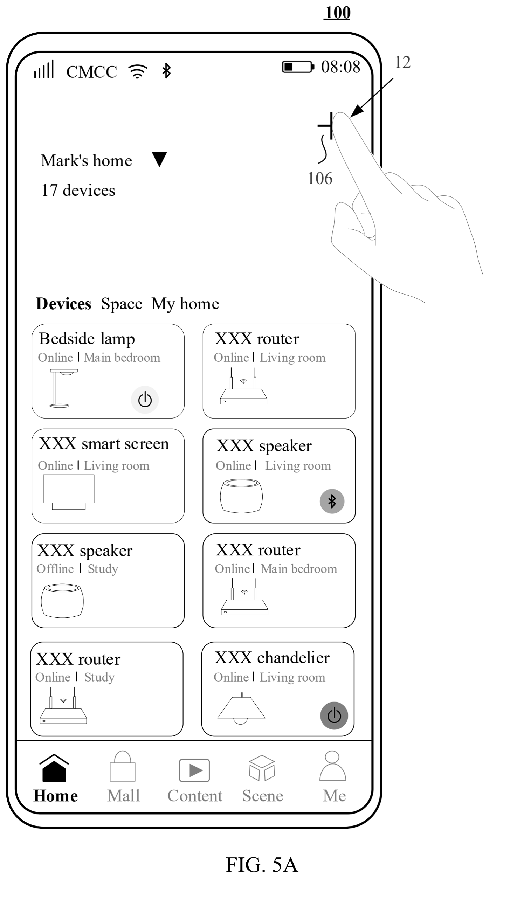

For example, FIG. 5A to FIG. 5F show related user interfaces for adding a device to the family group 1 by the terminal device.

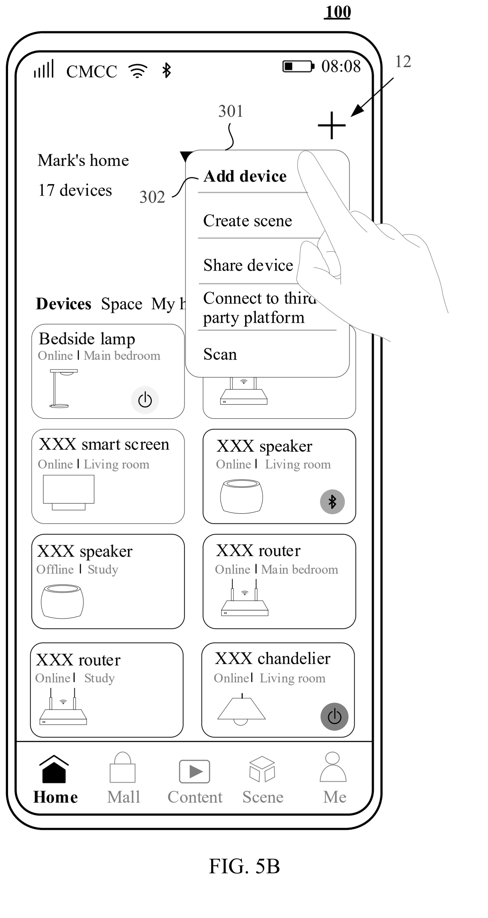

As shown in FIG. 5A and FIG. 5B, in response to an operation of tapping an add control 106 by the user, the terminal device 100 displays a menu box 301. The menu box 301 includes function controls such as Add device 302, Share device, Create scenario, and Connect to third-party platform.

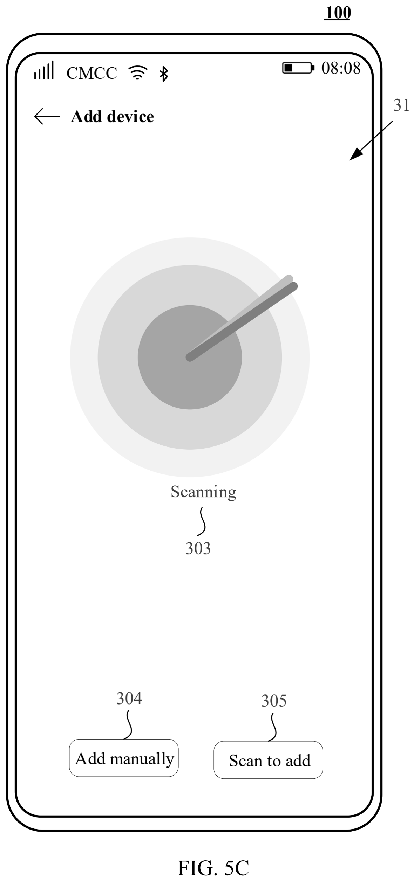

As shown in FIG. 5B and FIG. 5C, in response to an operation of tapping Add device 302 by the user, the terminal device 100 scans a nearby device, and displays a user interface 31. The user interface 31 includes prompt information 303, a manual adding control 304, and a scan-to-add control 305. The prompt information 303 is used to prompt that a nearby device is being scanned. The manual adding control 304 is used to trigger adding of a device through manual input. The scan-to-add control 305 is used to trigger adding of a device by scanning a two-dimensional code of the device.

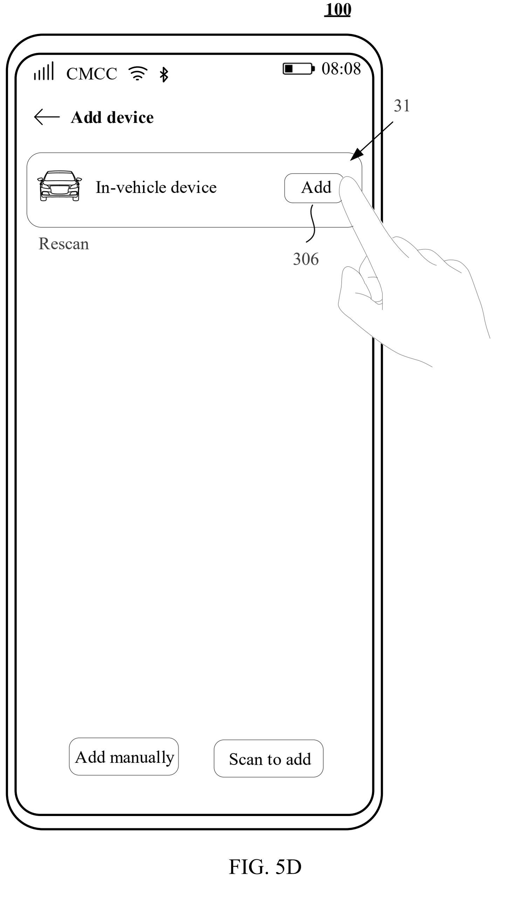

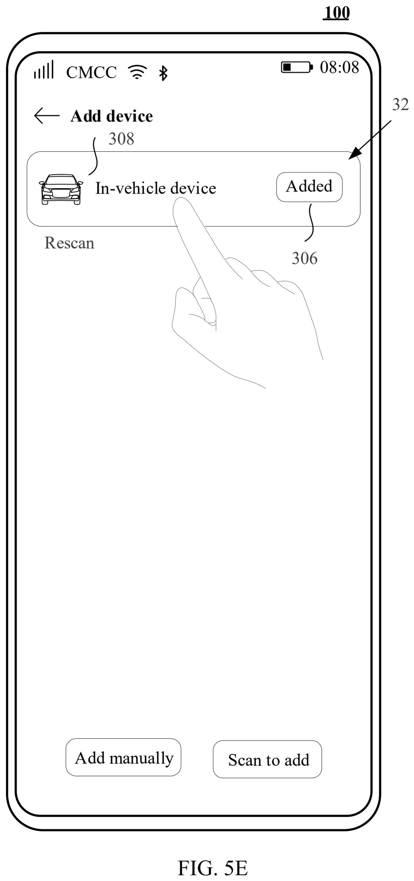

As shown in FIG. 5D, after a device (for example, an in-vehicle device) is scanned, an icon 308 and an add control 306 of the in-vehicle device are displayed. As shown in FIG. 5D and FIG. 5E, in response to an operation of tapping the add control 306 by the user, the terminal device 100 adds the in-vehicle device to a family group displayed on a home page 12, that is, "Mark's home", and switches a text "Add" presented by the add control 306 to "Added".

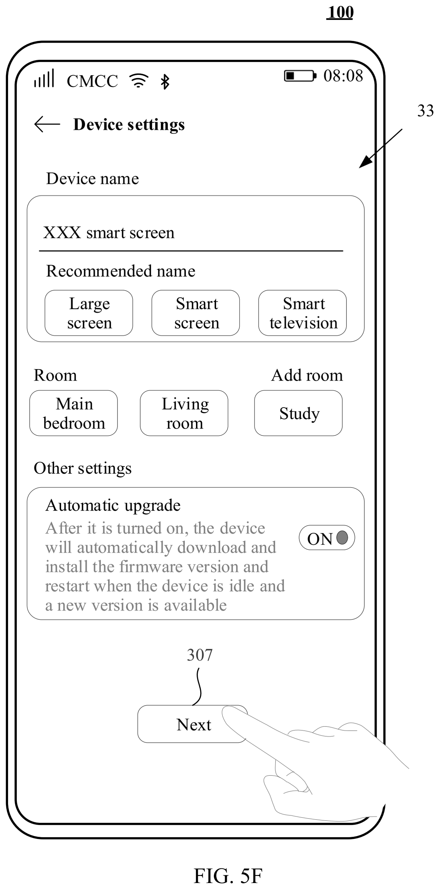

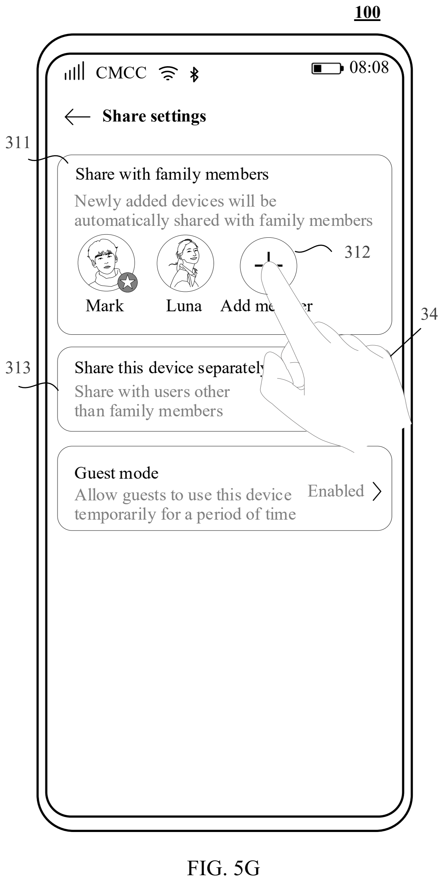

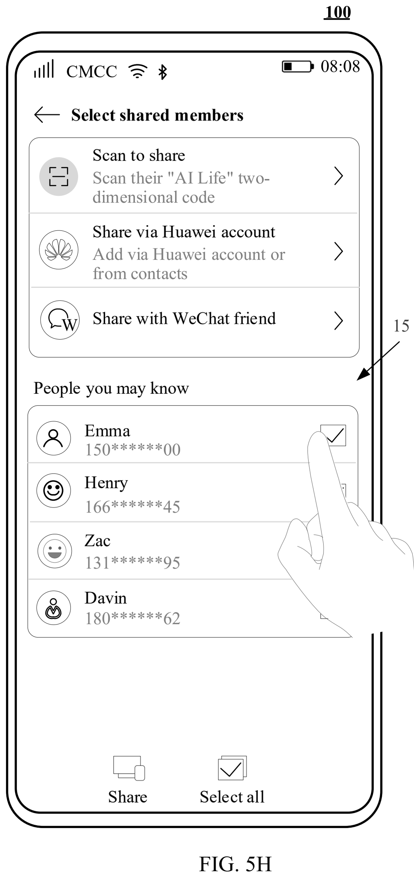

As shown in FIG. 5E and FIG. 5F, in response to an operation of tapping the icon 308 of the in-vehicle device by the user, the terminal device 100 displays a device setting interface 33. The device setting interface 33 is used to set information such as a name and a room to which an added device belongs. As shown in FIG. 5F and FIG. 5G, the device setting interface 33 further includes a next step control 307. In response to an operation of tapping the next step control 307 by the user, the terminal device 100 displays a sharing setting interface 34. The sharing setting interface 34 includes a family member box 311, a separate sharing control 313, and a guest mode 314. For the family member box 311, refer to related descriptions of the foregoing family member box 134. The family member box 311 includes an add control 312. As shown in FIG. 5G and FIG. 5H, in response to an operation of tapping the add control 312 by the user, the terminal device 100 may display a selection interface 15 of a family member. In this way, when a device is added to the family group 1, the family member may also be added. The separate sharing control 313 is configured to trigger sharing of a device with a specified user.

Interface embodiment 3: A notification message is displayed on an application home page to recommend the user 2 (the account 2), and the family group 1 is selected to add the user 2.

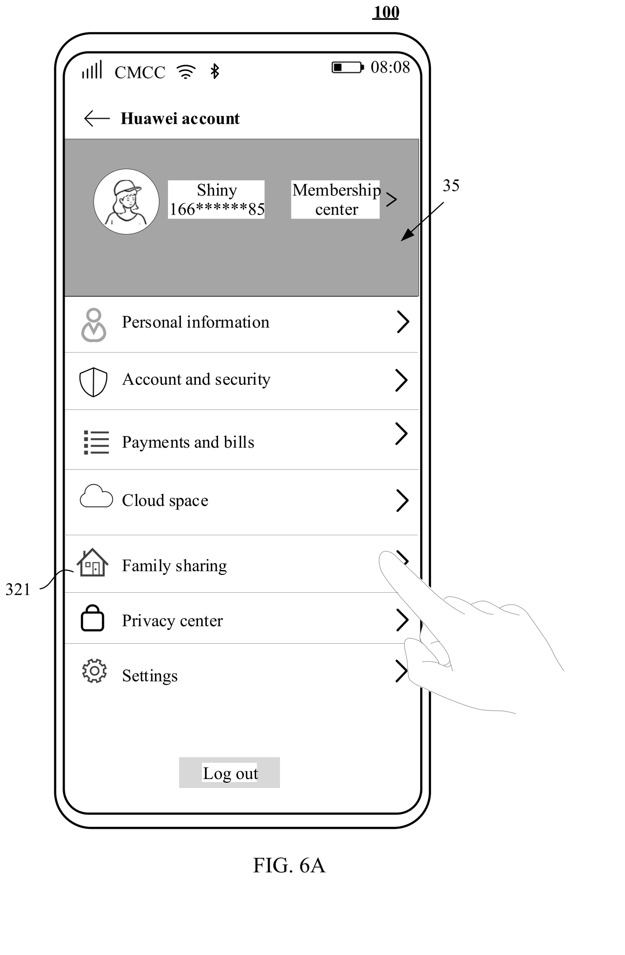

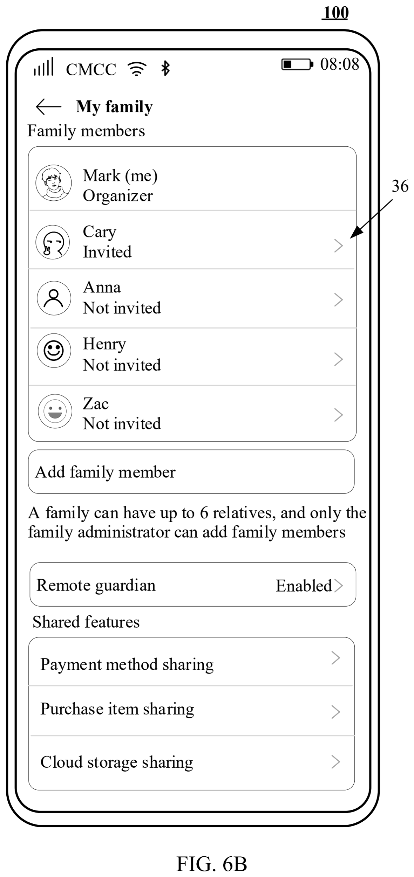

In some embodiments, a family sharing group is also set in a user center of a Huawei account, and one or more family members may be added to the family sharing group. Users in the family sharing group are usually closely related, enabling synchronization and sharing of content such as information, payments, photos, and contacts among family members. An entrance for the user center of the Huawei account is set in "System settings" of the terminal device 100. A user center interface 35 of the Huawei account shown in FIG. 6A may be accessed through the entrance. The user center interface 35 includes an entry 321 for family sharing. As shown in FIG. 6A and FIG. 6B, in response to an operation of tapping the entry 321 by the user, the terminal device 100 may display a family sharing interface 36. The family sharing interface 36 displays members in the family sharing group.

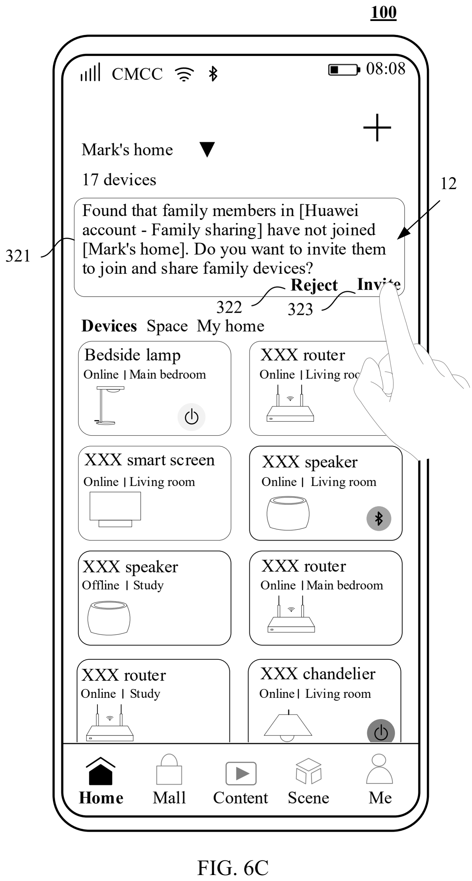

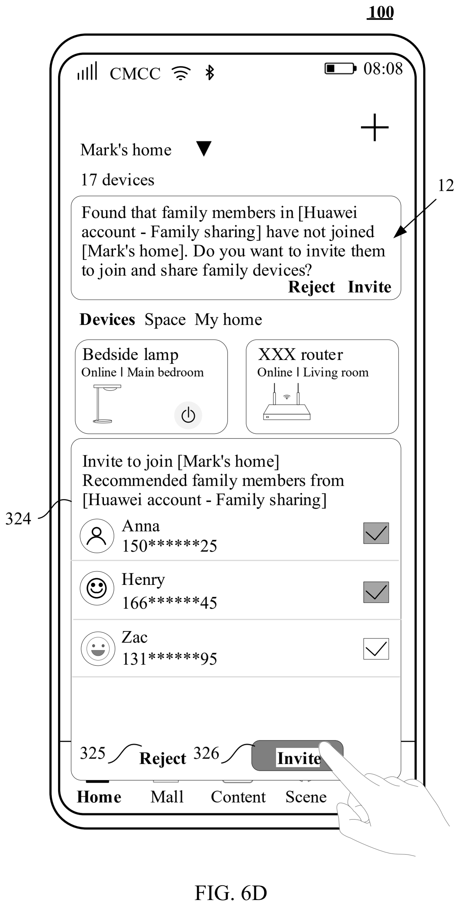

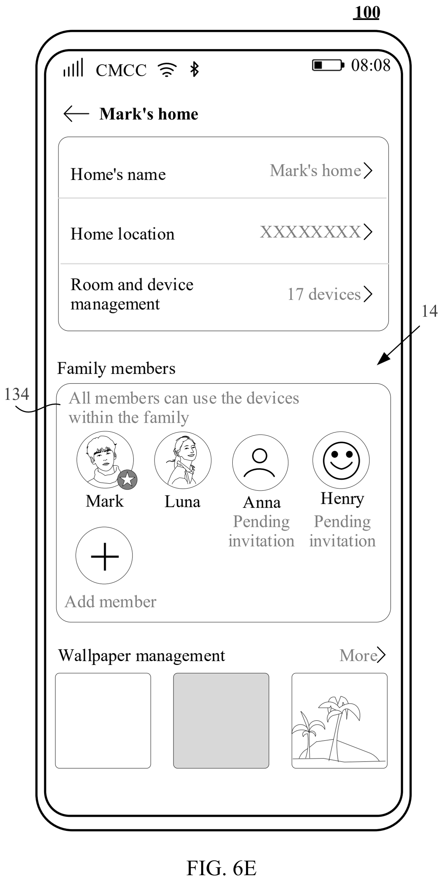

In some embodiments, as shown in FIG. 6C, when the AI Life application detects that a family member in the family sharing group does not join the family group 1 of the AI Life application, a message box 321 may be displayed on a home page 12. The message box 321 is used to recommend the family member in the family sharing group to the user, and prompt the user to add the family member in the family sharing group to "Mark's home", to share a family device in "Mark's home". As shown in FIG. 6C and FIG. 6D, the message box 321 includes a reject control 322 and an invite control 323, where the reject control 322 is used to reject an invitation. As shown in FIG. 6C and FIG. 6D, in response to an operation of tapping the invite control 323 by the user, the terminal device 100 may display a selection box 324 shown in FIG. 6B, where the selection box 324 includes accounts in the family sharing group that do not join the "family group 1" and their corresponding select controls, a reject control 325, and an invite control 326. The reject control 325 is used to reject selection of a family member from the selection box 324. As shown in FIG. 6D and FIG. 6E, after the user selects Anna and Henry by using the select controls, in response to an operation of tapping the invite control 326 by the user, the terminal device 100 displays a family detail interface 14, and displays profile pictures of Anna and Henry that are to accept the invitation in the family member box.

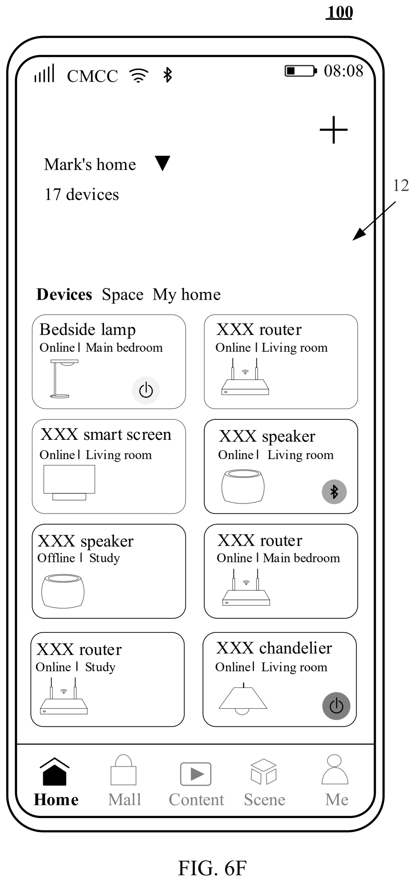

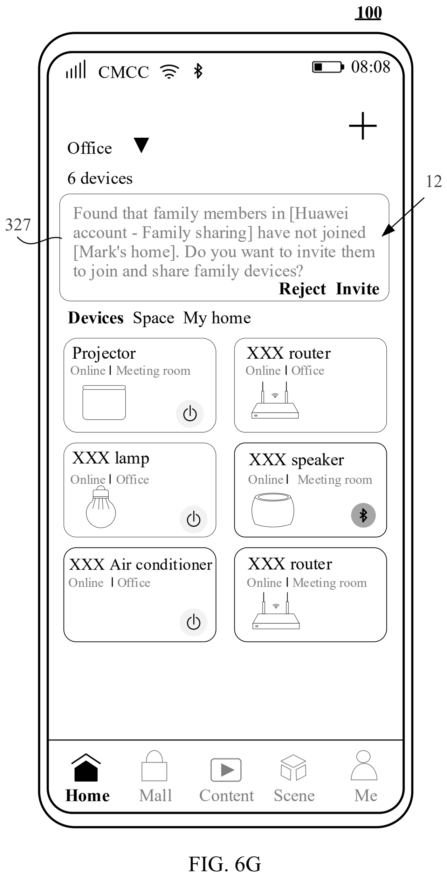

In an implementation, the message box 321 corresponds to a family group currently displayed on the home page 12. When the user taps the reject control 322, or taps the invite control 323 and then returns to the home page, the terminal device 100 stops displaying the message box 321. As shown in FIG. 6F and FIG. 6G, the user switches the family group displayed on the home page to another family group, for example, "Office". The terminal device 100 may display a message box 327 for "Office", and recommend a family member in the family sharing group for "Office". It may be understood that, stopping displaying the message box 321 for "Mark's home" does not affect displaying the message box 327 for "Office".

Interface embodiment 4: A notification center of the terminal device 100 displays a notification message to recommend the user 2, and selects the family group 1 to add the user 2.

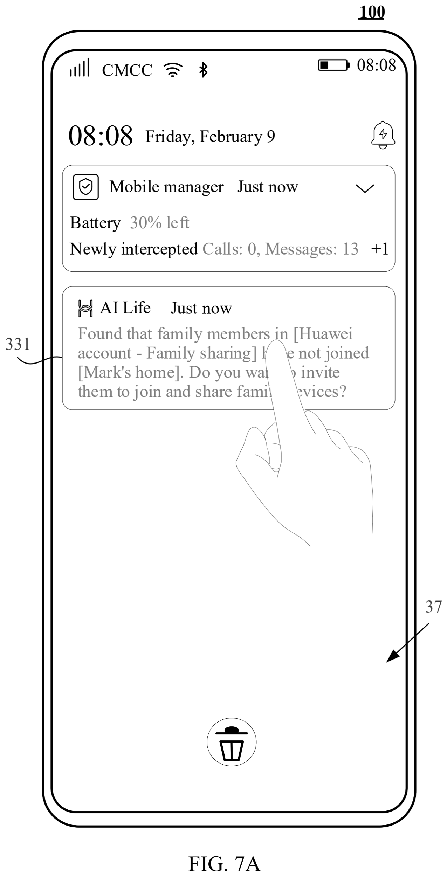

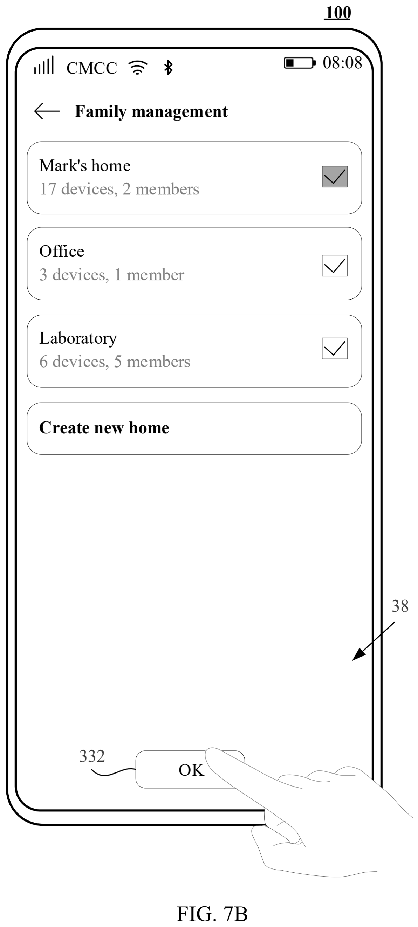

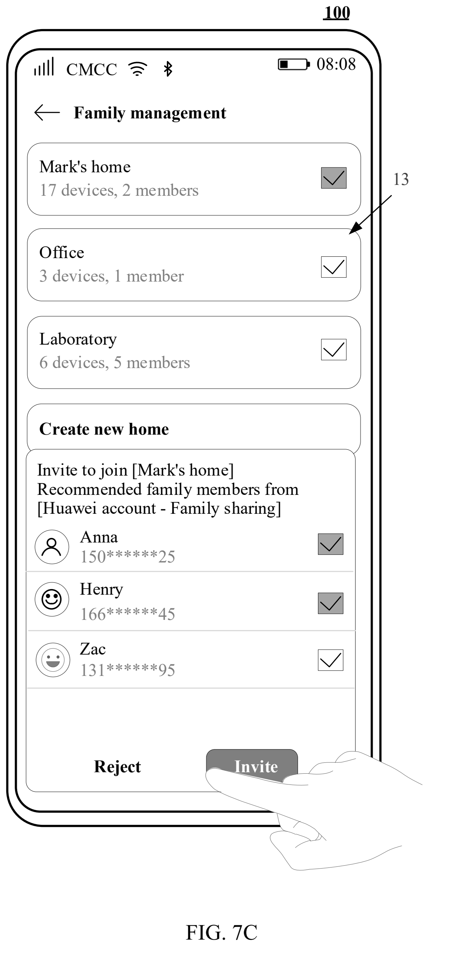

In some embodiments, as shown in FIG. 7A, when the AI Life application detects that a family member in the family sharing group does not join a family group of the AI Life application, the AI Life application may push a message 331 in a notification center 37 of the terminal device 100. The message 331 is used to recommend the family member in the family sharing group to the user, and prompt the user to add the family member in the family sharing group to the family group of the AI Life application, to share a family device in the family group. As shown in FIG. 7A and FIG. 7B, in response to an operation of tapping the message 331 by the user, the terminal device 100 may display a family management interface 38. The family management interface 38 includes options of family groups that the account 1 joins and an OK control 332. As shown in FIG. 7B and FIG. 7C, after the user selects "Mark's home", in response to an operation of tapping the confirmation control 332 by the user, the terminal device 100 may display a selection box 333, where the selection box 333 is used to display accounts from the family sharing group recommended by the AI Life application, from which the user 1 selects an account to be added to "Mark's Home." For the selection box 333, refer to related descriptions of the foregoing selection box 324, and details are not described herein again.

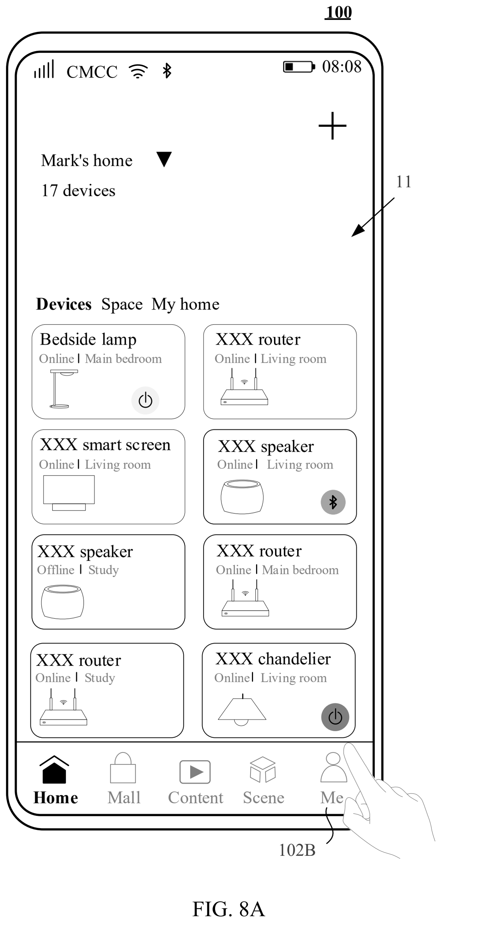

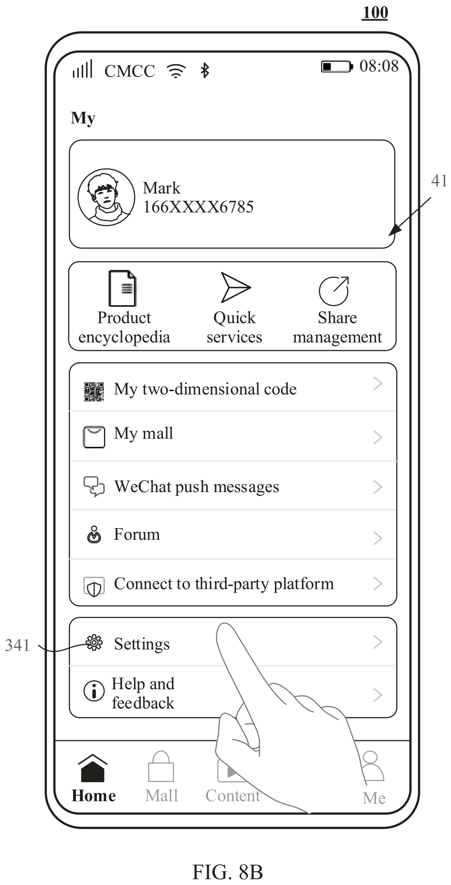

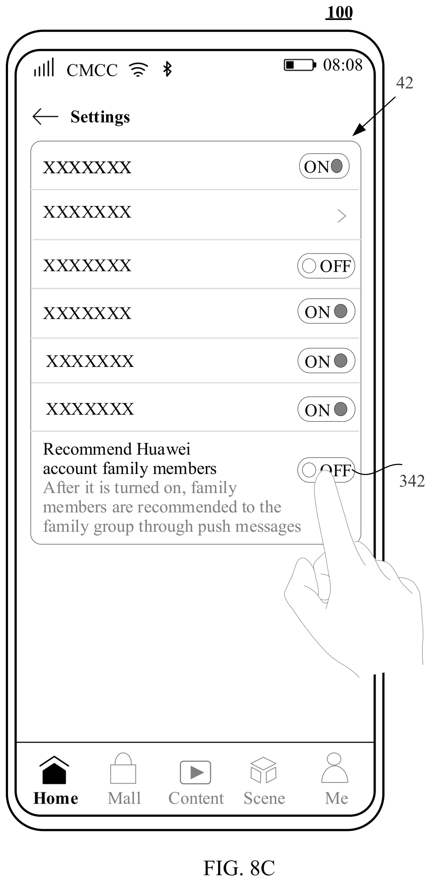

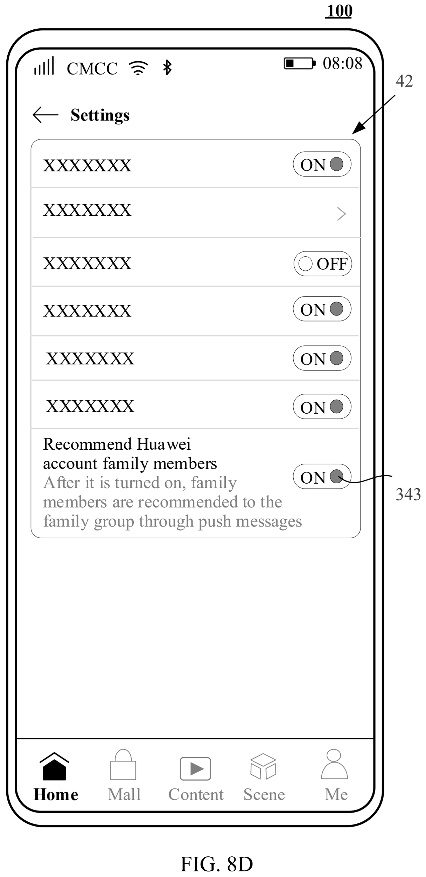

In some embodiments, in the foregoing interface embodiment 3 and interface embodiment 4, only after a family member recommendation switch is turned on, the AI Life application pushes a message on the home page 12 or the notification center 37 to recommend a family member from the family sharing group. For example, as shown in FIG. 8A and FIG. 8B, in response to an operation of tapping 102B by the user, the terminal device 100 displays a user center interface 41 of the AI Life application. As shown in FIG. 8B and FIG. 8C, in response to tapping a setting entry 341 in the user center interface 41 by the user, the terminal device 100 displays a setting interface 42. The setting interface 42 includes a switch 342 for family member recommendation, and the switch 342 has two states: on and off. As shown in FIG. 8C and FIG. 8D, in response to tapping the switch 342 by the user, the terminal device 100 switches the switch 342 from the off state to the on state.

Interface embodiment 5: Select a specific added device to share with one or more specified users outside the family group.

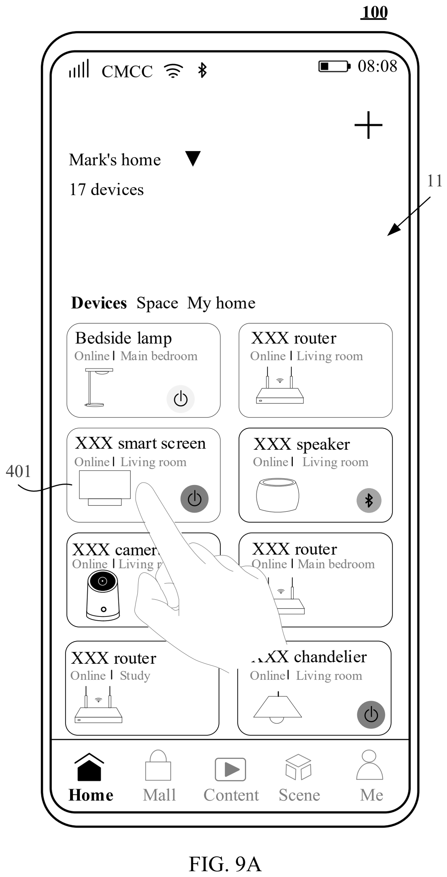

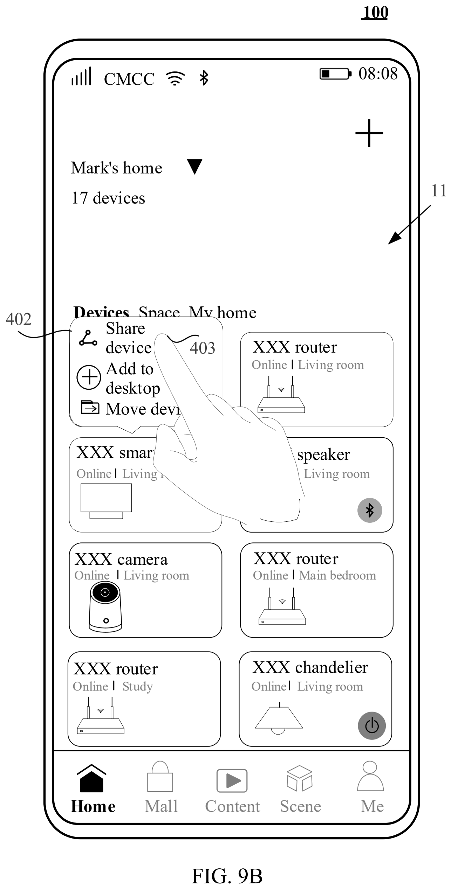

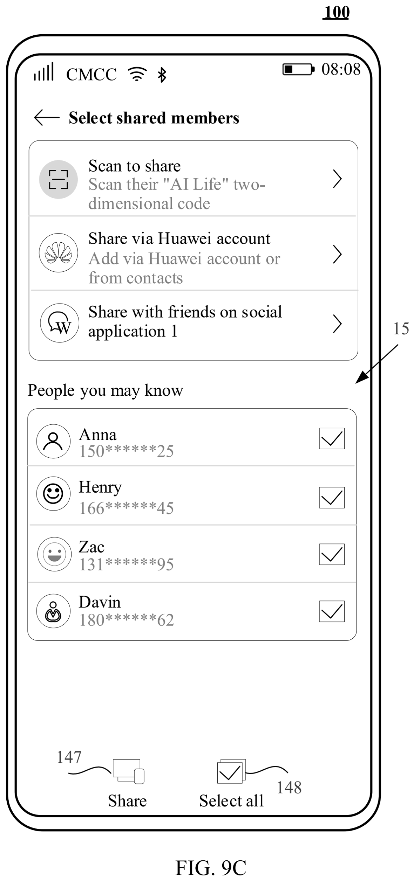

For example, as shown in FIG. 9A and FIG. 9B, the home page 12 displays a control card 401 for a "smart screen" in "Mark Home". In response to an operation of touching and holding the card 401 by the user, the terminal device 100 displays a menu box 402, where the menu box 402 includes a share device control 403. As shown in FIG. 9B and FIG. 9C, in response to tapping the share device control 403 by the user, the terminal device 100 displays a selection interface 15 of a sharing member. After one or more accounts are selected through the selection interface 15, the foregoing "smart screen" is shared with the one or more accounts. The selected account does not need to be added to the family group.

An example in which the application 1 is "System settings" is used. The following interface embodiment 6 provides another interface embodiment in which "System settings" performs device sharing.

Interface embodiment 6: A family device 1 is added on a family detail interface of the family sharing group of the account 1, and is shared with the account 2.

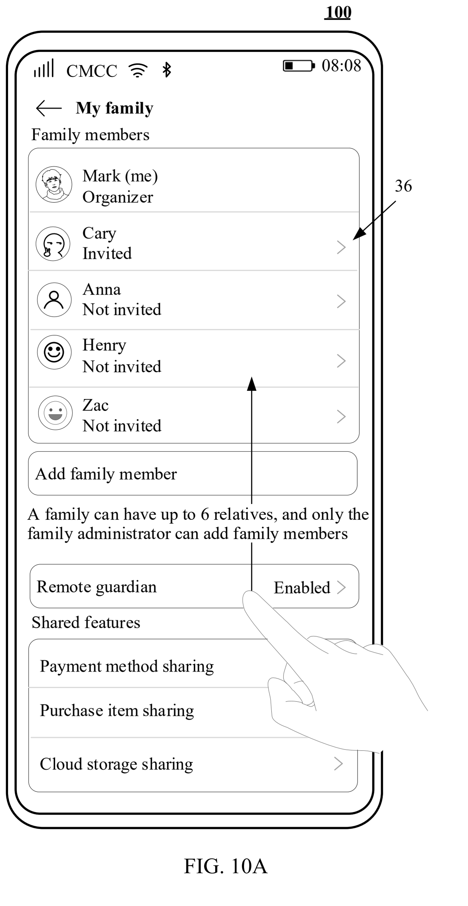

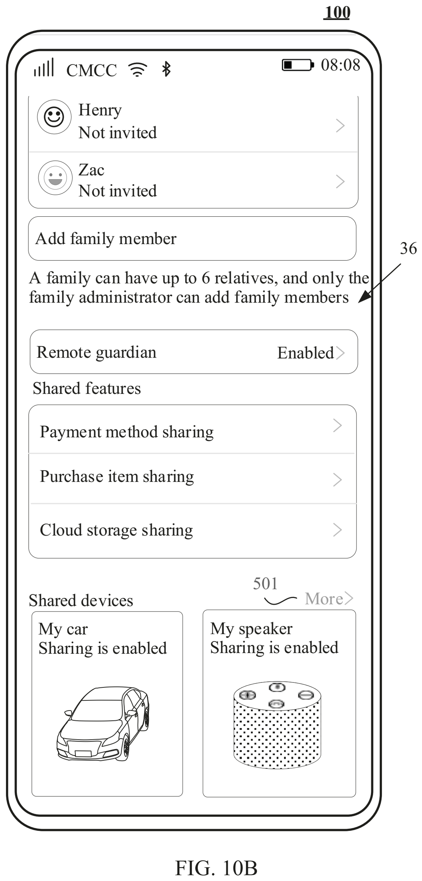

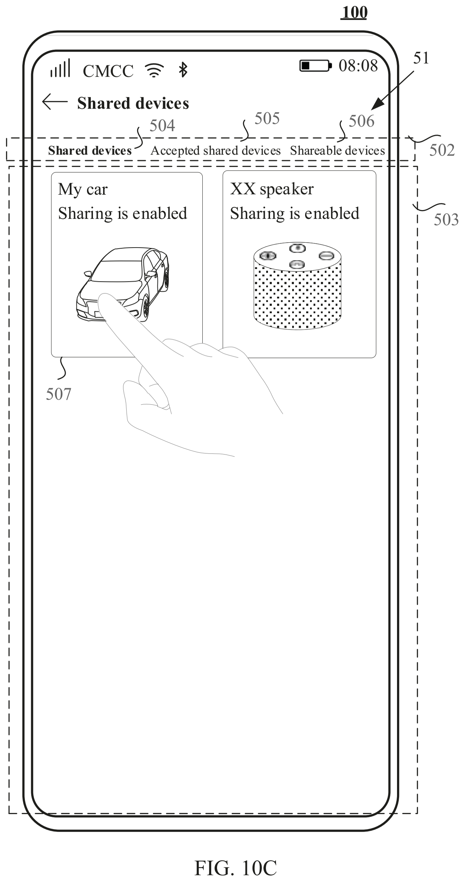

For example, as shown in FIG. 10A and FIG. 10B, in response to the user sliding up a family sharing interface 36 of a family sharing group of a Huawei account, the terminal device 100 displays more content of the family sharing interface 36, including some shared devices and a view control 501 for more shared devices. As shown in FIG. 10B and FIG. 10C, in response to an operation of tapping the view control 501 by the user, the terminal device 100 displays a shared device interface 51. The shared device interface 51 is used to display one or more of the following: a shared device that the account 1 has shared with another user, an accepted shared device that is shared by another user and that is received by the account 1, and a shareable device bound to the account 1.

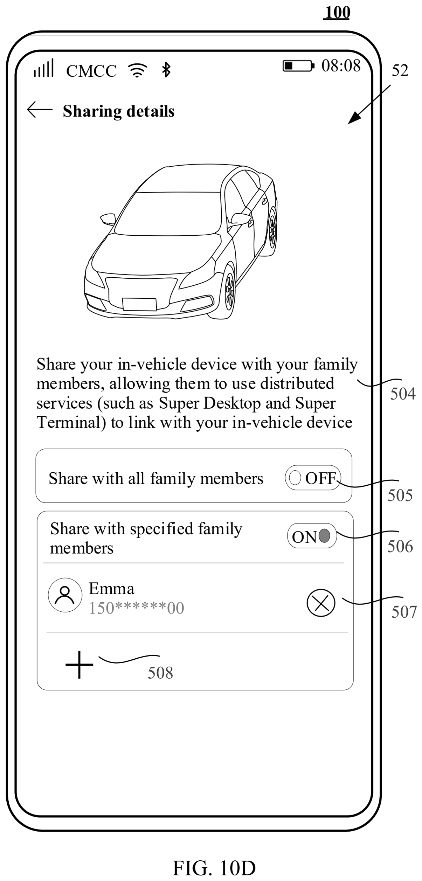

For example, as shown in FIG. 10C, the shared device interface 51 includes a navigation bar 502 and a device display area 503. The navigation bar 502 includes a shared device 504, an accepted shared device 505, and a shareable device 506. When the shared device 504 is selected, the device display area 503 is used to display a shared device that the account 1 has shared with the another user. When the accepted shared device 505 is selected, the device display area 503 is used to display a shared device that is shared by the another user and that is accepted by the account 1. When the shareable device 506 is selected, the device display area 503 is used to display a shareable device bound to the account 1. As shown in FIG. 10C and FIG. 10D, when the shared device 504 is selected, a card 507 for the in-vehicle device is displayed in the device display area 503. In response to an operation of tapping the card 507 by the user, the terminal device 100 displays a sharing detail interface 52 of the in-vehicle device.

As shown in FIG. 10D, the sharing setting interface 52 includes prompt information 504, an on/off control 505 for sharing with all family members, an on/off control 506 for sharing with a specified family member, a delete control 507 for a shared acceptor device, and an add member control 508. The prompt information 504 is used to prompt you to share your in-vehicle device with your family members, allowing your family members to use distributed services (such as Super Desktop or Super Terminal) to link with your in-vehicle device. Only one of the on/off control 505 and the on/off control 506 is in an on state, and the user may switch the on/off control between an on state and an off state. The delete control 507 is used to delete an added family member (namely, Emma) that accepts sharing of the in-vehicle device. The add member control 508 is used to add a user with whom the in-vehicle device is to be shared.

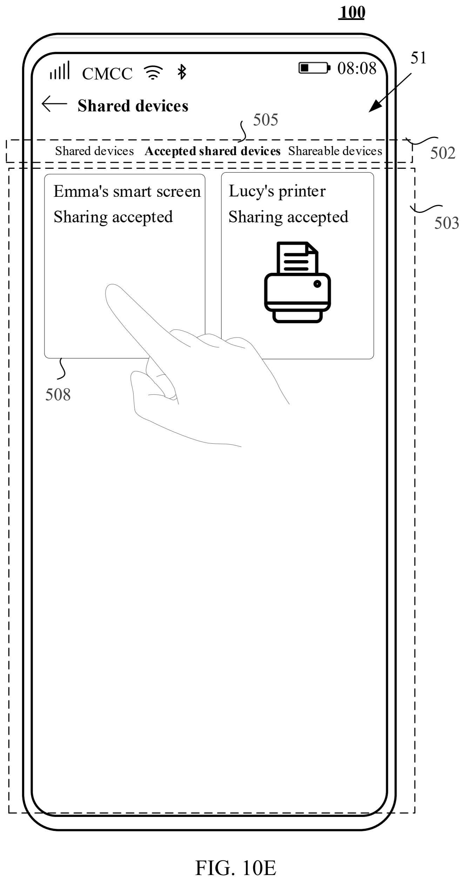

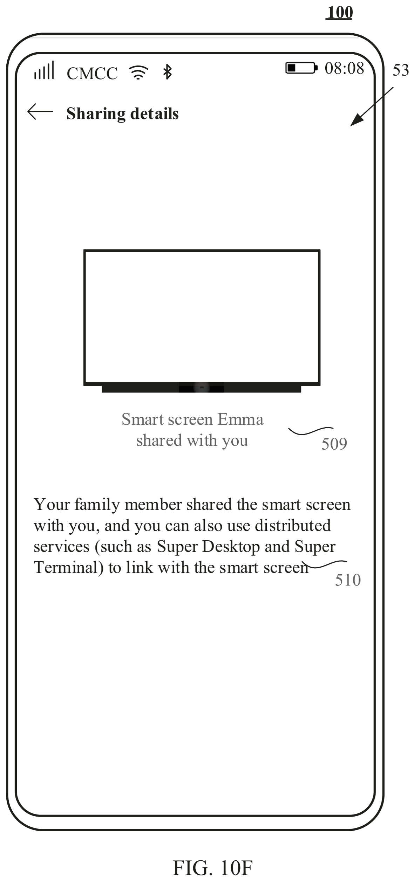

As shown in FIG. 10E and FIG. 10F, when the accepted shared device 505 is selected, a card 508 for a smart screen is displayed in the device display area 503. In response to an operation of tapping the card 508 by the user, the terminal device 100 displays a sharing detail interface 53 of the smart screen. The sharing detail interface 53 includes prompt information 509 and prompt information 510. The prompt information 509 indicates a sharer of the smart screen, that is, Emma. The prompt information 510 is used to prompt that your family member has shared the smart screen with you, and you can also use distributed services (such as Super Desktop or Super Terminal) to link with the smart screen.

In some embodiments, a chat interface of a group (for example, the foregoing family group 1/family sharing group) is set in the application 1, and each family member in the group may send, through the chat interface, a device bound to the family member, to share the device with another family member in the group.

This is not limited to the foregoing interface embodiment 1 to interface embodiment 6. The terminal device 100 may further share, with the user 2 (namely, the account 1) through another interface, a device (for example, the shared device 1) bound to the user 1 (namely, the account 1). This is not specifically limited herein.

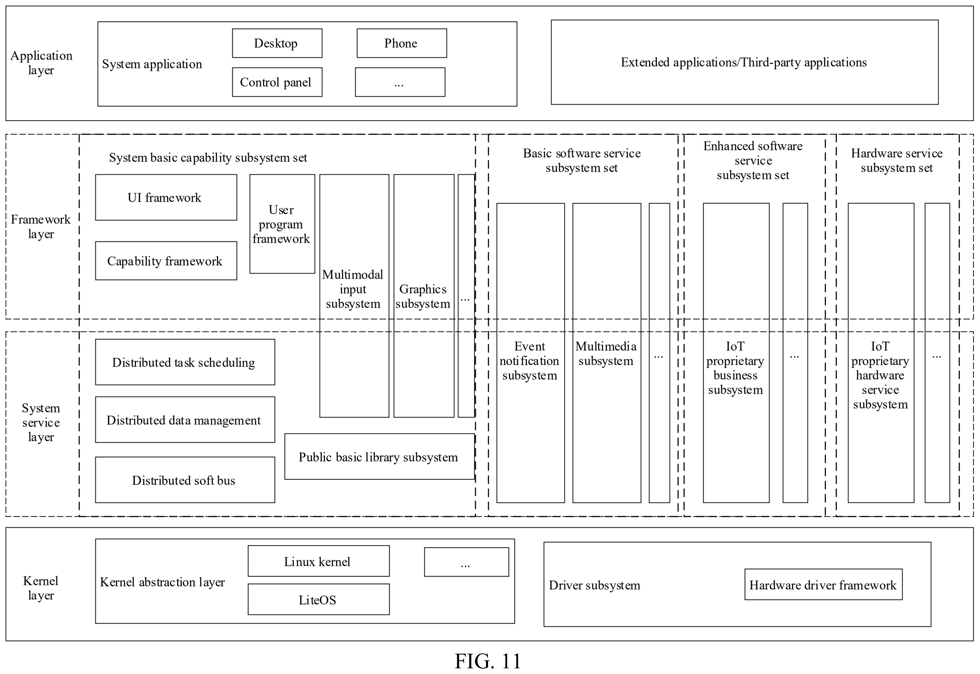

In embodiments of this application, an example embodiment of the terminal device 100 includes but is not limited to an electronic device provided with iOS^{®}, Android^{®}, Microsoft^{®}, HarmonyOS (Harmony OS), or another operating system. The following uses an example in which the operating system of the terminal device 100 is HarmonyOS for description. For example, FIG. 11 is a diagram of a software structure of the terminal device 100 according to an embodiment of this application. For a software structure of another terminal device in embodiments of this application, refer to related descriptions in FIG. 11. Details are not described herein again.

In some embodiments, HarmonyOS may be divided into four layers, including a kernel layer, a system service layer, a framework layer, and an application layer. The layers communicate with each other through a software interface.

As shown in FIG. 11, the kernel layer 240 is a layer between hardware and software. The kernel layer includes a kernel abstraction layer (Kernel Abstract Layer, KAL) and a driver subsystem. The KAL includes a plurality of kernels, such as a kernel of a Linux system, namely, a Linux kernel, and a lightweight internet of things system kernel, namely, LiteOS. The driver subsystem may include a hardware driver foundation (Hardware Driver Foundation, HDF). The hardware driver foundation can provide a unified peripheral access capability and driver development and management framework. A multi-kernel kernel layer may select a corresponding kernel for processing according to a system requirement.

The system service layer is a core capability set of HarmonyOS. The system service layer provides a service for an application through the framework layer. The layer may include the following.

A basic system capability subsystem set provides basic capabilities for a distributed application to run, schedule, and transfer on a device running HarmonyOS. The basic system capability subsystem set may include subsystems such as a distributed soft bus subsystem, a distributed data management subsystem, a distributed task scheduling subsystem, an Ark multi-language runtime subsystem, a common basic library subsystem, a multimodal input subsystem, a graphics subsystem, a security subsystem, an artificial intelligence (Artificial Intelligence, AI) subsystem, and a user program framework subsystem.

The basic software service subsystem set provides a common and universal software service for HarmonyOS. The basic software service subsystem set may include subsystems such as an event notification subsystem, a telephone subsystem, a multimedia subsystem, a design for X (Design For X, DFX) subsystem, and an MSDP&DV subsystem.

An enhanced software service subsystem set provides HarmonyOS with differentiated and capability-enhanced software services for different devices. The enhanced software service subsystem set may include a smart screen dedicated service subsystem, a wearable dedicated service subsystem, and an internet of things (Internet of Things, IoT) dedicated service subsystem.

The hardware service subsystem set provides a hardware service for HarmonyOS. The hardware service subsystem set may include subsystems such as a position service subsystem, a biometric authentication subsystem, a wearable dedicated hardware service subsystem, and an IoT dedicated hardware service subsystem.

The framework layer provides a user program framework and ability (Ability) framework for HarmonyOS application development in a plurality of languages, including Java, C, C++, and JS, two user interface (User Interface, UI) frameworks (including a Java UI framework for the Java language and a JS UI framework for the JS language), and a multi-language framework application programming interface (Application Programming Interface, API) for various software and hardware services. Supported APIs in a HarmonyOS device vary based on a degree of system componentization.

The application layer includes a system application, an extended application, and a third-party non-system application. The system application may include an application that is installed by default on an electronic device, such as a desktop, a control bar, and settings. The extended application may be a non-essential application developed and designed by a manufacturer of the electronic device, for example, an application such as a smart home app. The third-party non-system application may be developed by another vendor, but may run an application in HarmonyOS. For specific implementation of the smart home app, refer to related descriptions of the foregoing app 1.

The application of HarmonyOS consists of one or more metaprograms (Feature Ability, FA) or metaservices (ParticleAbility, PA). The FA has a UI interface and provides a capability of interacting with a user. The PA has no UI interface, but provides a capability for background task running and unified data access abstraction. The PA mainly provides support for an FA, for example, provides a computing capability as a background service, or provides a data access capability as a data warehouse. An application developed based on the FA or PA can implement a specific service function, support cross-device scheduling and distribution, and provide consistent and efficient application experience for the user.

A plurality of electronic devices running HarmonyOS can implement hardware cooperation and resource sharing through a distributed soft bus, distributed device virtualization, distributed data management, and distributed task scheduling.

It may be understood that the system architecture shown in FIG. 11 does not constitute a limitation on a system architecture of HarmonyOS. In some other embodiments, HarmonyOS 200 may have more or fewer system architecture structures than the structure shown in FIG. 11, or may be a system architecture in another form. This is not limited herein.

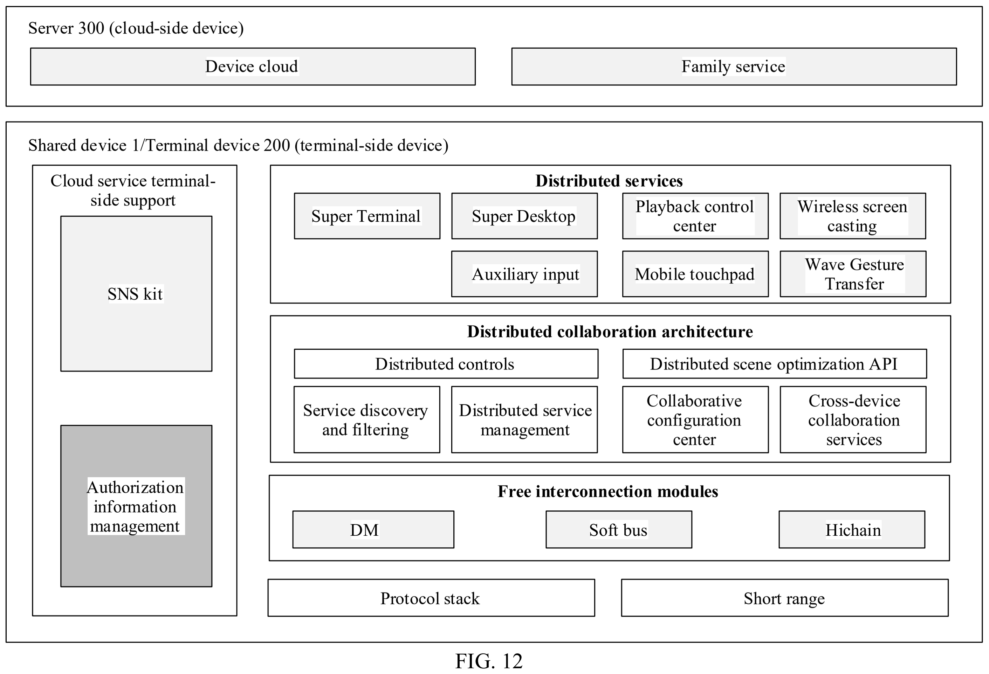

With reference to the foregoing embodiments, FIG. 12 shows a system architecture of a multi-device collaboration system according to an embodiment of this application.

As shown in FIG. 12, the multi-device collaboration system includes a cloud-side server 300 and a terminal-side device, that is, a terminal device 100, a terminal device 200, or a shared device 1.

The server 300 includes a device cloud and a family service (Family service). The device cloud is used to manage a list of devices bound to each account, send authorization information of an acceptor device (for example, user identification (User Identification, UID) of an account 2 of the acceptor device) to the shared device in a trust authorization phase, and send authorization information (for example, a unique identifier (Unique Device Identifier, UDID) of the shared device, and a UID of an account 1 (namely, an account of a sharer of the shared device) to which the shared device belongs) of the shared device to the acceptor device.

The terminal-side device includes a cloud service terminal-side support, a distributed service, a distributed collaboration architecture, a free interconnection module, a protocol stack, and a short-range communication module. The terminal-side support includes an SNS kit and an authorization information management module. The SNS kit provides friend and group services based on Huawei accounts. After the SNS kit is installed once, all basic capabilities of Huawei mobile services are available, including friend messaging, system notification numbers, and family sharing services. The authorization information management module is configured to manage the received authorization information.

The distributed service includes services such as Super Terminal, Super Desktop, screen casting, audio casting, auxiliary input, and Wave Gesture Transfer. In embodiments of this application, there may be more short-range distributed services. This is not specifically limited herein.

The distributed collaboration architecture includes a distributed control, a distributed scenario optimization API, service discovery and filtering, distributed service management, a collaborative configuration center, and a cross-device collaboration service. The distributed collaboration architecture provides support for the distributed service.

The free interconnection module includes a DM, a soft bus, and Hichain. The distributed soft bus is a communication foundation for distributed devices and provides a unified distributed communication capability for interconnection and interoperability among devices. Based on the distributed soft bus, other nearby devices can be automatically discovered and connected to form a network, that is, automatic networking. Hichain is a protocol mechanism for device interconnection security, and authenticates two devices based on authorization information of the two devices to implement end-to-end data encryption.

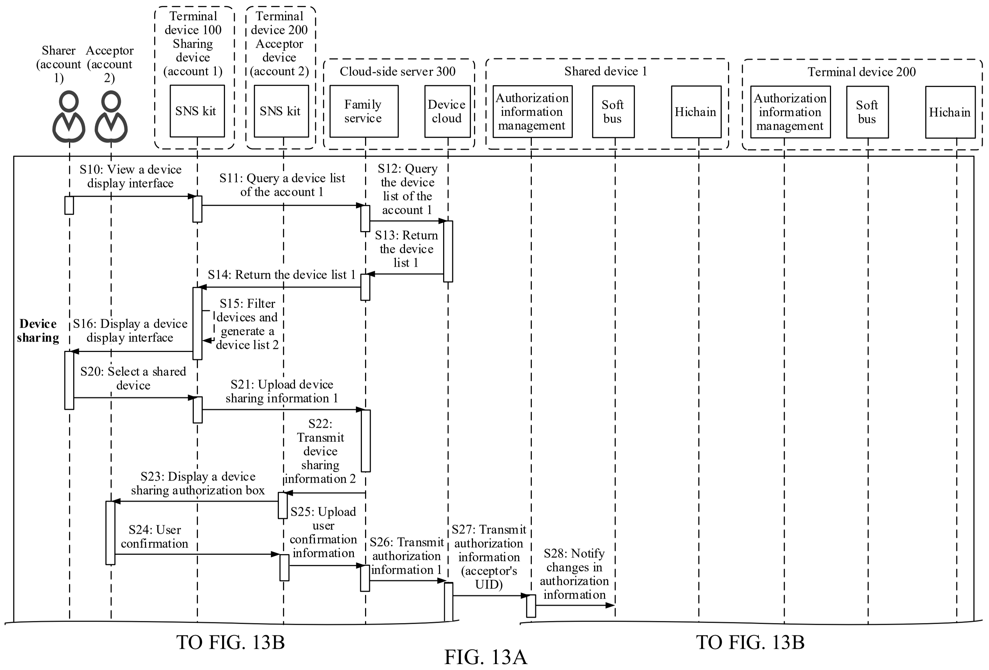

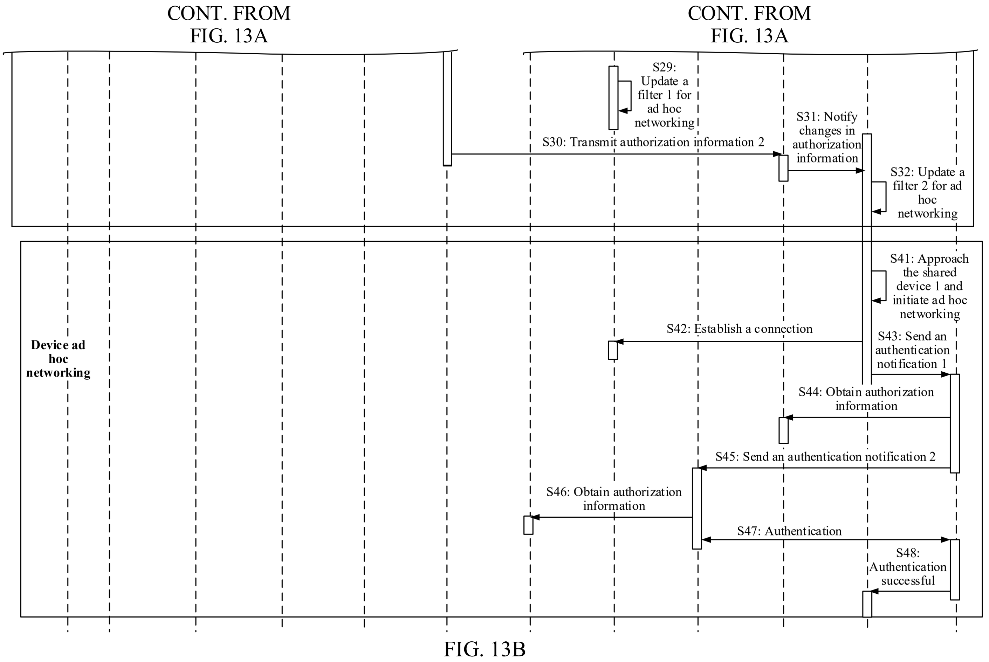

With reference to the foregoing embodiments, an embodiment of this application provides a multi-device collaboration method. For example, as shown in FIG. 13A and FIG. 13B, a method procedure of the method may include some or all of steps S10 to S48.

S10: An SNS kit of a terminal device 100 detects an input operation 1 of a user, where an account 1 has logged into the terminal device 100, the input operation 1 is used to view a device display interface of the account 1, and the device display interface is used to display a device list of shareable devices of the account 1.

In this embodiment of this application, the user logs into the account 1 on the terminal device 100, and the user 1 performs the input operation 1, to view the device display interface of the account 1 on the terminal device 100. The device display interface is used to display a device that is of the account 1 and that can be shared with another user.

In some embodiments, a detection module of the terminal device 100 detects the input operation 1 of the user, where the input operation 1 is used to view the device display interface of the account 1; and the detection module sends an instruction to the SNS kit, to instruct the SNS kit to obtain a device list of shareable devices displayed on the device display interface.

In some embodiments, the device display interface is used to display devices in a family group 1 created by the account 1. For example, refer to related descriptions in FIG. 3A to FIG. 3D. The family group 1 is "Mark's home" in an AI Life application, the device display interface is a home page 12 of the AI Life application, a family device in "Mark's home" is displayed on the home page 12, and the family device in "Mark's home" may be shared with a family member that joins "Mark's home". For example, refer to related descriptions in FIG. 10B and FIG. 10C. The account 1 is a Huawei account, the family group 1 is a family sharing group of the Huawei account in "System settings", the device display interface is a family sharing interface 36 or a shared device interface 51 in "System settings", and the family sharing interface 36 and the shared device interface 51 display a shareable family device bound to the account 1.

In some embodiments, in response to the input operation 1 of the user, the SNS kit of the terminal device 100 obtains the device list displayed on the device display interface. Specifically, steps S11 to S15 may be included.

S11: The SNS kit of the terminal device 100 sends a request 1 to a family service of a server 300, to request to query a device list 1 of the account 1.

S12: The family service of the server 300 requests a device cloud of the server 300 to send the request 1, to query the device list 1 of the account 1.

In this embodiment of this application, the device cloud of the server 300 is used to store and manage a device bound to each account.

S13: The device cloud of the server 300 returns the device list 1 to the family service of the server 300.

S14: The family service of the server 300 returns the device list 1 to the SNS kit of the terminal device 100.

S15: The SNS kit of the terminal device 100 filters shareable devices in the device list 1 to generate a device list 2.

In some embodiments, the SNS kit of the terminal device 100 obtains, from the device list through filtering, a device that supports a distributed service 1 (for example, Super Terminal), and uses the device as a shared device that can be shared with a terminal device 200. In some embodiments, the terminal device 100 shares only some devices bound to the account 1 as shareable devices with another account, and the SNS kit of the terminal device 100 obtains, through filtering, the shareable devices from the device list 1 according to a preset rule.

S16: The SNS kit of the terminal device 100 triggers the terminal device 100 to display a device display interface, where the device display interface displays a device in the device list 2, and the user 1 may view the device through the device display interface.

Step S15 is optional. The SNS kit of the terminal device 100 does not need to filter the device list 1, and the device display interface directly displays all devices in the device list 1.

In some embodiments, after viewing the device display interface, the user selects some or all devices (for example, a shared device 1) from the device list 2 displayed on the device display interface, and shares the selected devices with an account 2. The terminal device 100 indicates, by using the server 300, the shared device 1 and the terminal device 200 to complete trust authorization. After trust authorization is completed, the shared device 1 stores authorization information of the terminal device 200, and the terminal device 200 stores authorization information of the shared device 1. Specifically, the account 1 shares the shared device 1 with the account 2, and the shared device 1 and the terminal device 200 that the account 2 has logged into complete trust authorization, which may include steps S20 to S29.

S20: The SNS kit of the terminal device 100 detects an input operation 2 of the user, where the input operation 2 is used to select a shared device (for example, the shared device 1) from devices displayed on the device display interface for sharing.

In some embodiments, the detection module of the terminal device 100 detects the input operation 2 of the user, where the input operation 2 is used to select the shared device for sharing and an acceptor device; and the detection module sends an instruction to the SNS kit, to instruct the SNS kit to determine the shared device for sharing and the acceptor device.

In some embodiments, after the input operation 2 selects the shared device for sharing and the acceptor device, in response to the input operation 2, the terminal device 100 instructs, by using the server 300, the shared device 1 and the terminal device 200 to complete trust authorization. Specifically, steps S21 to S29 may be included.

In this embodiment of this application, the terminal device 100 that the account 1 has logged into shares the shared device 1 with the terminal device 200 that the account 2 has logged into. The account 1 is an owner and sharer of the shared device 1, the terminal device 100 is a sharing device of the shared device 1, the account 2 is an acceptor of the shared device 1, and the terminal device 200 is an acceptor device of the shared device 1.

S21: An SNS kit of the terminal device 100 uploads device sharing information 1 to the family service of the server 300, where the device sharing information 1 includes a device identifier (UDID) of the shared device 1, a UID of a sharer (namely, the account 1 of the terminal device 100) of the shared device 1, and a UID of an acceptor (for example, the account 2 logging into the terminal device 200) of the shared device 1.

In some embodiments, the account 1 shares the shared device 1 with a plurality of accounts, acceptors of the shared device 1 include the plurality of accounts (for example, the account 2), the device sharing information 1 includes a UID list of the acceptors, and the UID list includes UIDs respectively corresponding to the plurality of accounts. In an implementation, the family group 1 created by the account 1 of the terminal device 100 includes a plurality of family members. When the shared device 1 is added to the family group 1, the account 1 shares the shared device 1 with some or all of the plurality of family members.

In some embodiments, the account 1 shares a plurality of shared devices (for example, the shared device 1) with the account 2, the device sharing information 1 includes a UDID list of the plurality of shared devices, and the UDID list includes UDIDs respectively corresponding to the plurality of shared devices. In an implementation, the family group 1 created by the account 1 of the terminal device 100 includes a plurality of sharable family devices. When the user 1 adds the account 2 to the family group 1, the account 1 shares the plurality of family devices with the account 2.

S22: The family service of the server 300 sends device sharing information 2 for the account 2 to the SNS kit of the terminal device 200. The device sharing information 2 includes a device identifier (UDID) of the shared device 1, a UID of a sharer (namely, the account 1 logging into the terminal device 200) of the shared device 1, and a UID of an acceptor (namely, the account 2 logging into the terminal device 200) of the shared device 1.

The family service of the server 300 obtains the device sharing information 2 for the account 2 based on the device sharing information 1. The device sharing information 2 includes a UDID list of one or more shared devices selected by the user, a UID of a sharer (namely, the account 1 logging into the terminal device 200) of the shared device 1, and a UID of an acceptor (namely, the account 2) of the shared device 1.

S23: Based on the device sharing information 2, the SNS kit of the terminal device 200 triggers the terminal device 200 to display a device sharing authorization box, where the device sharing authorization box indicates whether to accept a shared device shared by the account 1.

S24: After the user confirms to accept the shared device shared by the account 1, the SNS kit of the terminal device 200 detects a confirmation operation of the user.

In response to the confirmation operation of the user, the SNS kit of the terminal device 200 determines to complete trust authorization with the shared device 1 by using the server 300. Specifically, steps S25 to S29 may be included.

S25: An SNS kit of the terminal device 200 uploads user confirmation information to the family service of the server 300, where the user confirmation information indicates that the account 2 confirms to accept sharing of the account 1.

In some embodiments, the user confirmation information includes a UDID list 2 of a shared device (for example, the shared device 1) accepted by the user and a UID of a sharer (namely, the account 1 logging into the terminal device 200) of the shared device. The user confirmation information indicates that the user 2 confirms to accept the shared device that is indicated by the UDID list 2 and that is shared by the account 1.

In some embodiments, the SNS kit of the terminal device 200 displays a device sharing authorization box for each shared device indicated by the UDID list; and the user 2 (namely, the account 2) confirms, for the sharing authorization box of each shared device, whether to accept sharing. For each shared device (for example, the shared device 1) that confirms acceptance, the SNS kit of the terminal device 200 separately uploads user confirmation information to the family service of the server 300. The user confirmation information indicates that the account 2 confirms to accept the shared device 1 shared by the account 1, and the user confirmation information includes a UDID of the shared device 1 and a UID of a sharer (namely, the account 1) of the shared device 1.

In some embodiments, the family service of the server 300 generates a sharing task 1 based on the device sharing information 2. When transmitting the device sharing information 2 to the SNS kit of the terminal device 200, the family service of the server 300 further transmits a task identifier of the sharing task 1. In step S25, the user confirmation information includes the task identifier of the sharing task 1 and the UDID of the shared device 1, and the user confirmation information indicates that the user 2 confirms to accept the shared device 1 in the sharing task indicated by the task identifier.

In an implementation, for each acceptor that accepts sharing in the UID list of the acceptors, the family service of the server 300 obtains user confirmation information uploaded by the acceptor.

S26: The family service of the server 300 transmits authorization information 1 to the device cloud of the server 300, where the authorization information 1 includes, for each acceptor that accepts sharing, a UDID list of an accepted shared device (for example, the shared device 1), a UID of a sharer (namely, the account 1) of the shared device, and a UID of an acceptor (namely, the account 2) of the shared device.

After obtaining the authorization information 1, the device cloud of the server 300 indicates the shared device 1 to execute trust-related operations through steps S27 to S29, and indicates the terminal device 200 to execute trust-related operations through steps S30 to S32. An execution sequence of steps S27 and S29 is not specifically limited in this embodiment of this application.

S27: The device cloud of the server 300 transmits authorization information 2 of an acceptor to an authorization information management module of the shared device 1, where the authorization information 2 of the acceptor includes a UID of the account 2, and the authorization information 2 indicates that the account 2 accepts the shared device 1 shared by the account 1.

It may be understood that the shared device 1 stores authorization information 2 of all acceptors (for example, the account 2 of the terminal device 200) that accept the shared device 1.

S28: The authorization information management module of the shared device 1 sends a notification message to a soft bus, to notify that the authorization information of the acceptor is changed, that is, authorization information of the account 2 is added.

S29: The soft bus of the shared device 1 updates a filter for ad hoc networking based on changed authorization information of the acceptor device, including configuring a filter 1 of a short-range communication module 1 based on the newly added authorization information of the account 2, where the filter 1 is used to obtain, through filtering, a message that is sent by the short-range communication module 1 and that is from the account 2.

S30: The device cloud of the server 300 transmits authorization information 3 of the shared device 1 to an authorization information management module of the terminal device 200, where the authorization information 3 of the shared device 1 includes a UDID of the shared device 1 and a UID of an account (namely, the account 1) to which the shared device 1 belongs.

In some embodiments, the authorization information 3 includes a UDID list of a plurality of shared devices accepted by the account 2, and the plurality of shared devices 1.

It may be understood that the terminal device 200 that the account 2 has logged into stores authorization information 2 of each shared device accepted by the account 2, and the shared device 1 stores authorization information 3 of an acceptor of the shared device, to be used for subsequent ad hoc networking between the terminal device 200 and the shared device 1.

S31: The authorization information management module of the terminal device 200 sends a notification message to a soft bus, to notify that the authorization information of the shared device is changed, including addition of the authorization information of the shared device 1.

S32: The soft bus of the terminal device 200 updates a filter for ad hoc networking based on changed authorization information of the shared device 1, including configuring a filter 2 of the short-range communication module 1 based on the newly added authorization information of the shared device 1, where the filter 2 is used to obtain, through filtering, a message that is sent by the short-range communication module 1 and that is from the shared device 1.

In this embodiment of this application, after step S32, the shared device 1 and the terminal device 200 complete trust authorization. When the terminal device 200 approaches the shared device 1, the two devices may be automatically connected and authenticated, to perform ad hoc networking. Specifically, steps S41 to S48 may be included.

S41: When the terminal device 200 approaches the shared device 1, the soft bus of the terminal device 200 initiates ad hoc networking based on the filter 2.

S42: Based on the filter 1 and the filter 2, the soft bus of the terminal device 200 establishes a short-range communication connection to the soft bus of the shared device 1.

In some embodiments, when starting the distributed service 1, the terminal device 200 may turn on the short-range communication module 1 to scan a nearby device. When detecting a message from the shared device 1, the filter 2 of the short-range communication module 1 may establish a short-range communication connection to the shared device 1, and complete authentication based on authorization information of both parties. In an implementation, when the terminal device 200 starts the distributed service 1, the short-range communication module 1 broadcasts a discovery signal (for example, a beacon frame (beacon)). The discovery signal carries the UID of the account 2. After scanning the discovery signal, the short-range communication module 1 of the shared device 1 determines that the discovery signal matches the filter 1, that is, a UID of the account 2 set by the filter 1 is the same as a UID carried in the discovery signal. In this case, it is determined that the terminal device 200 is a trusted device, and a connection request is sent to the terminal device 200. The connection request includes a UDID of the shared device 1 and a UID of a sharer (namely, the account 1). After receiving the connection request, the short-range communication module 1 of the terminal device 200 determines that a signal in the connection request matches the filter 2, that is, a UDID of the shared device 1 set by the filter 2 is the same as a UDID carried in the connection request, and a set UID of an account of a sharer is the same as a UID carried in the connection request. In this case, it is determined that the shared device 1 is a trusted device, and a connection response is sent to the terminal device 200. Based on the connection response, the terminal device 200 establishes a connection to the short-range communication module 1 of the shared device 1.

In some embodiments, the shared device 1 may also actively start the distributed service 1. When starting the distributed service 1, the shared device 1 may turn on the short-range communication module 1 to scan a nearby device. When detecting a message from the account 2, the filter 1 of the short-range communication module 1 may establish a short-range communication connection to the terminal device 200 that the account 2 has logged into. In an implementation, when the shared device 1 starts the distributed service 1, the short-range communication module 1 broadcasts a discovery signal (for example, a beacon frame (beacon)). The discovery signal carries the UDID of the shared device 1 and a UID of a sharer (namely, the account 1). After scanning the discovery signal, the short-range communication module 1 of the terminal device 200 determines that the discovery signal matches the filter 2, that is, a UDID of the shared device 1 set by the filter 2 is the same as a UDID carried in the discovery signal, a set UID of an account of a sharer is the same as a UID carried in the connection request, and a set UID of an account of a sharer is the same as a UID carried in the discovery signal. In this case, it is determined that the shared device 1 is a trusted device, and the connection request is sent to the shared device 1. The connection request includes the UID of the account 2 of the terminal device 200. After receiving the connection request, the short-range communication module 1 of the shared device 1 determines that a signal in the connection request matches the filter 1, that is, a UID of the account 2 set by the filter 1 is the same as the UID carried in the connection request. In this case, it is determined that the terminal device 200 is a trusted device, and a connection response is sent to the terminal device 200. Based on the connection response, the terminal device 200 establishes a connection to the short-range communication module 1 of the shared device 1.

S43: The soft bus of the terminal device 200 sends an authentication notification 1 to Hichain of the terminal device 200, to indicate to initiate device authentication with the shared device 1.

S44: Hichain of the terminal device 200 obtains authorization information of the shared device 1 from the authorization information management module of the terminal device 200 based on the authentication notification 1.

S45: Hichain of the terminal device 200 sends an authentication notification 2 to Hichain of the shared device 1, to indicate to initiate device authentication with the terminal device 200.

S46: Hichain of the shared device 1 obtains authorization information of the account 1 from the authorization information management module of the shared device 1 based on the authentication notification 2.

S47: Hichain of the shared device 1 and Hichain of the terminal device 200 perform authentication based on the authorization information of the shared device 1 and the authorization information of the account 1.

In some embodiments, Hichain of the shared device 1 and Hichain of the terminal device 200 perform authentication to obtain a key pair. The key pair is used to derive an encryption key for subsequent communication between the two devices, thereby implementing secure communication.

S48: After the authentication is completed, Hichain of the terminal device 200 sends authentication success information to the soft bus, to indicate that the shared device 1 and the terminal device 200 have completed authentication.

It should be noted that, when a plurality of devices of a same account come into proximity, automatic connection and authentication are performed, that is, perform ad hoc networking. Upon successful ad hoc networking, the devices of the same account can collaborate in implementing distributed services. Two devices of different accounts cannot perform ad hoc networking, and therefore cannot collaboratively implement distributed services. However, in this embodiment of this application, the terminal device 100 shares the shared device 1 bound to the account 1 with the account 2, and indicates the shared device 1 and the terminal device 200 that the account 2 has logged into to obtain authorization information of each other and update filters based on the authorization information of each other, so that the shared device 1 and the terminal device 200 have a trusted relationship. To be specific, upon proximity, the two devices can automatically establish a short-range connection and perform authentication to complete automatic networking. In this way, the shared device 1 and the terminal device 200 that are not of a same account can also collaborate in implementing distributed services.

With reference to the foregoing embodiments, by using Bluetooth as an example of a short-range communication technology 1, the following describes a distributed service to which this embodiment of this application is applied.

### Distributed service: Super Terminal

In some embodiments, an electronic device set formed by a controlling device (for example, the terminal device 100) and a device (for example, a smart screen, an in-vehicle device, or a speaker) bound to the controlling device may be considered as a distributed collaborative virtual super terminal. The controlling device may schedule other devices in Super Terminal to perform task coordination, task transfer, and task continuation.

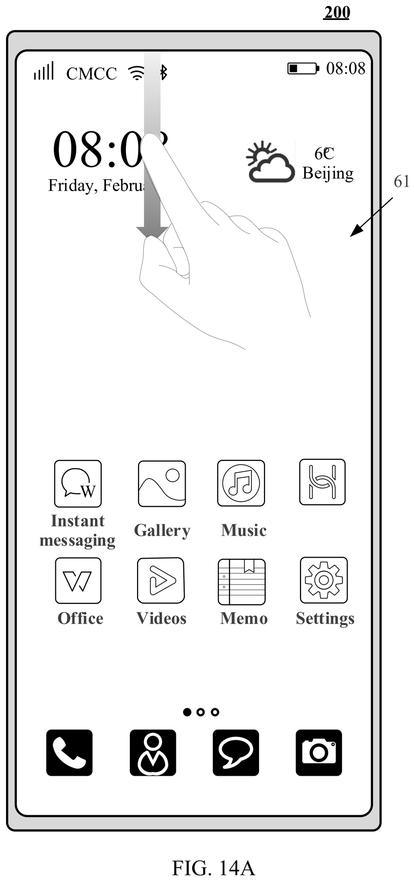

For example, the shared device 1 is an in-vehicle device. FIG. 14A to FIG. 14C show related user interfaces for Super Terminal.

Refer to steps S41 to S48. After the terminal device 100 shares the in-vehicle device bound to the account 1 with the account 2, when the terminal device 200 that the account 2 has logged into approaches the in-vehicle device, the terminal device 200 may establish a short-range communication connection to the in-vehicle device, to complete ad hoc networking.

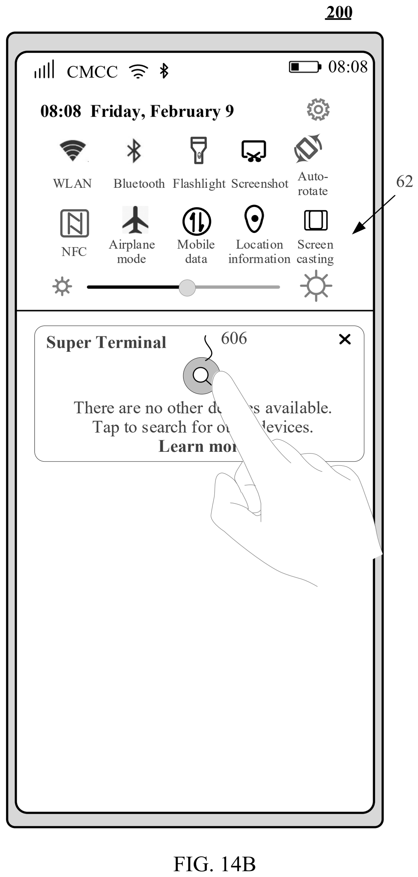

As shown in FIG. 14A, when displaying a main interface 62, the terminal device 200 receives a slide-down operation performed by the user on a status bar. In response to the slide-down operation, the terminal device 200 displays a control center interface 62 as shown in FIG. 14B. The control center interface 62 includes shortcut icons (such as a WLAN icon, a Bluetooth icon, and an NFC icon) of a plurality of common functions.

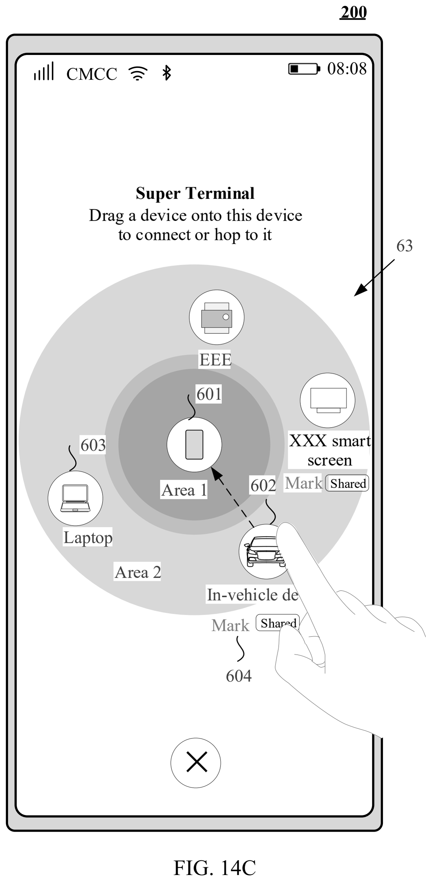

As shown in FIG. 14B, the control center interface 52 may further include a card for Super Terminal, and a control 606 is displayed in the card. In some embodiments, as shown in FIG. 14B and FIG. 14C, in response to an operation of tapping the control 606, the terminal device 200 displays a super terminal interface 63. The super terminal interface 63 includes an icon 601 of the terminal device 200 and detected icons of trusted devices, for example, an icon 603 of a notebook computer and an icon 602 of an in-vehicle device. A manner of opening the super terminal interface 63 is not specifically limited in this embodiment of this application. An opening manner shown in FIG. 14A to FIG. 14C is merely an example.

In some embodiments, the trusted device is a device currently networked with the terminal device 200, that is, a device that establishes a short-range communication connection to the terminal device 200 and completes authentication. The trusted device may be a device (for example, the foregoing notebook computer) that has a same account as the terminal device 200, or a shared device (for example, the foregoing in-vehicle device) that establishes a trusted relationship with the terminal device 200.

In this embodiment of this application, after detecting the trusted device, the terminal device 200 queries an authorization information management module. The authorization information management module stores a device identifier (for example, a UDID) of a shared device shared by another account. As shown in FIG. 14C, if the device identifier of the shared device stored in the authorization information management module includes a device identifier of the in-vehicle device, the terminal device 200 determines that the in-vehicle device belongs to the shared device, and displays a shared identifier 605 on/around the icon 602 of the in-vehicle device, to indicate that the in-vehicle device is a shared device shared by another user. The authorization information management module further stores account information (for example, a user name, a profile picture, an account, and a family group to which the shared device belongs) of an account (namely, the account 1) to which the shared device (for example, the in-vehicle device) belongs. The account information of the account 1 may be displayed on/around the icon 603 of the in-vehicle device based on the account information of the account 1 to which the in-vehicle device belongs. For example, as shown in FIG. 14C, a user name 604, namely, "Mark", of the account 1 is displayed around the icon 603 of the in-vehicle device, to indicate that the in-vehicle device is a device shared by the user "Mark".

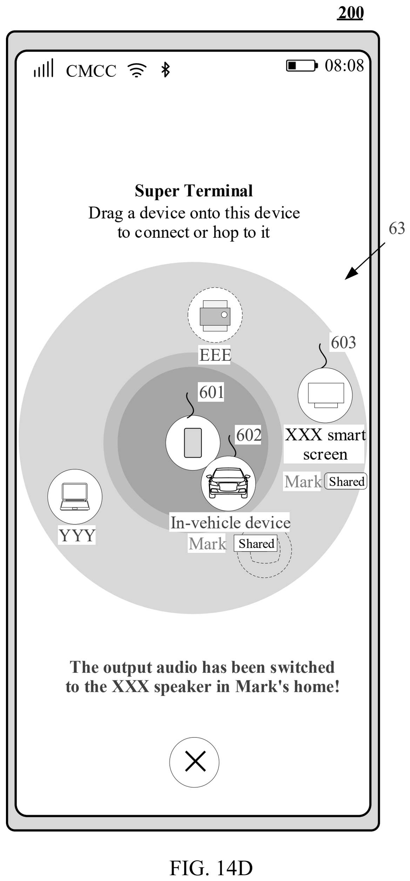

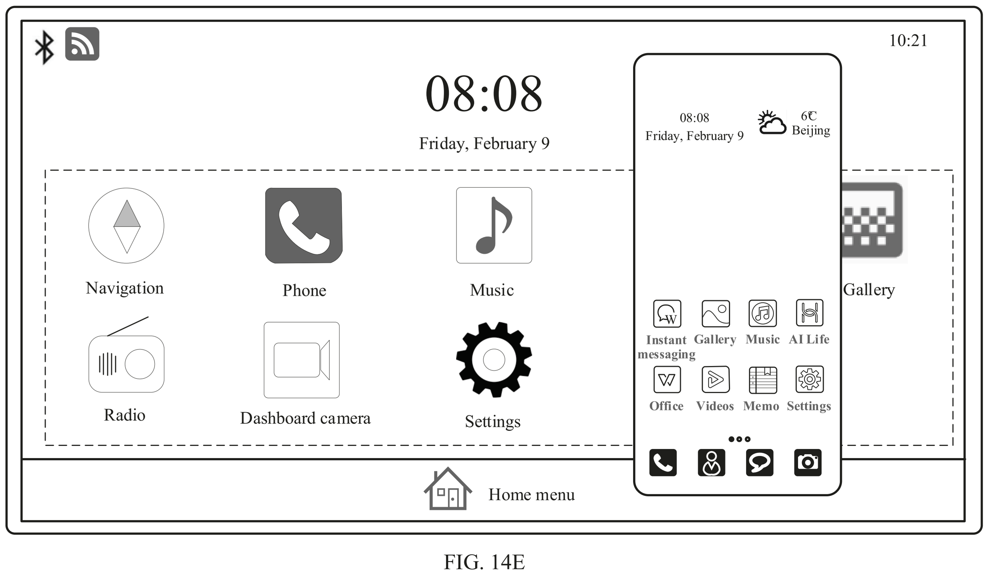

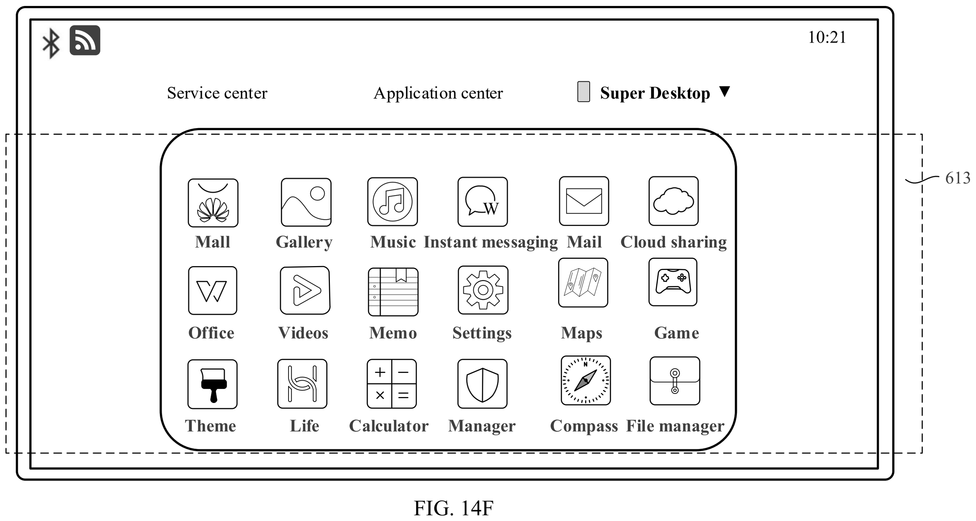

For example, as shown in FIG. 14C and FIG. 14D, when it is detected that the icon 602 of the in-vehicle device is dragged to an area in which the icon 601 of the terminal device 200 is located. In an implementation, in response to the dragging operation, the terminal device 200 sends screen-casting data (for example, a displayed image of the terminal device 200) to the in-vehicle device through the short-range communication connection. As shown in FIG. 14E, the in-vehicle device displays the displayed image of the terminal device 200 in a screen-casting window based on the screen-casting data. In an implementation, in response to the dragging operation, the terminal device 200 sends application data of Super Desktop to the in-vehicle device through the short-range communication connection. As shown in FIG. 14F, the in-vehicle device displays, in a display area 613 of a user interface 71 based on the application data, icons of applications installed on the terminal device 200. In this way, the in-vehicle device and the terminal device 200 that are not of a same account may also collaborate in implementing a short-range-based distributed service. A single sharing operation may be performed between devices of different accounts, to implement long-term and efficient experience of Super Terminal.

It may be understood that, according to the conventional technology, the account 1 is bound to the in-vehicle device, while the terminal device 200 that the account 2 has logged into is not bound to the in-vehicle device. Therefore, the in-vehicle device and the terminal device 200 are not devices of a same account. When the terminal device 200 approaches the in-vehicle device, the two devices cannot automatically establish a connection, and cannot collaborate in implementing a distributed service of Super Terminal.

### Distributed service: Super Desktop

In some embodiments, Super Desktop may be understood as follows: If a desktop application of another device (for example, the shared device 1) may be viewed and used on a device (for example, the terminal device 200), a function of Super Desktop is implemented on the device.

For example, as shown in FIG. 14D and FIG. 14F, when the terminal device 200 approaches the in-vehicle device, an application of the terminal device 200 may be transferred to the in-vehicle device for running through Super Terminal on the terminal device 200, and a desktop application of the terminal device 200 is viewed and used on the in-vehicle device.

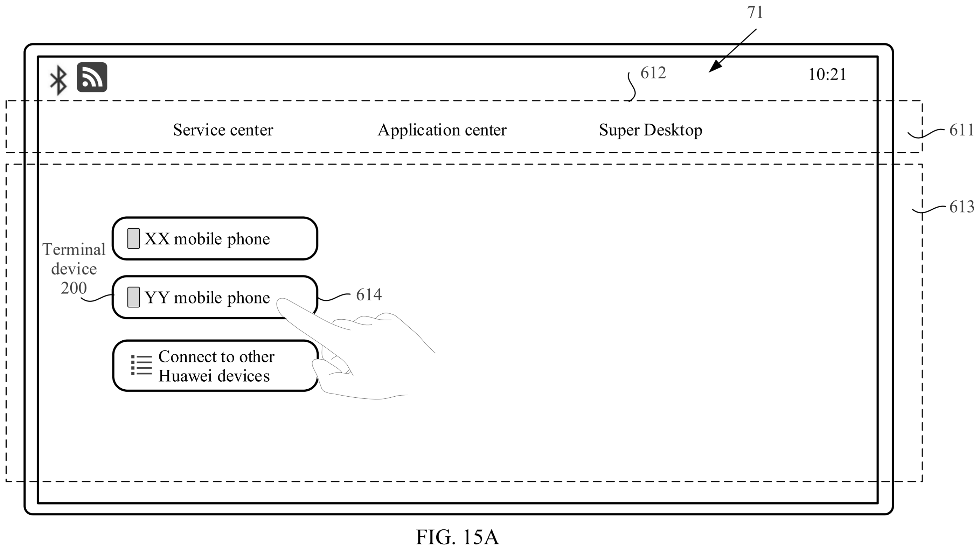

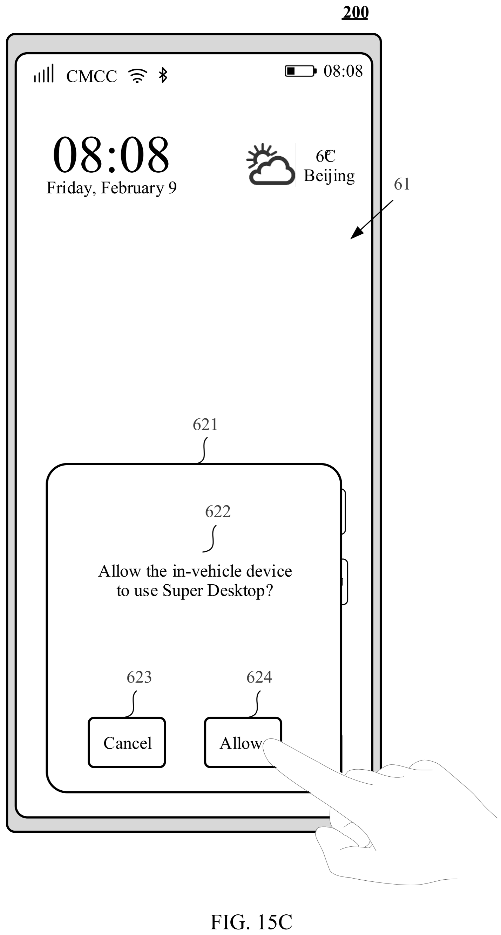

For example, the shared device 1 is an in-vehicle device. FIG. 15A to FIG. 15C show related user interfaces of another example of Super Desktop.

For example, as shown in FIG. 15A, a user interface 71 of the in-vehicle device includes a navigation bar 611, and the navigation bar 611 includes an option 612 for Super Desktop. When the option 612 for Super Desktop is selected, a display area 613 of the user interface 71 is used to display Super Desktop.

In some embodiments, when detecting an input operation for triggering Super Desktop, the in-vehicle device displays the user interface 71 shown in FIG. 15A, detects a nearby trusted device, and displays, in the display area 613 of the user interface 71, one or more detected trusted devices, for example, a device option 614 for the terminal device 200. The user may select one device from the foregoing one or more trusted devices, and view Super Desktop of the device on the in-vehicle device.

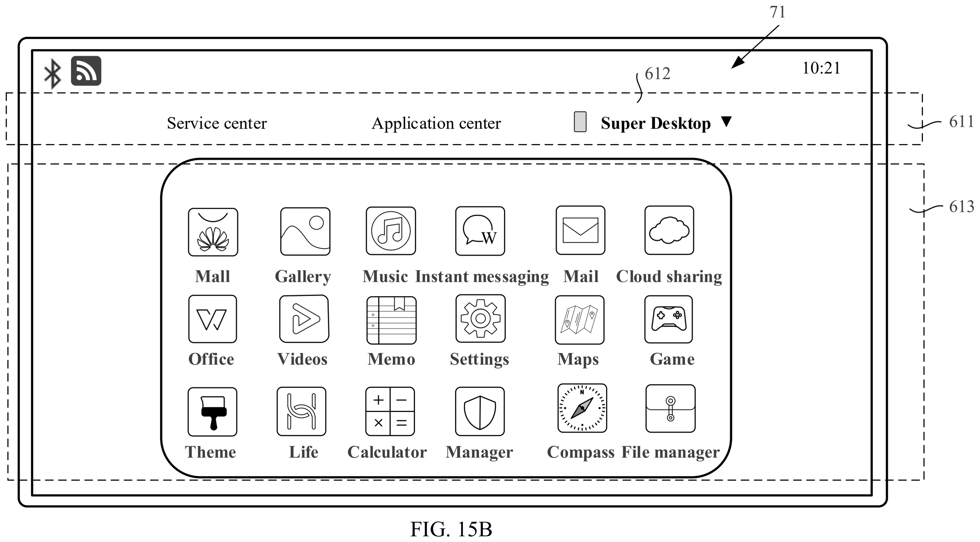

As shown in FIG. 15A and FIG. 15B, the in-vehicle device detects an operation (for example, a tapping operation) performed by the user on the device option 614 for the terminal device 200, and the in-vehicle device obtains, through a short-range communication connection, application data transmitted by the terminal device 200, and displays, in the display area 613 based on the application data, a desktop application of the terminal device 200, namely, Super Desktop. In this way, the in-vehicle device and the terminal device 200 that are not of a same account may also collaborate in implementing a short-range-based distributed service. A single sharing operation may be performed between devices of different accounts, to implement long-term and efficient experience of Super Desktop.

In some embodiments, when detecting an operation (for example, tapping) performed by the user on the device option 614 for the terminal device 200, the in-vehicle device sends request information to the terminal device 200, and the terminal device 200 displays a confirmation box 621 based on the request information. The confirmation box 621 includes prompt information 622, a cancel control 623, and an allow control 624. The prompt information 622 is used to prompt the user whether to allow the in-vehicle device to use Super Desktop, the cancel control 623 is used to reject the in-vehicle device to use Super Desktop, and the allow control 624 is used to allow the in-vehicle device to use Super Desktop. In response to an operation of tapping the allow control 624 by the user, the terminal device 200 sends confirmation information to the in-vehicle device. The in-vehicle device displays Super Desktop of the terminal device 200 in the display area 613 based on the confirmation information.

### Distributed service: audio casting

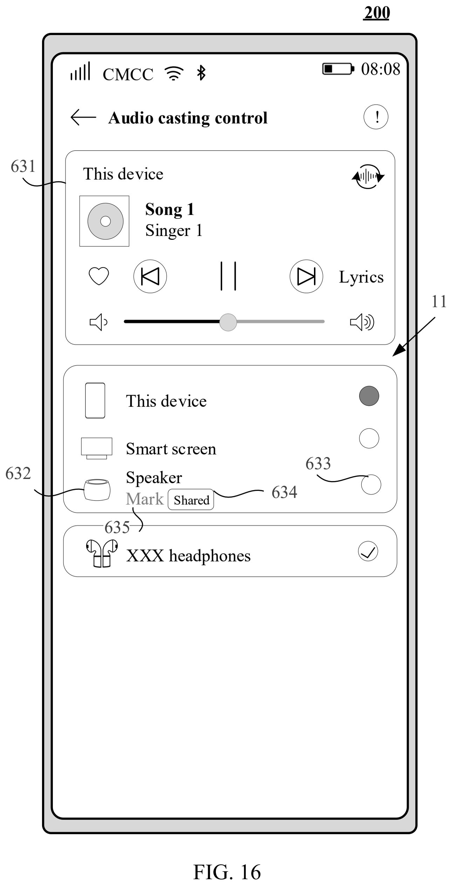

For example, the shared device 1 is a "speaker". FIG. 16 shows a related user interface for audio casting.

Refer to steps S41 to S48. After the terminal device 100 shares the speaker bound to the account 1 with the account 2, when the terminal device 200 that the account 2 has logged into approaches the speaker, the terminal device 200 may establish a short-range communication connection to the speaker, to complete ad hoc networking.

In some embodiments, an entrance for audio casting control is set in "System settings" of the terminal device 200. Through the entrance, the terminal device 200 detects a nearby trusted device, and displays an audio casting control interface 81 shown in FIG. 16. The audio casting control interface 81 includes a playing control center widget 631, and icons and select controls for one or more detected trusted devices, for example, an icon 632 for the "speaker" and a select control 633. The playing control center widget 631 is used to control audio being played. The user may select one device from the one or more trusted devices, and cast the audio being played by the playing control center widget 631 to the device for playing.

Similar to the foregoing related descriptions of Super Terminal, after detecting a trusted device, the terminal device 200 queries the authorization information management module for whether the device is a shared device. It may be learned through query that the "speaker" is a shared device shared by another user, and the terminal device 200 displays a shared identifier 634 on/around the icon 632 for the "speaker", to indicate that the "speaker" is a shared device shared by another user. Account information of an account to which the "speaker" belongs may be further displayed, for example, a user name 635, to indicate that the user sharing the "speaker" is Mark.

As shown in FIG. 16, the terminal device 200 detects an operation (for example, tapping) performed by the user on the select control 633 for the "speaker", the terminal device 200 sends audio data played by the playing control center widget 631 to the "speaker" through a short-range communication connection, and the speaker plays the audio based on the received audio data. In this way, the speaker and the terminal device 200 that are not of a same account may also collaborate in implementing a short-range-based distributed service. A single sharing operation may be performed between devices of different accounts, to implement long-term and efficient experience of audio casting, thereby effectively improving user experience.

### Distributed service: screen casting

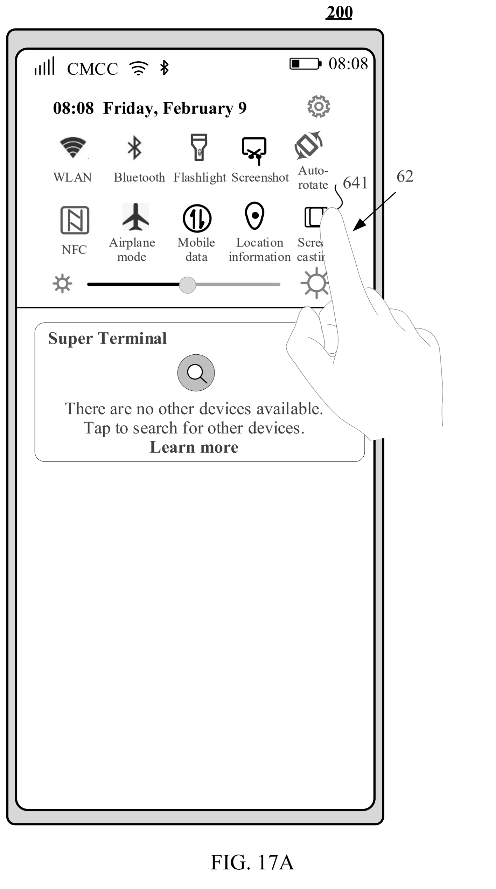

For example, the shared device 1 is a "smart screen". FIG. 17A to FIG. 17C show related user interfaces for screen casting.

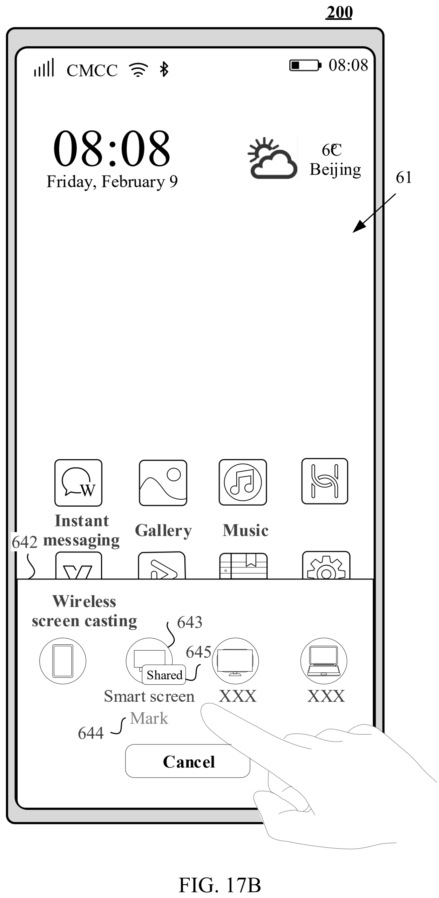

As shown in FIG. 17A and FIG. 17B, a control center interface 62 includes a screen-casting control 641. In response to an operation of tapping 641 by the user, the terminal device 200 scans nearby devices by using a short-range communication technology, and displays, in a screen-casting selection box 642, icons of one or more detected devices that support screen casting, for example, an icon 643 of the "smart screen". The user may select one device from the foregoing one or more devices for screen casting, to cast a displayed image of the terminal device 200 to the device for display.

Similar to the foregoing related descriptions of Super Terminal, after detecting a trusted device, the terminal device 200 queries the authorization information management module for whether the device is a shared device. It may be learned through query that the "smart screen" is a shared device shared by another user, and the terminal device 200 displays a shared identifier 645 on/around the icon 643 for the "smart screen", to indicate that the "smart screen" is a shared device shared by another user. Account information of an account to which the "smart screen" belongs may be further displayed, for example, a user name 644, to indicate that the user sharing the "smart screen" is Mark.

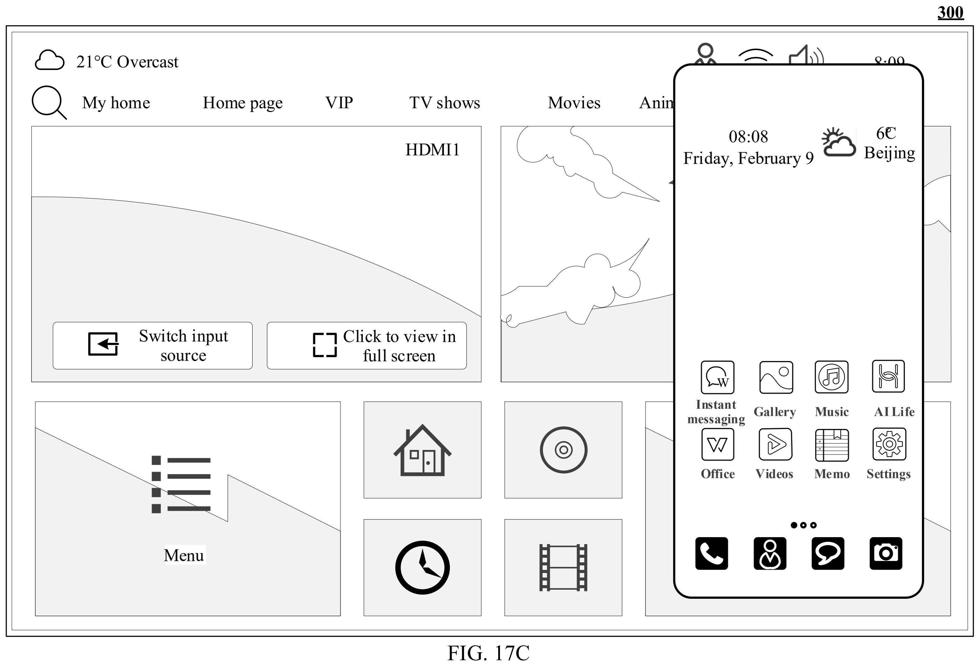

As shown in FIG. 17A and FIG. 17B, the terminal device 200 detects an operation (for example, tapping) performed by the user on the icon 643 of the "smart screen". After establishing a short-range communication connection to the smart screen, the terminal device 200 sends screen-casting data to the smart screen through the short-range communication connection. As shown in FIG. 17C, the smart screen displays the displayed image of the terminal device 200 based on the received screen-casting data. A manner of triggering screen casting is not specifically limited in this embodiment of this application. FIG. 17A to FIG. 17C are merely examples. In this way, the smart screen and the terminal device 200 that are not of a same account may also collaborate in implementing a short-range-based distributed service. A single sharing operation may be performed between devices of different accounts, to implement long-term and efficient experience of screen casting. However, in an existing solution, for screen casting between devices of different accounts, the user needs to perform manual verification, for example, enter a screen-casting PIN.

### Distributed Service: Wave Gesture Transfer

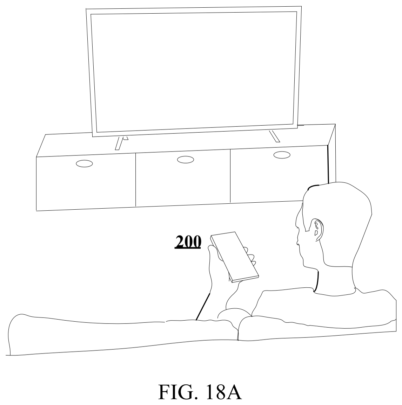

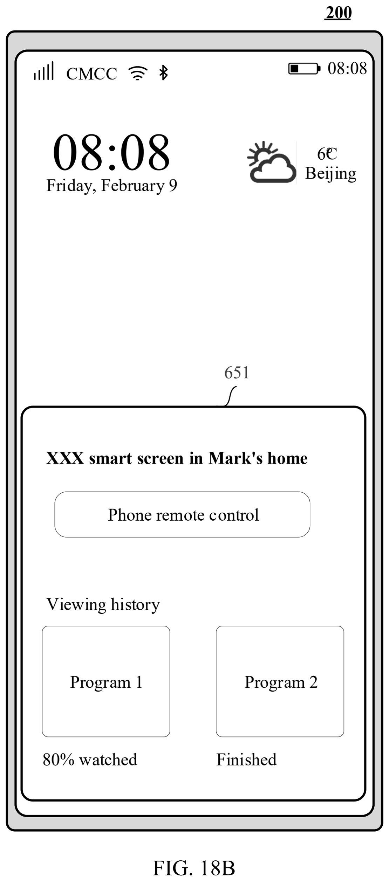

For example, the shared device 1 is a "smart screen". FIG. 18A and FIG. 18B show related user interfaces for "Wave Gesture Transfer".

In some embodiments, as shown in FIG. 18A, the user performs a preset gesture for a "Wave Gesture Transfer" function while holding the terminal device 200. After detecting the preset gesture, the terminal device 200 determines a device (for example, the smart screen) to which the preset gesture points, and the terminal device 200 establishes a short-range communication connection to the smart screen. The terminal device 200 obtains application data of a current application of the smart screen through the short-range communication connection. As shown in FIG. 18B, a service card for the current application, for example, a service card 651, is displayed based on the application data, to control the current application of the smart screen.

In this way, the smart screen and the terminal device 200 that are not of a same account may also collaborate in implementing a short-range-based distributed service, namely, Wave Gesture Transfer. In addition, when an existing "Wave Gesture Transfer" function is shared with a family member for use, there is usually a limitation on trusted duration. However, in the solution provided in this embodiment of this application, there is a trusted relationship between the smart screen and the terminal device 200, and there is no limitation on the trusted duration.

### Distributed service: auxiliary input

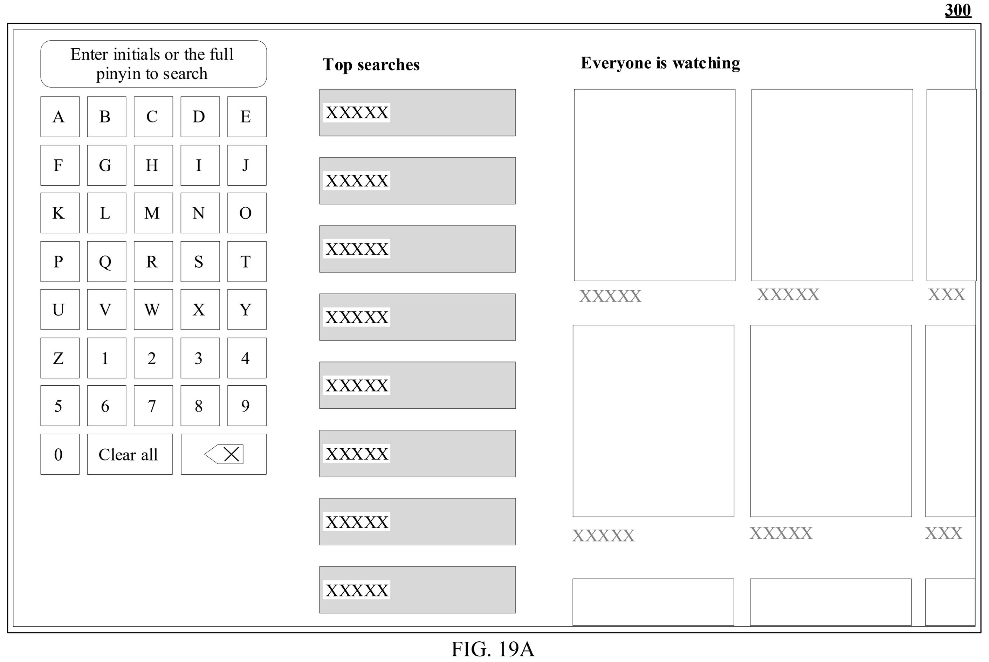

For example, the shared device 1 is a "smart screen". FIG. 19A to FIG. 19C show related user interfaces for auxiliary input.

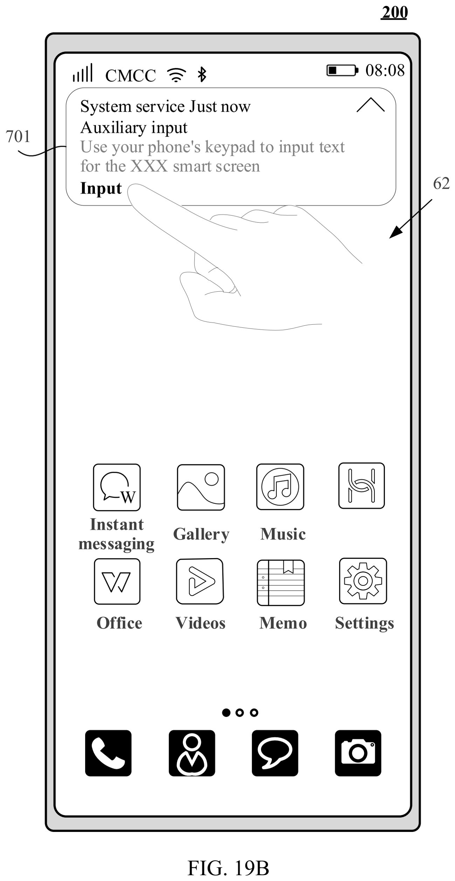

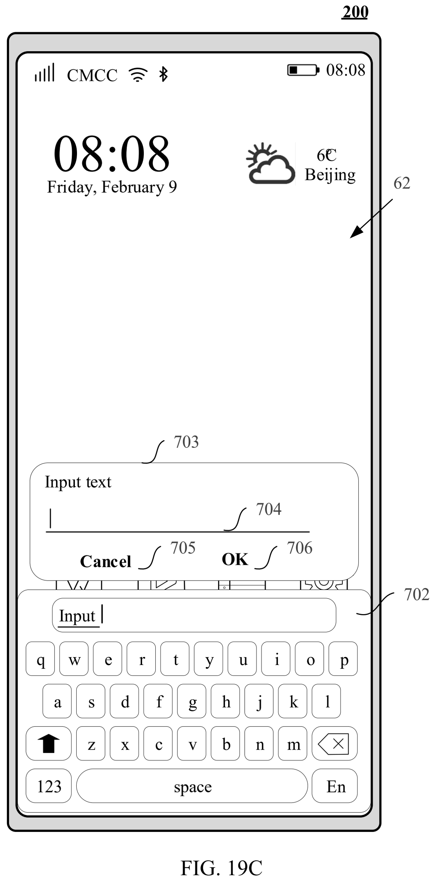

For example, FIG. 19A to FIG. 19C show related user interfaces for auxiliary input. As shown in FIG. 19A, when the smart screen detects that the user needs to input information, for example, detects an operation performed on an information input box 701, the smart screen may detect a nearby trusted device, for example, the terminal device 200, and send push information to the terminal device 200, to request the terminal device 200 to assist in inputting information. As shown in FIG. 19B, the terminal device 200 displays push information 701. As shown in FIG. 19B and FIG. 19C, in response to the user tapping the push information 701, the terminal device 200 may display a keyboard 702 and an information input box 703. The information input box 702 includes an information input field 704, a cancel control 705, and an OK control 706. The terminal device 200 may obtain information generated by the user through the keyboard 702, and display the information in the information input field 704. In response to tapping the cancel control 705 by the user, the terminal device 100 stops displaying the keyboard 702 and the information input box 703. In response to tapping the OK control 706 by the user, the terminal device 200 sends the information in the information input field 703 to the "smart screen" through a short-range communication connection.

In this way, the smart screen and the terminal device 200 that are not of a same account may also collaborate in implementing a short-range-based distributed service. A single sharing operation may be performed between devices of different accounts, to implement long-term and efficient experience of auxiliary input, thereby effectively improving user experience.

With reference to the foregoing embodiments, this application discloses a multi-device collaboration method and a related apparatus, applied to a multi-device collaboration system. The system includes a first terminal, a second terminal, and a server, a first account has logged into the first terminal, a second account has logged into the second terminal, the first account and the second account are different accounts, the system further includes at least one electronic device bound to the first account, and the at least one electronic device includes a first electronic device. The method includes steps S101 to S107.

In this embodiment of this application, the first terminal may be the terminal device 100, the second terminal may be the terminal device 200, the server may be the server 300, the first account may be the account 1, the second account may be the account 2, and the first electronic device may be a device shared by the terminal device 100 with the terminal device 200, for example, the family device 1 or the shared device 1.

S101: The first terminal detects a first operation, where the first operation is used to share the first electronic device with the second account.

In some embodiments, the first account creates a first group, a family member in the first group includes the second account, and the first operation is used to add the first electronic device as an electronic device in the first group. For example, refer to the foregoing interface embodiment 1.

In some embodiments, the first account creates a first group, an electronic device in the first group includes the first electronic device, and the first operation is used to add the second account as a family member in the first group.

In this embodiment of this application, the first group may be the foregoing family group 1.

S102: The first terminal sends device sharing information to the server in response to the first operation, where the device sharing information includes information about the second account and information about the first electronic device.

The information about the second account may be authorization information of the second account, and the information about the first electronic device may be authorization information of the first electronic device.

S103: The server sends the information about the second account to the first electronic device.

S104: The server sends the information about the first electronic device to the second terminal.

S105: The second terminal establishes a short-range communication connection to the first electronic device based on the information about the second account and the information about the first electronic device.

S106: The second terminal detects a second operation, where the second operation is used to trigger a first distributed service of the second terminal.

S107: The second terminal displays an icon of one or more trusted devices in response to the second operation, where the one or more trusted devices include the first electronic device.

In some embodiments, the method further includes: displaying a first identifier along with an icon of the first electronic device, where the first identifier indicates that the first electronic device is a device shared by another account with the second account. The first identifier may be the foregoing shared identifier.

In some embodiments, the method further includes: The first terminal detects the second operation, where the second operation is used to trigger the first distributed service. The first terminal displays an icon of one or more trusted devices in response to the second operation, where the one or more trusted devices include a second electronic device, and the second electronic device is a device shared by another account with the first account. In this embodiment of this application, the second terminal may also share, with the account 1, a device bound to the account 2.

In some embodiments, the method further includes: The second terminal sets a second filter based on the information about the first electronic device, where the second filter is used to filter a message from the first electronic device. That the second terminal establishes the short-range communication connection to the first electronic device includes: The second terminal establishes the short-range communication connection to the first electronic device based on a filtered message of the first electronic device. In this embodiment of this application, the second filter may be the foregoing filter 2.

In some embodiments, a second identifier is further displayed along with the icon of the first electronic device, and the second identifier indicates the first account that shares the first electronic device. Optionally, the second identifier may be a user name corresponding to the first account.

In some embodiments, the method further includes: The second terminal detects a third operation performed on the icon of the first electronic device. The second terminal collaborates, in response to the third operation, with the first electronic device in executing the first distributed service.

For example, refer to related descriptions in FIG. 14A to FIG. 14F. The icon of the first electronic device may be the icon 602 of the in-vehicle device. For example, refer to related descriptions in FIG. 16. The icon of the first electronic device may be the icon 632 of the speaker, and the third operation may include an operation performed on the select control 633 corresponding to the icon 632. For example, refer to related descriptions in FIG. 15A. The icon of the first electronic device may be the icon 614 of the terminal device 200. For example, refer to related descriptions in FIG. 17B. The icon of the first electronic device may be the icon 643 of the smart screen.

In some embodiments, that the second terminal collaborates with the first electronic device in executing the first distributed service includes: The second terminal transmits service data of the first distributed service with the first electronic device through the short-range communication connection. In some embodiments, that the second terminal collaborates with the first electronic device in executing the first distributed service includes: The second terminal sends screen-casting data to the first electronic device through the short-range communication connection. The first electronic device displays a cast screen based on the screen-casting data. Alternatively, the second terminal sends application data to the first electronic device through the short-range communication connection. The first electronic device displays a desktop application of the second terminal based on the application data. Alternatively, the second terminal sends audio data to the first electronic device through the short-range communication connection. The first electronic device plays audio based on the audio data.

In some embodiments, that the second terminal collaborates with the first electronic device in executing the first distributed service includes: The first electronic device displays a first input box. The first electronic device sends a first request to the second terminal through the short-range communication connection, where the first request is used to request the second terminal to assist in inputting information. The second terminal displays a second input box. The second terminal obtains first information entered by a user in the second input box. The second terminal sends the first information to the first electronic device through the short-range communication connection. The first electronic device displays the first information in the first input box. For example, refer to related descriptions of auxiliary information input in FIG. 19A to FIG. 19C.

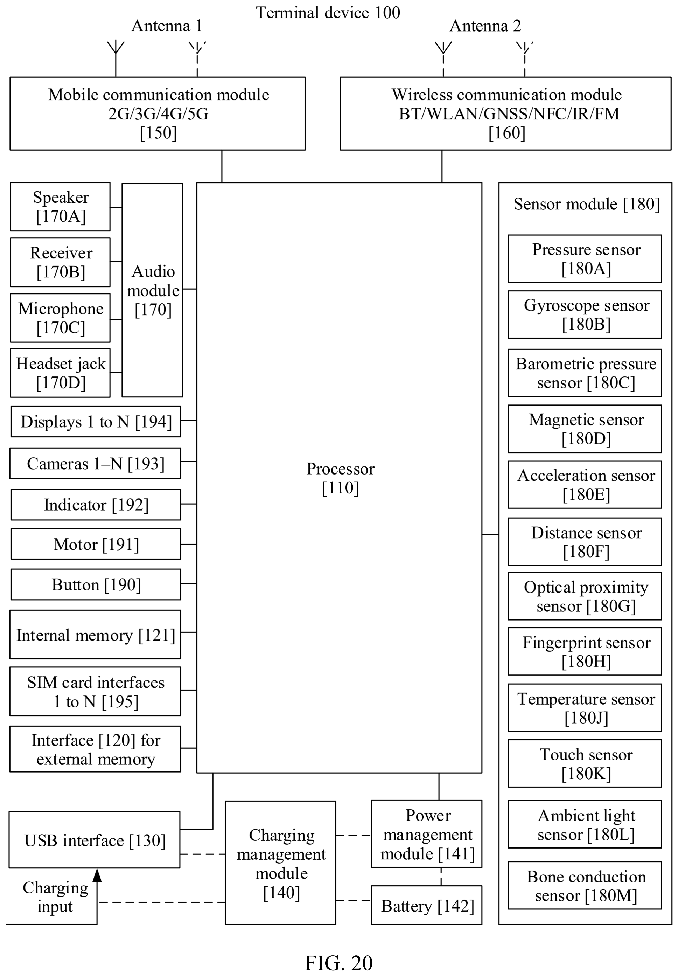

The following describes a structure of the terminal device 100 according to an embodiment of this application. FIG. 20 is a diagram of a structure of the terminal device 100.

The terminal device 200 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal device 200. In some other embodiments of this application, the terminal device 200 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal device 200.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the terminal device 200. The processor 110 communicates with the display 194 through the DSI interface, to implement a display function of the terminal device 200.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the terminal device 200; or may be configured to transmit data between the terminal device 200 and a peripheral device; or may be configured to connect to a headset for playing audio through the headset. The interface may be further configured to connect to another electronic device such as an AR device.

It may be understood that an interface connection relationship between the modules shown in this embodiment of the present invention is merely an example for description, and does not constitute a limitation on the structure of the terminal device 200. In some other embodiments of this application, the terminal device 200 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from the wired charger through the USB interface 130. In some wireless charging embodiments, the charging management module 140 may receive wireless charging input through a wireless charging coil of the terminal device 200. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be configured to monitor parameters such as a battery capacity, a battery cycle count, and a battery state of health (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal device 200 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 200 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the terminal device 200 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the terminal device 200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the terminal device 200 are coupled, and the antenna 2 and the wireless communication module 160 in the terminal device 200 are coupled, so that the terminal device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The terminal device 200 implements a display function by using the GPU, the display 194, the application processor, and the like. The GPU is a microprocessor for image processing, and is connected to the display 194 and the application processor. The GPU is configured to perform mathematical and geometric computation for graphic rendering. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal device 200 may include one or N displays 194, where N is a positive integer greater than 1.

The terminal device 200 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal device 200 may include one or N cameras 193, where N is a positive integer greater than 1.

The digital signal processor is configured to process a digital signal, and may process another digital signal in addition to the digital image signal. For example, when the terminal device 200 selects a frequency, the digital signal processor is configured to perform Fourier Transform on frequency energy.

The video codec is configured to compress or decompress a digital video. The terminal device 200 may support one or more video codecs. Therefore, the terminal device 200 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, and quickly processes input information with reference to a structure of a biological neural network, for example, a transfer mode between human brain neurons, and may further continuously perform self learning. Applications such as intelligent cognition of the terminal device 200, for example, image recognition, facial recognition, speech recognition, and text understanding, may be implemented via the NPU.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM generally referred to as DDR5 SDRAM), or the like. The non-volatile memory may include a magnetic disk storage device and a flash memory (flash memory).

The flash memory may be classified into a NOR flash, a NAND flash, a 3D NAND flash, and the like according to an operating principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia card, eMMC), and the like based on storage specifications.

The random access memory may be directly read and written by the processor 110. The random access memory may be configured to store an executable program (for example, machine instructions) in an operating system or another running program, and may be further configured to store data of a user, data of an application, and the like.

The non-volatile memory may also store an executable program, data of a user, data of an application, and the like, which may be loaded into the random access memory in advance for directly reading and writing by the processor 110.

The interface 120 for external memory may be configured to connect to an external non-volatile memory, to expand a storage capability of the terminal device 200. The external non-volatile memory communicates with the processor 110 through the interface 120 for external memory, to implement a data storage function. For example, files such as music and videos are stored in the external non-volatile memory.

The terminal device 200 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal device 200 may be configured to listen to music or answer a call in a hands-free mode via the speaker 170A.

The receiver 170B, also referred to as an "earpiece", is configured to convert an audio electrical signal into a sound signal. When a call is answered or a voice message is listened to by using the terminal device 200, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194.

The gyroscope sensor 180B may be configured to determine a motion posture of the terminal device 200. In some embodiments, angular velocities of the terminal device 200 around three axes (namely, x, y, and z axes) may be determined by using the gyroscope sensor 180B.

The barometric pressure sensor 180C is configured to measure barometric pressure. In some embodiments, the terminal device 200 calculates an altitude by using a barometric pressure value measured by the barometric pressure sensor 180C, to assist in positioning and navigation.

The magnetic sensor 180D includes a Hall sensor.

The acceleration sensor 180E may detect magnitude of accelerations of the terminal device 200 in various directions (usually on three axes).

The distance sensor 180F is configured to measure a distance. The terminal device 200 may measure a distance by using infrared light or a laser. In some embodiments, in a photographing scene, the terminal device 200 may measure a distance by using the distance sensor 180F, to implement quick focusing.

The optical proximity sensor 180G may include, for example, a light emitting diode (LED) and an optical detector, for example, a photodiode.

The ambient light sensor 180L is configured to sense ambient light brightness. The terminal device 200 may adaptively adjust brightness of the display 194 based on the sensed ambient light brightness.

The fingerprint sensor 180H is configured to collect a fingerprint. The terminal device 200 may implement fingerprint-based unlocking, unlocking for application access, fingerprint-based photographing, fingerprint-based call answering, and the like by using a feature of the collected fingerprint.

The temperature sensor 180J is configured to detect a temperature. In some embodiments, the terminal device 200 executes a temperature processing policy based on the temperature detected by the temperature sensor 180J.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the terminal device 200 at a location different from that of the display 194.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch button.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or pulled out of the SIM card interface 195, to implement contact with or separation from the terminal device 200.

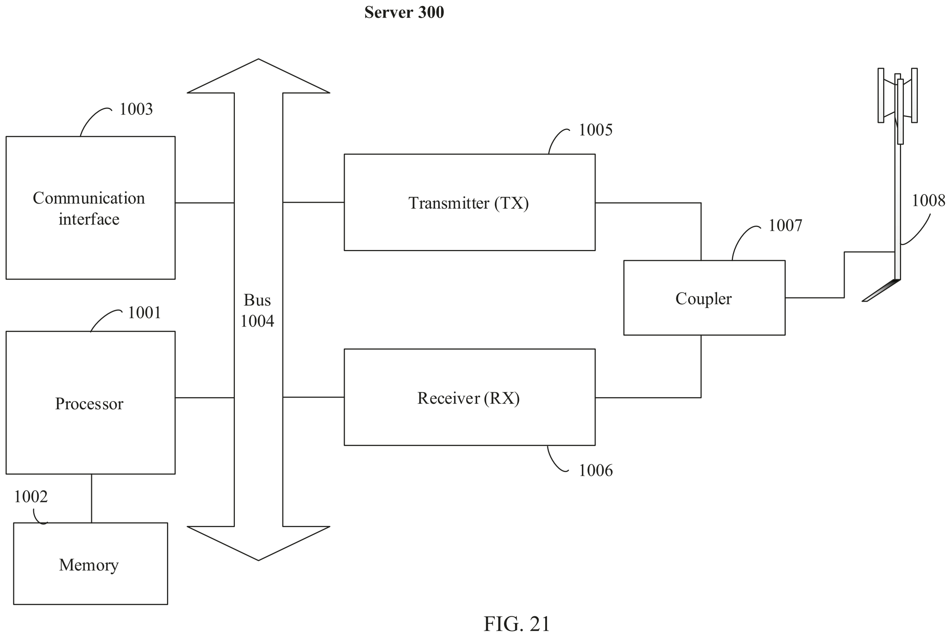

The following describes a structure of the server 300 provided in embodiments of this application. FIG. 21 shows an example of a structure of the server 300 according to an embodiment of this application.

As shown in FIG. 21, the server 300 may include one or more processors 1001, a memory 1002, a communication interface 1003, a transmitter 1005, a receiver 1006, a coupler 1007, and an antenna 1008. These components may be connected through a bus 1004 or in another manner. In FIG. 21, for example, the components are connected through the bus. Specifically:

The communication interface 1003 may be used by the server 300 to communicate with another communication device, for example, the terminal device 100. Specifically, the communication interface 1003 may be a 3G communication interface, a 4G communication interface, a 5G communication interface, a future new radio communication interface, or the like. In addition to a wireless communication interface, a wired communication interface 1003, for example, a local access network (local access network, LAN) interface, may be further configured for the server 300. The transmitter 1005 may be configured to perform transmission processing on a signal output by the processor 1001. The receiver 1006 may be configured to perform receiving processing on a mobile communication signal received by the antenna 1008.

In some embodiments of this application, the transmitter 1005 and the receiver 1006 may be considered as one wireless modem. In the server 300, there may be one or more transmitters 1005 and receivers 1006. The antenna 1008 may be configured to convert electromagnetic energy in a transmission line into an electromagnetic wave in free space, or convert an electromagnetic wave in free space into electromagnetic energy in a transmission line. The coupler 1007 is configured to: divide a mobile communication signal received through the antenna 1008 into a plurality of signals, and allocate the plurality of signals to a plurality of receivers 1006.

The memory 1002 is coupled to the processor 1001, and is configured to store various software programs and/or a plurality of groups of instructions. Specifically, the memory 1002 may include a high-speed random access memory, and may further include a non-volatile memory, for example, one or more disk storage devices, a flash memory device, or another non-volatile solid-state storage device. The memory 1002 may store a network communication program, and the network communication program may be configured to communicate with one or more additional devices, one or more terminal devices, and one or more network devices.

In some embodiments of this application, the memory 1002 may be configured to store a program for implementing, on the server 300 side, the application distribution method provided in one or more embodiments of this application. For implementations of the application distribution method provided in the one or more embodiments of this application, refer to the foregoing embodiments.

The processor 1001 may be configured to read and execute computer-readable instructions. Specifically, the processor 1001 may be configured to: invoke a program stored in the memory 1002, for example, the program for implementing, on the server 300 side, the application distribution method provided in the one or more embodiments of this application, and execute instructions included in the program.

It should be noted that the server 300 shown in FIG. 21 is merely an implementation in embodiments of this application. During actual application, the server 300 may alternatively include more or fewer components. This is not limited herein.

For more details about functions and working principles of the server 300, refer to related content in the foregoing embodiments. Details are not described herein again.

The implementations of this application may be randomly combined to achieve different technical effects.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on the computer, the procedure or functions according to this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made based on the disclosure of the present invention shall be included in the protection scope of the present invention.

## Claims

1. A multi-device collaboration method, applied to a multi-device collaboration system, wherein the system comprises a first terminal, a second terminal, and a server, a first account has logged into the first terminal, a second account has logged into the second terminal, the first account and the second account are different accounts, the system further comprises at least one electronic device bound to the first account, and the at least one electronic device comprises a first electronic device; and the method comprises:
detecting, by the first terminal, a first operation, wherein the first operation is used to share the first electronic device with the second account;
sending, by the first terminal in response to the first operation, device sharing information to the server, wherein the device sharing information comprises information about the second account and information about the first electronic device;
sending, by the server, the information about the second account to the first electronic device;
sending, by the server, the information about the first electronic device to the second terminal;
establishing, by the second terminal, a short-range communication connection to the first electronic device based on the information about the second account and the information about the first electronic device;
detecting, by the second terminal, a second operation, wherein the second operation is used to trigger a first distributed service of the second terminal; and
displaying, by the second terminal in response to the second operation, an icon of one or more trusted devices, wherein the one or more trusted devices comprise the first electronic device.

2. The method according to claim 1, further comprising:
displaying a first identifier along with an icon of the first electronic device, wherein the first identifier indicates that the first electronic device is a device shared by another account with the second account.

3. The method according to claim 1 or 2, further comprising:
detecting, by the first terminal, the second operation, wherein the second operation is used to trigger the first distributed service; and
displaying, by the first terminal in response to the second operation, the icon of the one or more trusted devices, wherein the one or more trusted devices comprise a second electronic device, and the second electronic device is a device shared by another account with the first account.

4. The method according to claim 1 or 2, further comprising: binding the second account to at least one electronic device, wherein the at least one electronic device comprises a second electronic device, and the method further comprises:
sending, by the second terminal in response to the first operation, device sharing information to the server after the second terminal receives the information about the first electronic device, wherein the device sharing information is used by the first terminal to establish a short-range communication connection to the second electronic device.

5. The method according to any one of claims 1 to 4, further comprising:
setting, by the second terminal, a second filter based on the information about the first electronic device, wherein the second filter is used to filter a message from the first electronic device; and
establishing, by the second terminal, the short-range communication connection to the first electronic device comprises:
establishing, by the second terminal, the short-range communication connection to the first electronic device based on a filtered message of the first electronic device.

6. The method according to any one of claims 1 to 5, wherein
a second identifier is further displayed along with the icon of the first electronic device, and the second identifier indicates the first account that shares the first electronic device.

7. The method according to any one of claims 1 to 6, further comprising:
detecting, by the second terminal, a third operation performed on the icon of the first electronic device; and
collaborating, by the second terminal in response to the third operation, with the first electronic device in executing the first distributed service.

8. The method according to any one of claims 1 to 7, wherein
the first account creates a first group, a family member in the first group comprises the second account, and the first operation is used to add the first electronic device as an electronic device in the first group.

9. The method according to any one of claims 1 to 7, wherein
the first account creates a first group, an electronic device in the first group comprises the first electronic device, and the first operation is used to add the second account as a family member in the first group.

10. The method according to any one of claims 1 to 6, wherein the first operation is further used to add a device bound to the second account as a family member in the first group.

11. The method according to any one of claims 1 to 10, wherein collaborating, by the second terminal, with the first electronic device in executing the first distributed service comprises:
transmitting, by the second terminal, service data of the first distributed service with the first electronic device through the short-range communication connection.

12. The method according to any one of claims 1 to 10, wherein collaborating, by the second terminal, with the first electronic device in executing the first distributed service comprises:
sending, by the second terminal, screen-casting data to the first electronic device through the short-range communication connection; and
displaying, by the first electronic device, a cast screen based on the screen-casting data;
or
sending, by the second terminal, application data to the first electronic device through the short-range communication connection; and
displaying, by the first electronic device, a desktop application of the second terminal based on the application data;
or
sending, by the second terminal, audio data to the first electronic device through the short-range communication connection; and
playing, by the first electronic device, audio based on the audio data.

13. The method according to any one of claims 1 to 10, wherein collaborating, by the second terminal, with the first electronic device in executing the first distributed service comprises:
displaying, by the first electronic device, a first input box;
sending, by the first electronic device, a first request to the second terminal through the short-range communication connection, wherein the first request is used to request the second terminal to assist in inputting information;
displaying, by the second terminal, a second input box;
obtaining, by the second terminal, first information entered by a user in the second input box;
sending, by the second terminal, the first information to the first electronic device through the short-range communication connection; and
displaying, by the first electronic device, the first information in the first input box.

14. The method according to any one of claims 1 to 13, wherein the information about the second account comprises user identification UID of the second account; and the information about the first electronic device comprises a unique identifier UDID of the first electronic device and UID of the first account that shares the first electronic device.

15. A multi-device collaboration method, wherein a first account has logged into a first terminal, a second account has logged into a second terminal, the first account and the second account are different accounts, the first account is bound to at least one electronic device, and the at least one electronic device comprises a first electronic device; and the method comprises:
detecting, by the first terminal device, a first operation, wherein the first operation is used to share the first electronic device with the second account;
sending, by the first terminal device in response to the first operation, device sharing information to the server, wherein the device sharing information comprises information about the second account and information about the first electronic device;
sending, by the first terminal, the information about the second account to the first electronic device by using the server; and
sending, by the first terminal, the information about the first electronic device to the second terminal by using the server, wherein
the information about the second account and the information about the first electronic device are used by the second terminal to establish a short-range communication connection to the first electronic device.

16. The method according to claim 15, further comprising:
detecting, by the first terminal, a second operation, wherein the second operation is used to trigger a first distributed service; and
displaying, by the first terminal in response to the second operation, an icon of one or more trusted devices, wherein the one or more trusted devices comprise a second electronic device, and the second electronic device is a device shared by another account with the first account.

17. The method according to claim 15 or 16, further comprising:
displaying a first identifier along with an icon of the second electronic device, wherein the first identifier indicates that the second electronic device is a device shared by another account with the first account.

18. The method according to any one of claims 15 to 17, wherein
a second identifier is further displayed along with the icon of the second electronic device, and the second identifier indicates an account that shares the second electronic device.

19. The method according to any one of claims 15 to 18, further comprising:
detecting, by the first terminal, a fourth operation performed on the icon of the second electronic device; and
collaborating, by the first terminal in response to the fourth operation, with the second electronic device in executing the first distributed service.

20. The method according to any one of claims 15 to 19, wherein
the first account creates a first group, a family member in the first group comprises the second account, and the first operation is used to add the first electronic device as an electronic device in the first group.

21. The method according to any one of claims 15 to 19, wherein
the first account creates a first group, an electronic device in the first group comprises the first electronic device, and the first operation is used to add the second account as a family member in the first group.

22. The method according to any one of claims 15 to 19, wherein collaborating, by the first terminal, with the second electronic device in executing the first distributed service comprises:
transmitting, by the first terminal, service data of the first distributed service with the first electronic device through a short-range communication connection.

23. The method according to any one of claims 15 to 21, wherein collaborating, by the first terminal, with the second electronic device in executing the first distributed service comprises:
sending, by the first terminal, screen-casting data to the second electronic device through the short-range communication connection, wherein the screen-casting data is used by the second electronic device to display a cast screen;
or
sending, by the first terminal, application data to the second electronic device through the short-range communication connection, wherein the application data is used by the second electronic device to display a desktop application of the first terminal;
or
sending, by the first terminal, audio data to the second electronic device through the short-range communication connection, wherein the audio data is used by the second electronic device to play audio.

24. A multi-device collaboration method, wherein a first account has logged into the first terminal, a second account has logged into the second terminal, the first account and the second account are different accounts, the system further comprises at least one electronic device bound to the first account, and the at least one electronic device comprises a first electronic device; and the method comprises:
receiving, by the second terminal, information about the first electronic device that is sent by the server;
establishing, by the second terminal, a short-range communication connection to the first electronic device based on the information about the first electronic device;
detecting, by the second terminal, a second operation, wherein the second operation is used to trigger a first distributed service of the second terminal; and
displaying, by the second terminal in response to the second operation, an icon of one or more trusted devices, wherein the one or more trusted devices comprise the first electronic device.

25. The method according to claim 24, further comprising:
displaying a first identifier along with an icon of the first electronic device, wherein the first identifier indicates that the first electronic device is a device shared by another account with the second account.

26. The method according to claim 24 or 25, wherein a second identifier is further displayed along with the icon of the first electronic device, and the second identifier indicates the first account that shares the first electronic device.

27. The method according to any one of claims 24 to 26, further comprising:
setting, by the second terminal, a second filter based on the information about the first electronic device, wherein the second filter is used to filter a message from the first electronic device; and
establishing, by the second terminal, the short-range communication connection to the first electronic device comprises:
establishing, by the second terminal, the short-range communication connection to the first electronic device based on a filtered message of the first electronic device.

28. The method according to any one of claims 24 to 27, further comprising:
detecting, by the second terminal, a third operation performed on the icon of the first electronic device; and
collaborating, by the second terminal in response to the third operation, with the first electronic device in executing the first distributed service.

29. The method according to any one of claims 24 to 28, wherein
the first account creates a first group, a family member in the first group comprises the second account, and the first operation is used to add the first electronic device as an electronic device in the first group.

30. The method according to any one of claims 24 to 28, wherein
the first account creates a first group, an electronic device in the first group comprises the first electronic device, and the first operation is used to add the second account as a family member in the first group.

31. The method according to any one of claims 24 to 30, wherein collaborating, by the second terminal, with the first electronic device in executing the first distributed service comprises:
transmitting, by the second terminal, service data of the first distributed service with the first electronic device through the short-range communication connection.

32. The method according to any one of claims 24 to 30, wherein collaborating, by the second terminal, with the first electronic device in executing the first distributed service comprises:
sending, by the second terminal, screen-casting data to the first electronic device through the short-range communication connection, wherein the screen-casting data is used by the first electronic device to display a cast screen;
or
sending, by the second terminal, application data to the first electronic device through the short-range communication connection, wherein the application data is used by the first electronic device to display a desktop application of the second terminal;
or
sending, by the second terminal, audio data to the first electronic device through the short-range communication connection, wherein the audio data is used by the first electronic device to play audio.

33. The method according to any one of claims 24 to 30, wherein collaborating, by the second terminal, with the first electronic device in executing the first distributed service comprises:
receiving, by the second terminal through the short-range communication connection, a first request sent by the first electronic device, wherein the first request is used to request the second terminal to assist in inputting information;
displaying, by the second terminal, a second input box;
obtaining, by the second terminal, first information entered by a user in the second input box; and
sending, by the second terminal, the first information to the first electronic device through the short-range communication connection, wherein the first information is used by the first electronic device to be displayed in the first input box.

34. An electronic device, comprising a memory and a processor, wherein the memory and the processor are electrically coupled, the memory is configured to store program instructions, and the processor is configured to invoke all or some of the program instructions stored in the memory, to enable the electronic device to perform the method according to any one of claims 15 to 23 or claims 24 to 33.

35. A computer storage medium, comprising computer instructions, wherein when the computer instructions are run on an electronic device, the electronic device is enabled to perform the method according to any one of claims 15 to 23 or claims 24 to 33.
